(19) Europäisches Patentamt / European Patent Office / Office européen des brevets

(11) **EP 4 586 509 A1**

(12) **EUROPEAN PATENT APPLICATION**
published in accordance with Art. 153(4) EPC

(43) Date of publication:
**16.07.2025 Bulletin 2025/29**

(21) Application number: **23896815.0**

(22) Date of filing: **29.11.2023**

(51) International Patent Classification (IPC):
**H04B 1/7163** (2011.01)

(52) Cooperative Patent Classification (CPC):
**H04B 1/7163; H04L 1/00**

(86) International application number:
**PCT/CN2023/134947**

(87) International publication number:
**WO 2024/114671 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 29.11.2022  CN 202211510684
05.12.2022  CN 202211550893
16.01.2023  CN 202310093052

(71) Applicant: **Huawei Technologies Co., Ltd.**
**Shenzhen, Guangdong 518129 (CN)**

(72) Inventors:
• **QIAN, Bin**
**Shenzhen, Guangdong 518129 (CN)**
• **LIU, Chenchen**
**Shenzhen, Guangdong 518129 (CN)**
• **ZHOU, Zhengchun**
**Chengdu, Sichuan 611756 (CN)**
• **KEREN, Rani**
**Shenzhen, Guangdong 518129 (CN)**
• **HUANG, Lei**
**Shenzhen, Guangdong 518129 (CN)**
• **YANG, Xun**
**Shenzhen, Guangdong 518129 (CN)**
• **YANG, Yang**
**Chengdu, Sichuan 611756 (CN)**

(74) Representative: **Huawei European IPR**
**Huawei Technologies Duesseldorf GmbH**
**Riesstraße 25**
**80992 München (DE)**

(54) **PPDU TRANSMISSION METHOD AND APPARATUS**

(57) This application relates to a PPDU transmission method and an apparatus. The method includes: sending a PPDU, where a PHR field of the PPDU includes two parts, one part indicates a data rate of the other part, and a length of the one part is less than 4 bits. According to embodiments of this application, demodulation performance of the PHR field can be improved, and transmission duration can be reduced. This application is applied to a UWB-based WPAN system, a sensing system, and the like, including 802.15 series protocols, for example, the 802.15.4a protocol, the 802.15.4z protocol, or the 802.15.4ab protocol. This application is further applied to a wireless local area network system that can support 802.11 series protocols such as a next-generation Wi-Fi protocol of 802.11ax like 802.11be, Wi-Fi 7, or EHT, and a next generation of 802.1 The like Wi-Fi 8.

FIG. 4

EP 4 586 509 A1

## Description

This application claims priorities to Chinese Patent Application No. 202211510684.0, filed with China National Intellectual Property Administration on November 29, 2022, and entitled "PPDU TRANSMISSION METHOD AND APPARATUS", to Chinese Patent Application No. 202211550893.8, filed with China National Intellectual Property Administration on December 5, 2022, and entitled "PPDU TRANSMISSION METHOD AND APPARATUS", and to Chinese Patent Application No. 202310093052.7, filed with China National Intellectual Property Administration on January 16, 2023, and entitled "PPDU TRANSMISSION METHOD AND APPARATUS", all of which are incorporated herein by reference in their entireties.

## TECHNICAL FIELD

This application relates to the field of communication technologies, and in particular, to a physical layer protocol data unit (physical layer protocol data unit, PPDU) transmission method and an apparatus.

## BACKGROUND

As an ultra-wideband (ultra-wideband, UWB) technology is applied to the civil field, ultra-wideband (UWB) wireless communication becomes one of physical layer technologies of a short-range and high-speed wireless network. The ultra-wideband (UWB) technology is a wireless carrier communication technology in which a nanosecond-level non-sinusoidal wave narrow pulse can be used for data transmission. Therefore, the ultra-wideband occupies a wide spectrum range. Due to a narrow pulse and low radiation spectrum density of the UWB, the UWB has advantages such as a strong multipath resolution capability, low power consumption, and high confidentiality.

The Institute of Electrical and Electronics Engineers (institute of electrical and electronics engineers, IEEE) has incorporated the UWB technology into IEEE 802 series wireless standards, has released the high-speed wireless personal area network (wireless personal area network, WPAN) standard IEEE 802.15.4a based on the UWB technology and the evolved release IEEE 802.15.4z of IEEE 802.15.4a, and is discussing a next-generation UWB wireless personal area network (WPAN) standard 802.15.4ab. A physical layer protocol data unit (physical layer protocol data unit, PPDU) in a conventional WPAN standard includes at least a physical layer header (physical layer header, PHR) field and a physical layer (physical layer, PHY) payload (PHY payload) field, and the PHR field indicates some parameters that are necessary for demodulating the PHY payload field. Therefore, to correctly demodulate data in the PHY payload field, it needs to be ensured that the PHR field is correctly demodulated. Generally, data transmitted at a lower data rate (data rate) is more reliable, that is, the data is more easily to be correctly demodulated. Therefore, the PHR field is usually transmitted at a lower data rate.

Currently, how to design a PHR field to improve data transmission efficiency needs to be explored.

## SUMMARY

Embodiments of this application provide a PPDU transmission method and an apparatus, to not only improve demodulation performance of a PHR field, thereby improving data transmission reliability, but also reduce transmission duration, thereby improving data transmission efficiency.

The following describes this application from different aspects. It should be understood that, for the following implementations and beneficial effects of different aspects, refer to each other.

According to a first aspect, this application provides a PPDU transmission method. The method may be applied to a UWB. The method includes: A communication apparatus generates and sends a PPDU, where the PPDU includes a physical layer header (physical layer header, PHR) field and a physical layer (physical layer, PHY) payload. (PHY payload) field. The PHR field includes first PHR information and second PHR information, and the first PHR information indicates a data rate of the second PHR information. A length of the first PHR information is less than n bits, and n is a minimum quantity of bits that indicate a data rate of the PHY payload field and whether the PHY payload field is encoded by using a first coding scheme.

For example, the first coding scheme may be any one of the following: a low-density parity-check code (low density parity code, LDPC), a convolutional code, a polar code, a turbo code, and the like. This is not limited in this application. For ease of description, the following uses an example in which the first coding scheme is LDPC for description.

Currently, data rates supported by the PHY payload field include 1.95 Mbps (megabits per second), 7.8 Mbps, 31.2 Mbps, 62.4 Mbps, and 124.8 Mbps. In this case, a minimum quantity of bits that indicate the data rate of the PHY payload field is 3, and a minimum quantity of bits that indicate whether the PHY payload field is encoded by using LDPC is 1. Therefore, n may be 4. Certainly, with evolution of the standard, a minimum quantity of bits that indicate the data rate of the PHY payload field and whether the PHY payload field is encoded by using LDPC may be more than four, or may be less than four. A value of n is not limited in embodiments of this application.

In this application, the PHR field is redesigned. A quantity of bits of the first PHR information in the PHR field is reduced, so that the first PHR information indicates the data rate of the second PHR information. In this way, even if convolutional coding is used for the first PHR information, because the quantity of bits of the first PHR information is small, an actual code rate is reduced after encoding, so that demodulation performance of the PHR field can be improved, thereby improving data transmission reliability, and transmission duration can be further reduced, thereby improving data transmission efficiency.

With reference to the first aspect, in a possible implementation, that the communication apparatus sends the PPDU includes: The communication apparatus sends a codeword obtained by encoding the first PHR information, where the codeword is obtained by performing one or more of the following operations on the first PHR information: adding an all-zero tail bit, performing convolutional coding, or repeating for one or more times. For example, the first PHR information may be repeated for several times to obtain a codeword; after the first PHR information is repeated for several times, an all-zero tail bit of a specific length is added to the first PHR information, and then convolutional coding is performed on the first PHR information to obtain a codeword; after an all-zero tail bit of a specific length is added to the first PHR information, convolutional coding is performed on the first PHR information to obtain a codeword; after an all-zero tail bit of a specific length is added to the first PHR information, convolutional coding is performed on the first PHR information to obtain a codeword, and the codeword is repeated for several times to obtain a codeword; or the like.

With reference to the first aspect, in a possible implementation, that the communication apparatus sends the PPDU includes: The communication apparatus sends a codeword obtained by encoding the first PHR information, where the codeword is determined based on a codeword that is in a codebook and that is mapped to a value of the first PHR information. Optionally, a Hamming distance between two codewords in the codebook is greater than or equal to an upper limit value of a theoretical minimum Hamming distance of the codebook, and when the Hamming distance between the two codewords in the codebook is equal to the upper limit value of the theoretical minimum Hamming distance of the codebook, the Hamming distance between the codewords is increased, so that a bit error rate can be reduced, and encoding performance can be improved. Certainly, a Hamming distance between two codewords in the codebook may alternatively be less than the upper limit value of the theoretical minimum Hamming distance of the codebook. This is not limited in this application. For example, the codeword may be the codeword that is in the codebook and that is mapped to the value of the first PHR information, or the codeword is obtained by repeating, for one or more times, the codeword that is in the codebook and that is mapped to the value of the first PHR information.

Optionally, one value of the first PHR information is mapped (mapping) to one codeword in the codebook. In this case, it is assumed that the length of the first PHR information is m bits, and the codebook includes at least $2^m$ codewords. For example, when the length of the first PHR information is m bits, a codeword in the codebook may be generated based on a Hadamard (Hadamard) matrix of an order $2^m$, where m is a positive integer.

Optionally, a length of a codeword in the codebook is an even quantity of bits. For example, the length of the codeword in the codebook is equal to 26 bits.

Optionally, the upper limit value of the theoretical minimum Hamming distance of the codebook satisfies:

$$d_{\min\_up} = \left\lfloor \frac{NL}{2(N-1)} \right\rfloor.$$

$d_{\min\_up}$ represents the upper limit value of the theoretical minimum Hamming distance of the codebook, N represents a quantity of codewords in the codebook, L represents a length of a codeword in the codebook, and the symbol $\lfloor \rfloor$ represents rounding down.

This application provides a new codebook, used to perform mapping and encoding on the first PHR information, so that not only performance of the first PHR information can be further improved, thereby improving data transmission reliability, but also transmission duration of the first PHR information can be reduced, thereby reducing interference to another wireless device or another wireless communication technology, and improving data transmission efficiency.

According to a second aspect, this application provides a PPDU transmission method. The method may be applied to a UWB. The method includes: A communication apparatus receives and parses a PPDU, where the PPDU includes a PHR field and a PHY payload field. The PHR field includes first PHR information and second PHR information, and the first PHR information indicates a data rate of the second PHR information. A length of the first PHR information is less than n bits, and n is a minimum quantity of bits that indicate a data rate of the PHY payload field and whether the PHY payload field is encoded by using a first coding scheme. For example, the first coding scheme may be any one of the following: LDPC, convolutional code, polar code, turbo code, and the like. This is not limited in this application.

With reference to the second aspect, in a possible implementation, that the communication apparatus receives the PPDU includes: The communication apparatus receives a codeword, where the codeword is obtained by performing one or more of the following operations on the first PHR information: adding an all-zero tail bit, performing convolutional coding, or repeating for one or more times. For example, the first PHR information may be repeated for several times to obtain a codeword; after the first PHR information is repeated for several times, an all-zero tail bit of a specific length is added to the first PHR information, and then convolutional coding is performed on the first PHR information to obtain a codeword; after an all-zero tail bit of a specific length is added to the first PHR information, convolutional coding is performed on the first PHR information to obtain a codeword; after an all-zero tail bit of a specific length is added to the first PHR information, convolutional coding is performed on the first PHR information to obtain a codeword, and the codeword is repeated for several times to obtain a codeword; or the like.

With reference to the second aspect, in a possible implementation, that the communication apparatus receives the PPDU includes: The communication apparatus receives a codeword, where the codeword is a codeword obtained by encoding the first PHR information in the PHR field of the PPDU, and the codeword is determined based on a codeword that is in a codebook and that is mapped to a value of the first PHR information. Optionally, a Hamming distance between two codewords in the codebook is greater than or equal to an upper limit value of a theoretical minimum Hamming distance of the codebook, and when the Hamming distance between the two codewords in the codebook is equal to the upper limit value of the theoretical minimum Hamming distance of the codebook, the Hamming distance between the codewords is increased, so that a bit error rate can be reduced, and encoding performance can be improved. Certainly, a Hamming distance between two codewords in the codebook may alternatively be less than the upper limit value of the theoretical minimum Hamming distance of the codebook. This is not limited in this application. For example, the codeword may be the codeword that is in the codebook and that is mapped to the value of the first PHR information, or the codeword is obtained by repeating, for one or more times, the codeword that is in the codebook and that is mapped to the value of the first PHR information.

Optionally, one value of the first PHR information is mapped (mapping) to one codeword in the codebook. In this case, it is assumed that the length of the first PHR information is m bits, and the codebook includes at least $2^m$ codewords. For example, when the length of the first PHR information is m bits, a codeword in the codebook may be generated based on a Hadamard matrix of an order $2^m$, where m is a positive integer.

Optionally, a length of a codeword in the codebook is an even quantity of bits. For example, the length of the codeword in the codebook may be equal to 26 bits.

Optionally, the upper limit value of the theoretical minimum Hamming distance of the codebook satisfies:

$$d_{\min\_up} = \left\lfloor \frac{NL}{2(N-1)} \right\rfloor$$

.

$d_{\min\_up}$ represents the upper limit value of the theoretical minimum Hamming distance of the codebook, N represents a quantity of codewords in the codebook, L represents a length of a codeword in the codebook, and the symbol $\lfloor \rfloor$ represents rounding down.

It may be understood that a Hamming distance (Hamming distance) is used in data transmission error control coding, and indicates a quantity of different characters at corresponding locations of two (same-length) character strings. d(x, y) represents a Hamming distance between two character strings x and y. An XOR operation is performed on the two character strings, and a quantity of 1s in results is counted. The counted quantity of 1s in the results is the Hamming distance.

With reference to the first aspect or the second aspect, in a possible implementation, the second PHR information indicates the data rate of the PHY payload field and whether the PHY payload field is encoded by using LDPC. For example, a length of the second PHR information is greater than or equal to n bits. For another example, some bits in the second PHR information may indicate the data rate of the PHY payload field and whether the PHY payload field is encoded by using LDPC, and other bits indicate other information. This is not limited herein.

With reference to the first aspect or the second aspect, in a possible implementation, the second PHR information and the first PHR information jointly indicate the data rate of the PHY payload field and whether the PHY payload field is encoded by using LDPC. In this application, a quantity of bits can be reduced through joint indication.

Optionally, when the second PHR information and the first PHR information are used for joint indication, a sum of the length of the first PHR information and a bit that is in the second PHR information and that is used for joint indication together with the first PHR information may be equal to n bits.

With reference to the first aspect or the second aspect, in a possible implementation, the second PHR information further indicates one or more of the following: a length of the PHY payload field, whether the PPDU is used to perform sensing measurement, or a cyclic redundancy check (cyclic redundancy check, CRC) code.

With reference to the first aspect or the second aspect, in a possible implementation, the first PHR information and 2 bits in the second PHR information jointly indicate the data rate of the PHY payload field and whether the PHY payload field is encoded by using LDPC, and the length of the first PHR information is 2 bits.

With reference to the first aspect or the second aspect, in a possible implementation, to correctly demodulate data in the PHY payload field, it needs to be ensured that the PHR field is correctly demodulated. However, a data rate is a factor that affects demodulation performance. Therefore, in some scenarios, the data rate of the second PHR information is less than or equal to the data rate of the PHY payload field.

Optionally, when the data rate of the second PHR information is equal to the data rate of the PHY payload field, the PHY payload field is not encoded by using LDPC.

According to a third aspect, an embodiment of this application provides a communication apparatus. The communication apparatus is configured to perform the method according to any one of the first aspect or the possible implementations of the first aspect. The communication apparatus includes a unit that performs the method according to any one of the first aspect or the possible implementations of the first aspect.

According to a fourth aspect, an embodiment of this application provides a communication apparatus. The communication apparatus is configured to perform the method according to any one of the second aspect or the possible implementations of the second aspect. The communication apparatus includes a unit that performs the method according to any one of the second aspect or the possible implementations of the second aspect.

In the third aspect or the fourth aspect, the communication apparatus may include a transceiver unit and a processing unit. For specific descriptions of the transceiver unit and the processing unit, refer to apparatus embodiments provided below. For beneficial effects of the third aspect and the fourth aspect, refer to related descriptions of the first aspect and the second aspect. Details are not described herein again.

According to a fifth aspect, this application provides a PPDU transmission method. The method may be applied to a UWB. The method includes: A communication apparatus generates a PPDU, where the PPDU includes a PHR field and a PHY payload field, and the PHR field includes first PHR information, and the communication apparatus sends a codeword obtained by encoding the first PHR information, where the codeword is determined based on a codeword that is in a codebook and that is mapped to a value of the first PHR information. Optionally, a Hamming distance between two codewords in the codebook is greater than or equal to an upper limit value of a theoretical minimum Hamming distance of the codebook, and when the Hamming distance between the two codewords in the codebook is equal to the upper limit value of the theoretical minimum Hamming distance of the codebook, the Hamming distance between the codewords is increased, so that a bit error rate can be reduced, and encoding performance can be improved. Certainly, a Hamming distance between two codewords in the codebook may alternatively be less than the upper limit value of the theoretical minimum Hamming distance of the codebook. This is not limited in this application. The first PHR information indicates a data rate of the PHY payload field and whether the PHY payload field is encoded by using a first coding scheme. Currently, the first PHR information includes 4 bits in total. For example, the first coding scheme may be any one of the following: LDPC, convolutional code, polar code, turbo code, and the like. This is not limited in this application. For example, the codeword obtained by encoding the first PHR information may be the codeword that is in the codebook and that is mapped to the value of the first PHR information, or the codeword obtained by encoding the first PHR information is obtained by repeating, for one or more times, the codeword that is in the codebook and that is mapped to the value of the first PHR information.

In this embodiment of this application, a new codebook is designed, and the codebook is used to perform mapping and encoding on the first PHR information, so that a requirement for demodulation performance can be met, and transmission duration of the PHR field (mainly the first PHR information) can be reduced, thereby better balancing the demodulation performance of the PHR field (mainly the first PHR information) and the transmission duration of the PHR field.

According to a sixth aspect, this application provides a PPDU transmission method. The method may be applied to a UWB, and the method includes: A communication apparatus receives a codeword, where the codeword is a codeword obtained by encoding first PHR information in a PHR field of a PPDU, and the codeword is determined based on a codeword that is in a codebook and that is mapped to a value of the first PHR information, and then the communication apparatus decodes the codeword, to obtain the first PHR information in the codeword. The PPDU includes the PHR field and a PHY payload field, and the first PHR information indicates a data rate of the PHY payload field and whether the PHY payload field is encoded by using LDPC. For example, the first coding scheme may be any one of the following: LDPC, convolutional code, polar code, turbo code, and the like. This is not limited in this application. For example, the codeword obtained by encoding the first PHR information may be a codeword that is in the codebook and that is mapped to the value of the first PHR information, or the codeword obtained by encoding the first PHR information is obtained by repeating, for one or more times, a codeword that is in the codebook and that is mapped to the value of the first PHR information.

Optionally, a Hamming distance between two codewords in the codebook is greater than or equal to an upper limit value of a theoretical minimum Hamming distance of the codebook, and when the Hamming distance between the two codewords in the codebook is equal to the upper limit value of the theoretical minimum Hamming distance of the codebook, the Hamming distance between the codewords is increased, so that a bit error rate can be reduced, and encoding performance can be improved. Certainly, a Hamming distance between two codewords in the codebook may alternatively be less than the upper limit value of the theoretical minimum Hamming distance of the codebook. This is not limited in this application.

With reference to the fifth aspect or the sixth aspect, in a possible implementation, the PHR field further includes second PHR information, where the second PHR information indicates a length of the PHY payload field, and optionally further indicates one or more of the following: whether the PPDU is used to perform sensing measurement or a CRC code.

With reference to the fifth aspect or the sixth aspect, in a possible implementation, one value of the first PHR information is mapped (mapping) to one codeword in the codebook. In this case, it is assumed that the length of the first PHR information is m bits, and the codebook includes at least $2^m$ codewords.

Optionally, when the length of the first PHR information is m bits, a codeword in the codebook may be generated based on a Hadamard matrix of an order $2^m$, where m is a positive integer.

With reference to the fifth aspect or the sixth aspect, in a possible implementation, a length of a codeword in the codebook is an even quantity of bits. For example, the length of the codeword in the codebook may meet one or more of the following conditions: The length is greater than or equal to 20 bits and less than 40 bits.

With reference to the fifth aspect or the sixth aspect, in a possible implementation, the upper limit value of the theoretical minimum Hamming distance of the codebook satisfies:

$$d_{\min\_up} = \left\lfloor \frac{NL}{2(N-1)} \right\rfloor .$$

$d_{\min\_up}$ represents the upper limit value of the theoretical minimum Hamming distance of the codebook, N represents a quantity of codewords in the codebook, L represents a length of a codeword in the codebook, and the symbol $\lfloor \_ \rfloor$ represents rounding down.

According to a seventh aspect, an embodiment of this application provides a communication apparatus. The communication apparatus is configured to perform the method according to any one of the fifth aspect or the possible implementations of the fifth aspect. The communication apparatus includes a unit that performs the method according to any one of the fifth aspect or the possible implementations of the fifth aspect.

According to an eighth aspect, an embodiment of this application provides a communication apparatus. The communication apparatus is configured to perform the method according to any one of the sixth aspect or the possible implementations of the sixth aspect. The communication apparatus includes a unit that performs the method according to any one of the sixth aspect or the possible implementations of the sixth aspect.

In the seventh aspect or the eighth aspect, the communication apparatus may include a transceiver unit and a processing unit. For specific descriptions of the transceiver unit and the processing unit, refer to apparatus embodiments provided below. For beneficial effects of the seventh aspect and the eighth aspect, refer to related descriptions of the fifth aspect and the sixth aspect. Details are not described herein.

According to a ninth aspect, this application provides a communication apparatus. The communication apparatus includes a processor, configured to perform the method according to the first aspect, the fifth aspect, or any possible implementation of any one of the first aspect and the fifth aspect. Alternatively, the processor is configured to execute a program stored in a memory, and when the program is executed, the method according to the first aspect, the fifth aspect, or any possible implementation of any one of the first aspect and the fifth aspect is performed.

With reference to the ninth aspect, in a possible implementation, the memory is located outside the communication apparatus.

With reference to the ninth aspect, in a possible implementation, the memory is located inside the communication apparatus.

In this application, the processor and the memory may alternatively be integrated into one component. In other words, the processor and the memory may alternatively be integrated together.

With reference to the ninth aspect, in a possible implementation, the communication apparatus further includes a transceiver, and the transceiver is configured to send a PPDU or a codeword.

According to a tenth aspect, this application provides a communication apparatus. The communication apparatus includes a processor, configured to perform the method according to the second aspect, the sixth aspect, or any possible implementation of any one of the second aspect and the sixth aspect. Alternatively, the processor is configured to execute a program stored in a memory, and when the program is executed, the method according to the second aspect, the sixth aspect, or any possible implementation of any one of the second aspect and the sixth aspect is performed.

With reference to the tenth aspect, in a possible implementation, the memory is located outside the communication apparatus.

With reference to the tenth aspect, in a possible implementation, the memory is located inside the communication apparatus.

In this application, the processor and the memory may alternatively be integrated into one component. In other words, the processor and the memory may alternatively be integrated together.

With reference to the tenth aspect, in a possible implementation, the communication apparatus further includes a transceiver, and the transceiver is configured to receive a PPDU or a codeword.

According to an eleventh aspect, this application provides a communication apparatus. The communication apparatus includes a logic circuit and an interface, and the logic circuit is coupled to the interface.

In a design, the logic circuit is configured to generate a PPDU, where the PPDU includes a PHR field and a PHY payload field, the PHR field includes first PHR information and second PHR information, and the first PHR information indicates a data rate of the second PHR information, a length of the first PHR information is less than n bits, and n is a minimum quantity of bits that indicate a data rate of the PHY payload field and whether the PHY payload field is encoded by using a first coding scheme; and the interface is configured to output the PPDU. For example, the first coding scheme may be any one of the following: LDPC, convolutional code, polar code, turbo code, and the like. This is not limited in this application.

In another design, the logic circuit is configured to generate a PPDU, where the PPDU includes a PHR field and a PHY payload field, the PHR field includes first PHR information, and the first PHR information indicates a data rate of the PHY payload field and whether the PHY payload field is encoded by using a first coding scheme; and the interface is configured to output a codeword obtained by encoding the first PHR information, where the codeword is determined based on a codeword that is in a codebook and that is mapped to a value of the first PHR information. For example, the first coding scheme may be any one of the following: LDPC, convolutional code, polar code, turbo code, and the like. This is not limited in this application.

According to a twelfth aspect, this application provides a communication apparatus. The communication apparatus includes a logic circuit and an interface, and the logic circuit is coupled to the interface.

In a design, the interface is configured to input a PPDU, where the PPDU includes a PHR field and a PHY payload field, the PHR field includes first PHR information and second PHR information, the first PHR information indicates a data rate of the second PHR information, a length of the first PHR information is less than n bits, and n is a minimum quantity of bits that indicate a data rate of the PHY payload field and whether the PHY payload field is encoded by using a first coding scheme; and the logic circuit is configured to parse the PPDU. For example, the first coding scheme may be any one of the following: LDPC, convolutional code, polar code, turbo code, and the like. This is not limited in this application.

In another design, the interface is configured to input a codeword, where the codeword is a codeword obtained by encoding first PHR information in a PHR field of a PPDU, the PPDU includes the PHR field and a PHY payload field, the PHR field includes the first PHR information, and the codeword is determined based on a codeword that is in a codebook and that is mapped to a value of the first PHR information; and the logic circuit is configured to decode the codeword to obtain the first PHR information, where the first PHR information indicates a data rate of the PHY payload field and whether the PHY payload field is encoded by using LDPC. For example, the first coding scheme may be any one of the following: LDPC, convolutional code, polar code, turbo code, and the like. This is not limited in this application.

According to a thirteenth aspect, this application provides a computer-readable storage medium. The computer-readable storage medium is configured to store a computer program, and when the computer-readable storage medium is run on a computer, the method according to the first aspect, the fifth aspect, or any possible implementation of any one of the first aspect and the fifth aspect is performed.

According to a fourteenth aspect, this application provides a computer-readable storage medium. The computer-readable storage medium is configured to store a computer program, and when the computer-readable storage medium is run on a computer, the method according to the second aspect, the sixth aspect, or any possible implementation of any one of the second aspect and the sixth aspect is performed.

According to a fifteenth aspect, an embodiment of this application provides a computer program product. The computer program product includes a computer program or computer code, and when the computer program or the computer code is run on a computer, the method according to the first aspect, the fifth aspect, or any possible implementation of any one of the first aspect and the fifth aspect is performed.

According to a sixteenth aspect, an embodiment of this application provides a computer program product. The computer program product includes a computer program or computer code, and when the computer program or the computer code is run on a computer, the method according to the second aspect, the sixth aspect, or any possible implementation of any one of the second aspect and the sixth aspect is performed.

According to a seventeenth aspect, this application provides a computer program. When the computer program is run on a computer, the method according to the first aspect, the fifth aspect, or any possible implementation of any one of the first aspect and the fifth aspect is performed.

According to an eighteenth aspect, this application provides a computer program. When the computer program is run on a computer, the method according to the second aspect, the sixth aspect, or any possible implementation of any one of the second aspect and the sixth aspect is performed.

According to a nineteenth aspect, an embodiment of this application provides a wireless communication system. The wireless communication system includes a first communication apparatus and a second communication apparatus.

The first communication apparatus is configured to perform the method according to the first aspect, the fifth aspect, or any possible implementation of any one of the first aspect and the fifth aspect. The second communication apparatus is configured to perform the method according to the second aspect, the sixth aspect, or any possible implementation of any one of the second aspect and the sixth aspect.

For technical effects achieved in the foregoing aspects, refer to each other or technical effects in the following method embodiments. Details are not described herein.

**BRIEF DESCRIPTION OF DRAWINGS**

FIG. 1 is a diagram of a structure of a wireless communication system according to an embodiment of this application;

FIG. 2 is a diagram of another structure of a wireless communication system according to an embodiment of this application;

FIG. 3 is a diagram of a format of a UWB PPDU according to an embodiment of this application;

FIG. 4 is a schematic flowchart of a PPDU transmission method according to an embodiment of this application;

FIG. 5 is another diagram of a format of a UWB PPDU according to an embodiment of this application;

FIG. 6a is a diagram of a data symbol structure of a PHY payload field at a data rate of 1.95 Mbps according to an embodiment of this application;

FIG. 6b is a diagram of a data symbol structure of a PHY payload field at a data rate of 7.8 Mbps according to an embodiment of this application;

FIG. 6c is a diagram of a data symbol structure of a PHY payload field at a data rate of 31.2 Mbps according to an embodiment of this application;

FIG. 6d is a diagram of a data symbol structure of a PHY payload field at a data rate of 62.4 Mbps according to an embodiment of this application;

FIG. 6e is a diagram of a data symbol structure of a PHY payload field at a data rate of 124.8 Mbps according to an embodiment of this application;

FIG. 7 is a diagram of a packet error rate simulation result according to an embodiment of this application;

FIG. 8 is another schematic flowchart of a PPDU transmission method according to an embodiment of this application;

FIG. 9 is a diagram of another packet error rate simulation result according to an embodiment of this application;

FIG. 10 is a diagram of a structure of a communication apparatus according to an embodiment of this application,

FIG. 11 is a diagram of another structure of a communication apparatus according to an embodiment of this application, and

FIG. 12 is a diagram of still another structure of a communication apparatus according to an embodiment of this application.

**DESCRIPTION OF EMBODIMENTS**

The following clearly and completely describes technical solutions in embodiments of this application with reference to accompanying drawings in embodiments of this application.

In descriptions of this application, words such as "first" and "second" are merely used to distinguish between different objects, and do not limit quantities and execution sequences. In addition, the words such as "first" and "second" do not indicate a definite difference. In addition, terms "include" and "have" and any other variations thereof are intended to cover non-exclusive inclusion. For example, processes, methods, systems, products, devices that include a series of steps or units are not limited to listed steps or units, but instead, optionally further include steps or units that are not listed, or optionally further include other steps or units inherent to these processes, methods, products, and devices.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "one or more of the following items (pieces)" or a similar expression thereof refers to any combination of these items, including any combination of singular items (pieces) or plural items (pieces). For example, at least one item (piece) of a, b, or c may represent a, b, c, a and b, a and c, b and c, or a, b, and c, where a, b, and c each may be singular or plural.

In this application, the term "example", "for example", or the like represents giving an example, an illustration, or a description. Any embodiment or design scheme described as "example", "such as", or "for example" in this application should not be explained as being more preferred or having more advantages than another embodiment or design scheme. Exactly, use of the word "example", "such as", "for example", or the like is intended to present a related concept in a specific manner.

In this application, an element represented in a singular form is intended to represent "one or more", but does not represent "one and only one", unless otherwise specified.

It may be understood that in embodiments of this application, "B mapped to A" or "A mapped to B" indicates that there is a correspondence between A and B, and B may be determined based on A. However, it should be further understood that determining (or generating) B based on A does not mean that B is determined (or generated) based only on A, and B may also be determined (or generated) based on A and/or other information.

The technical solutions provided in this application are applicable to a wireless personal area network (wireless personal area network, WPAN) based on a UWB technology. For example, a method provided in this application is applicable to IEEE 802.15 series protocols, for example, an 802.15.4a protocol, an 802.15.4z protocol, or an 802.15.4ab protocol, or a future generation UWB WPAN standard. Examples are not enumerated herein. The method provided in this application may be further applied to various communication systems, such as an internet of things (internet of things, IoT) system, a vehicle to X (vehicle to X, V2X) system, and a narrowband internet of things (narrowband internet of things, NB-IoT) system, may be applied to a device in vehicle to X, an internet of things node, a sensor, or the like in an internet of things (IoT, internet of things), or may be applied to a smart camera, a smart remote control, and a smart water or electricity meter in a smart home, a sensor in a smart city, and the like. The method provided in this application is further applicable to a long term evolution (long term evolution, LTE) frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, an LTE system, a 5th generation (5th-generation, 5G) communication system, a 6th generation (6th-generation, 6G) communication system, or the like.

A UWB technology is a new wireless communication technology that uses nanosecond-level non-sinusoidal wave narrow pulses to transmit data, and modulates impulse pulses with very steep rise and fall time. Therefore, an ultra-wideband occupies a wide spectrum range for transmission, so that a signal has a bandwidth of a gigahertz (GHz) magnitude. A bandwidth used by the UWB is usually higher than 1 GHz. A UWB system does not need to generate a sinusoidal carrier signal and can directly transmit an impulse sequence. Therefore, the UWB system has a wide spectrum and low average power, and a UWB wireless communication system has advantages such as a strong multipath resolution capability, low power consumption, and high confidentiality. This facilitates coexistence with other systems, thereby improving spectrum utilization and system capacity. In addition, in a short-range communication application, transmit power of a UWB transmitter may be usually lower than 1 mW (milliwatt). Theoretically, interference generated by a UWB signal is only equivalent to white noise. This facilitates good coexistence between the ultra-wideband and conventional narrowband communication. Therefore, the UWB system and a narrowband (narrowband, NB) communication system can simultaneously operate without interfering with each other.

The method provided in this application may be implemented by a communication apparatus in a wireless communication system. In a communication apparatus, an apparatus or a chip for implementing functions of the UWB system may be referred to as a UWB module, and an apparatus or a chip for implementing functions of the narrowband communication system may be referred to as a narrowband communication module. The UWB module and the narrowband communication module may be different apparatuses or chips. Certainly, the UWB module and the narrowband communication module may alternatively be integrated into one apparatus or chip. Implementations of the UWB module and the narrowband communication module in the communication apparatus are not limited in embodiments of this application. A communication apparatus in this application includes a UWB module, and optionally, further includes a narrowband communication module.

Although embodiments of this application are mainly described by using a WPAN as an example, for example, a network applied to IEEE 802.15 series standards is used as an example for description, a person skilled in the art easily understands that, various aspects in this application may be extended to other networks using various standards or protocols, for example, a wireless local area network (wireless local area network, WLAN), Bluetooth (BLUETOOTH), a high performance radio LAN (high performance radio LAN, HIPERLAN) (which is a wireless standard similar to an IEEE 802.11 standard and is mainly used in Europe), a wide area network (WAN), or other networks that are currently known or developed in the future. Therefore, regardless of a used coverage area and a used wireless access protocol, various aspects provided in this application are applicable to any suitable wireless network.

Optionally, the communication apparatus in embodiments of this application may be a device that supports a plurality of WPAN standards, such as 802.15.4a, 802.15.4z, IEEE 802.15.4ab currently under discussion, or a subsequent release.

The method provided in this application may be implemented by a communication apparatus in a wireless communication system. The communication apparatus may be an apparatus in the UWB system. For example, the communication apparatus may include but is not limited to a communication server, a router, a switch, a bridge, a computer, a mobile phone, and the like that support the UWB technology. For another example, the communication apparatus may include user equipment (user equipment, UE), and the user equipment may include various devices that support the UWB technology, such as handheld devices, vehicle-mounted devices (for example, a vehicle or a component mounted on a vehicle), wearable devices, internet of things (internet of things, IoT) devices, computing devices, or other processing devices connected to a wireless modem. Examples are not enumerated herein. For still another example, the communication apparatus may include a central control point, for example, a personal area network (personal area network, PAN) or a PAN coordinator. The PAN coordinator or the PAN may be a mobile phone, a vehicle-mounted device, an anchor (anchor), a tag (tag), a smart home, or the like. For yet another example, the communication apparatus may include a chip, and the chip may be disposed in a communication server, a router, a switch, a terminal device, or the like. Examples are not enumerated herein. It may be understood that the foregoing descriptions about the communication apparatus are applicable to a first communication apparatus and a second communication apparatus in this application.

In embodiments of this application, the communication apparatus may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that communication can be performed according to the method provided in embodiments of this application by running a program that records code of the method provided in embodiments of this application.

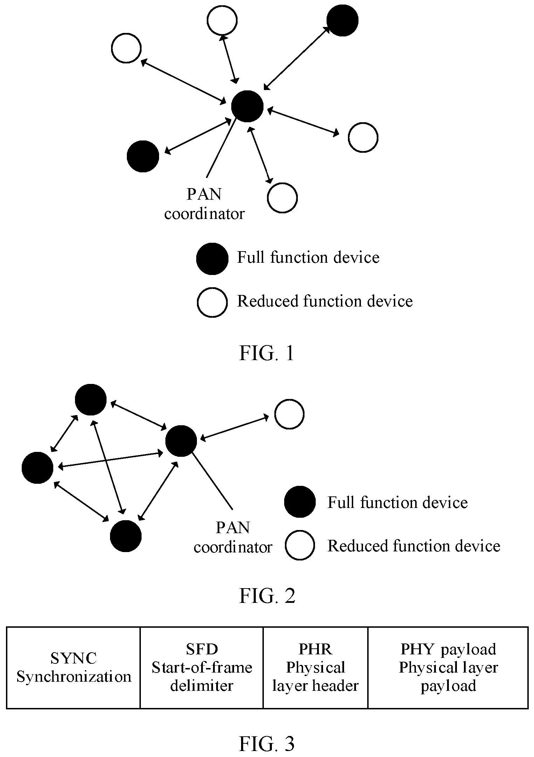

For example, FIG. 1 is a diagram of a structure of a wireless communication system according to an embodiment of this application. As shown in FIG. 1, the wireless communication system is a star topology structure. In this structure, a central control node (for example, a PAN coordinator in FIG. 1) may perform data communication with one or more other devices. FIG. 2 is a diagram of another structure of a wireless communication system according to an embodiment of this application. As shown in FIG. 2, the wireless communication system is a point-to-point topology structure. In this structure, a central control node (for example, a PAN coordinator in FIG. 2) may perform data communication with one or more other devices, and other different devices may also perform data communication with each other. In FIG. 1 and FIG. 2, both a full function device (full function device) and a reduced function device (reduced function device) may be understood as communication apparatuses shown in this application. The full function device and the reduced function device are relative. For example, the reduced function device cannot be a PAN coordinator (coordinator). For another example, compared with the full function device, the reduced function device may have no coordination capability or have a lower communication rate than the full function device. It may be understood that the PAN coordinator shown in FIG. 2 is merely an example, and the other three full function devices shown in FIG. 2 may also be used as PAN coordinators. Examples are not enumerated herein. It may be further understood that the full function device and the reduced function device shown in this application are merely examples of the communication apparatus, and any apparatus that can implement a PPDU transmission method provided in this application falls within the protection scope of this application.

Because spectrum energy of a UWB is low, interference of the UWB to another wireless communication technology is small. Therefore, according to a regulation, the UWB may send a signal without channel listening, and therefore is very friendly to low-latency data transmission. In addition, because a communication bandwidth of the UWB is large, data can be transmitted on an ultra-wideband channel at a high rate. In addition, to increase a transmission distance or expand a coverage area of a device, data may also be transmitted at a low rate.

A possible format (format) of a UWB PPDU is shown in FIG. 3. FIG. 3 is a diagram of a format of a UWB PPDU according to an embodiment of this application. As shown in FIG. 3, the UWB PPDU includes at least a physical layer header (physical layer header, PHR) field, and optionally further includes one or more of the following fields: a synchronization (synchronization, SYNC) field, a start-of-frame delimiter (start-of-frame delimiter, SFD) field, or a physical layer (physical layer, PHY) payload (PHY payload) field. The synchronization (SYNC) field is used for channel measurement and signal synchronization, and the SFD field is used to separate the SYNC field from a subsequent part. The PHR field indicates some parameters that are necessary for demodulating the PHY payload field, for example, a length, a data rate (data rate), and an encoding type of the PHY payload field. The PHY payload field is used to carry data. It may be understood that names of the fields in FIG. 3 are merely examples. With evolution of a standard, names of fields in a PPDU may be different. Any field that can implement the foregoing functions falls within the protection scope of embodiments of this application.

Therefore, to correctly demodulate the data in the PHY payload field, it needs to be ensured that the PHR field is correctly demodulated. Generally, data transmitted at a lower data rate is more reliable, that is, the data is more easily to be correctly demodulated. Therefore, the PHR field is usually transmitted at a lower data rate. The PHY payload field may be transmitted at a high data rate, to improve transmission performance. In other words, to ensure demodulation performance, a data rate of the PHR field is usually less than a data rate of the PHY payload field. Currently, to ensure that the PHR field can be correctly demodulated and reliability of the PHR field is higher than that of the PHY payload field, transmission needs to be performed at a low data rate. Consequently, transmission time is long, a delay is increased, and interference is caused to another wireless device or another wireless communication technology. In addition, if the data rate of the PHR field is excessively high, the PHR field becomes a performance bottleneck of entire PPDU demodulation.

In a possible implementation, to reduce the transmission time of the PHR field, it is considered that the PHR field is divided into two parts. One part is transmitted at a fixed low data rate, and the other part is transmitted at a dynamic data rate. Specifically, the PHR field may be divided into two parts, denoted as a PHR1 and a PHR2. The PHR1 is also referred to as a rate header (rate header), and has 4 bits in total, where 3 bits (the 3 bits are denoted as R0, R1, and R2, R0 is a most significant bit, and R2 is a least significant bit) indicate a data rate of the PHY payload field, and the other 1 bit (the bit is denoted as L) indicates whether the PHY payload field is encoded by using a low-density parity-check code (low density parity code, LDPC). Currently, data rates supported by the PHY payload field include 1.95 Mbps (megabits per second), 7.8 Mbps, 31.2 Mbps, 62.4 Mbps, and 124.8 Mbps. The PHR2 mainly indicates a length of the PHY payload field. Optionally, the PHR2 further includes a bit that indicates whether the PPDU is used to perform sensing measurement, a reserved bit, and a CRC bit. The PHR1 is transmitted at a fixed low data rate, and the PHR2 is transmitted at a dynamic data rate. The data rate of the PHR2 may be determined based on both the data rate of the PHY payload field and a channel coding used for the PHY payload field.

In addition, the PHR1 may be encoded by using a convolutional code with a code rate of 0.5. Specifically, if a convolutional code whose polynomial is $(133, 171)_8$ is used, six 0s are added after the 4 bits of the PHR1 as tail bits, and then convolutional coding is performed on the PHR1 by using the convolutional code with the code rate of 0.5 to obtain 20 bits. Then, 2 bits are used as one symbol, and there are 10 symbols in total. There are the following several solutions based on different symbol transmission rates: (1) The PHR1 is transmitted at a rate of 3.9 Mbps, and approximately 2.5 $\mu s$ (microsecond) is required in total. (2) The PHR1 is transmitted at a rate of 1.95 Mbps, and approximately 5 $\mu s$ is required in total. (3) The PHR1 is transmitted at a rate of 0.975 Mbps, and approximately 10 $\mu s$ is required in total. For the solution (1), because the symbol rate of the PHR1 is high (3.9 Mbps), when the data rate of the PHY payload field is 1.95 Mbps, demodulation performance cannot be ensured, and a performance bottleneck occurs. For the solution (2), the symbol rate of the PHR1 is 1.95 Mbps, and because performance of LDPC coding is better than that of convolutional coding, when the data rate of the PHY payload field is 1.95 Mbps and LDPC coding is used, demodulation performance still cannot be ensured, and a performance bottleneck occurs. For the solution (3), the symbol rate of the PHR1 is low (0.975 Mbps), and transmission duration of the PHR1 is increased.

In view of this, embodiments of this application provide a UWB-based PPDU transmission method and a related apparatus, to not only improve demodulation performance of a PHR field (mainly first PHR information), thereby improving data transmission reliability, but also reduce transmission duration, thereby improving data transmission efficiency, and reducing interference to another wireless device or another wireless communication technology.

The following describes in detail the technical solutions provided in this application with reference to more accompanying drawings.

To clearly describe the technical solutions of this application, this application is described by using a plurality of embodiments. For details, refer to the following descriptions. In this application, unless otherwise specified, for same or similar parts of embodiments or implementations, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in different embodiments and the implementations/implementation methods in embodiments may be combined to form a new embodiment, implementation, or implementation method based on an internal logical relationship thereof. The following implementations of this application are not intended to limit the protection scope of this application.

A communication apparatus in this application may support the 802.15.4ab standard or a next-generation standard of 802.15.4ab, may support a plurality of standards such as 802.15.4a, 802.15.4-2011, 802.15.4-2015, 802.15.4-2020, and 802.15.4z, and may further support WLAN standards of an 802.11 family such as 802.11ax, 802.11ac, 802.11n, 802.11g, 802.11b, 802.11a, 802.1 1be, and a next generation of 802.11be.

Embodiment 1

Embodiment 1 of this application mainly describes a method for designing a physical layer header (PHR) in a PPDU.

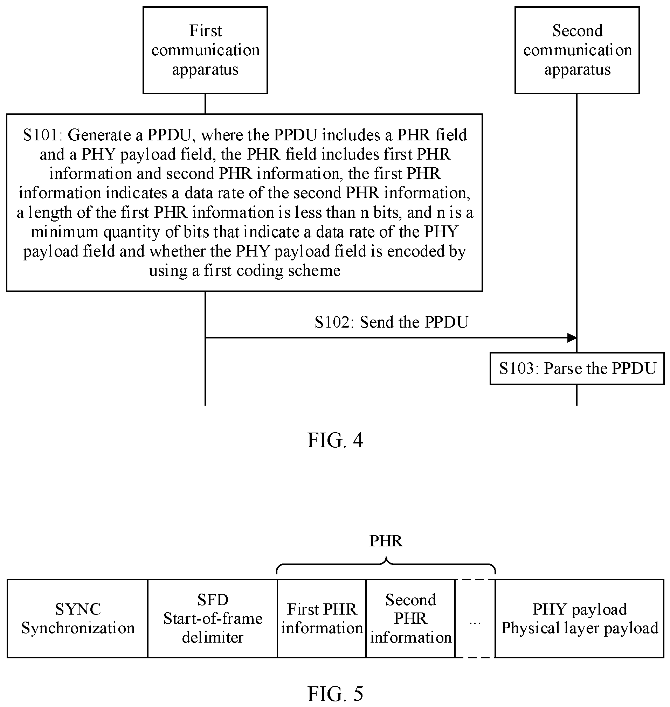

FIG. 4 is a schematic flowchart of a PPDU transmission method according to an embodiment of this application. As shown in FIG. 4, the PPDU transmission method includes but is not limited to the following steps:

S101: A first communication apparatus generates a PPDU, where the PPDU includes a PHR field and a PHY payload field, the PHR field includes first PHR information and second PHR information, the first PHR information indicates a data rate of the second PHR information, a length of the first PHR information is less than n bits, and n is a minimum quantity of bits that indicate a data rate of the PHY payload field and whether the PHY payload field is encoded by using a first coding scheme.
S102: The first communication apparatus sends the PPDU.
Correspondingly, a second communication apparatus receives the PPDU.
S103: The second communication apparatus parses the PPDU.

The PPDU in this embodiment of this application may be a PPDU applied to a UWB WPAN standard, for example, a PPDU in the 802.15.4ab protocol.

Optionally, FIG. 5 is another diagram of a format of a UWB PPDU according to an embodiment of this application. As shown in FIG. 5, the PPDU may include but is not limited to a PHR field and a PHY payload field. The PHR field may include first PHR information and second PHR information. The first PHR information may indicate a data rate of the second PHR information. A length of the first PHR information is less than n bits, n is a minimum quantity of bits that indicate a data rate of the PHY payload field and whether the PHY payload field is encoded by using a first coding scheme, and n is an integer greater than or equal to 2. For example, n is equal to 4, and the length of the first PHR information is less than 4 bits. For example, the first coding scheme may be any one or more of the following: LDPC, convolutional code, polar code, turbo code, and the like. This is not limited in this embodiment of this application. For ease of description, the following uses an example in which the first coding scheme is LDPC for description. Certainly, with development of a standard, LDPC in the following specification may alternatively be replaced with any coding scheme (for example, convolutional code, polar code, or turbo code) specified in a future standard.

It may be understood that names of fields in FIG. 5 are merely examples, the PHR field may alternatively be referred to as a first field, and the PHY payload field may alternatively be referred to as a second field. With evolution of the standard, names of fields in a UWB PPDU may be different, and fields that can implement the same or corresponding functions fall within the protection scope of this embodiment of this application.

In a possible implementation, the second PHR information may indicate the data rate of the PHY payload field and whether the PHY payload field is encoded by using LDPC. For example, a length of the second PHR information is greater than or equal to n bits. For another example, some bits in the second PHR information may indicate the data rate of the PHY payload field and whether the PHY payload field is encoded by using LDPC, and some bits may indicate one or more of the following: a length of the PHY payload field, whether the PPDU is used to perform sensing measurement, or a cyclic redundancy check (cyclic redundancy check, CRC) code.

In another possible implementation, the second PHR information and the first PHR information may jointly indicate the data rate of the PHY payload field and whether the PHY payload field is encoded by using LDPC. In this way, a quantity of bits can be reduced. It may be understood that, when the second PHR information and the first PHR information are used for joint indication, a sum of the length of the first PHR information and a bit that is in the second PHR information and that is used for joint indication together with the first PHR information may be equal to n bits. Certainly, the sum may alternatively be greater than n bits. This is not limited in this embodiment of this application. For example, the first PHR information and some bits in the second PHR information jointly indicate the data rate of the PHY payload field and whether the PHY payload field is encoded by using LDPC, and the other bits may indicate one or more of the following: the length of the PHY payload field, whether the PPDU is used to perform sensing measurement, or the CRC code. Certainly, alternatively, the first PHR information and all bits in the second PHR information may jointly indicate the data rate of the PHY payload field and whether the PHY payload field is encoded by using LDPC. In this case, the PHR field may further include third PHR information that indicates one or more of the following: the length of the PHY payload field, whether the PPDU is used to perform sensing measurement, or the CRC code.

It may be understood that, to correctly demodulate data in the PHY payload field, it needs to be ensured that the PHR field is correctly demodulated. However, a data rate is a factor that affects demodulation performance. Therefore, in some scenarios, the data rate of the second PHR information needs to be less than or equal to the data rate of the PHY payload field. Optionally, when the data rate of the second PHR information is equal to the data rate of the PHY payload field, the PHY payload field may not be encoded by using LDPC.

The following uses examples to describe a mapping relationship between different values of the length of the first PHR information and meanings, and a mapping relationship between values and meanings in a case in which the first PHR information and the second PHR information are used for joint indication in this embodiment of this application. In the following examples, n is equal to 4. However, in actual application, a value of n may change with development of a standard. A specific value of n is not limited in this embodiment of this application.

Example 1: n is equal to 4, and the first PHR information and 2 bits in the second PHR information jointly indicate the data rate of the PHY payload field and whether the PHY payload field is encoded by using LDPC. In this case, the length of the first PHR information may also be 2 bits. For ease of description, the 2 bits in the second PHR information are referred to as joint indication bits below. The following Table 1 to Table 3 show three possible mapping relationships.

Table 1

| Value of first PHR information (2 bits) | Value of joint indication bits (2 bits) in second PHR information | Data rate (Mbps) of the second PHR information | Data rate of a PHY payload field/PHY payload data rate (Mbps) | Whether LDPC is used |
|---|---|---|---|---|
| 00 | 00 | First rate | Reserved/Reserved | Reserved |
| | 01 | | 1.95 | Yes |
| | 10 | | Reserved | Reserved |
| | 11 | | Reserved | Reserved |
| 01 | 00 | Second rate | 1.95 | No |
| | 01 | | Reserved | Reserved |
| | 10 | | Reserved | Reserved |
| | 11 | | 7.8 | Yes |
| 10 | 00 | Third rate | 7.8 | No |
| | 01 | | 31.2 | Yes |
| | 10 | | 31.2 | No |
| | 11 | | 62.4 | Yes |
| 11 | 00 | Fourth rate | 62.4 | No |
| | 01 | | 124.8 | Yes |
| | 10 | | 124.8 | No |
| | 11 | | Reserved | Reserved |

Table 2

| Value of first PHR information (2 bits) | Value of joint indication bits (2 bits) in second PHR information | Data rate (Mbps) of the second PHR information | Data rate of a PHY payload field/PHY payload data rate (Mbps) | Whether LDPC is used |
|---|---|---|---|---|
| 00 | 00 | First rate | Reserved/Reserved | Reserved |
| | 01 | | 1.95 | Yes |
| | 10 | | Reserved | Reserved |
| | 11 | | Reserved | Reserved |
| 01 | 00 | Second rate | 1.95 | No |
| | 01 | | Reserved | Reserved |
| | 10 | | Reserved | Reserved |
| | 11 | | 7.8 | Yes |

(continued)

| Value of first PHR information (2 bits) | Value of joint indication bits (2 bits) in second PHR information | Data rate (Mbps) of the second PHR information | Data rate of a PHY payload field/PHY payload data rate (Mbps) | Whether LDPC is used |
|---|---|---|---|---|
| 10 | 00 | Third rate | Reserved | Reserved |
|  | 01 |  | 31.2 | Yes |
|  | 10 |  | 7.8 | No |
|  | 11 |  | 62.4 | Yes |
| 11 | 00 | Fourth rate | 62.4 | No |
|  | 01 |  | 124.8 | No |
|  | 10 |  | 124.8 | Yes |
|  | 11 |  | 31.2 | No |

Table 3

| Value of first PHR information (2 bits) | Value of joint indication bits (2 bits) in second PHR information | Data rate (Mbps) of the second PHR information | Data rate of a PHY payload field/PHY payload data rate (Mbps) | Whether LDPC is used |
|---|---|---|---|---|
| 00 | 00 | First rate | 1.95 | No |
|  | 01 |  | 1.95 | Yes |
|  | 10 |  | Reserved/Reserved | Reserved |
|  | 11 |  | Reserved | Reserved |
| 01 | 00 | Second rate | 7.8 | No |
|  | 01 |  | 7.8 | Yes |
|  | 10 |  | Reserved | Reserved |
|  | 11 |  | Reserved | Reserved |
| 10 | 00 | Third rate | 31.2 | No |
|  | 01 |  | 31.2 | Yes |
|  | 10 |  | Reserved | Reserved |
|  | 11 |  | 62.4 | Yes |
| 11 | 00 | Fourth rate | 62.4 | No |
|  | 01 |  | 124.8 | No |
|  | 10 |  | 124.8 | Yes |
|  | 11 |  | Reserved | Reserved |

It may be understood that, in Table 1 to Table 3, the first rate may be less than or equal to 1.95 Mbps, the second rate may be less than or equal to 1.95 Mbps, the first rate may be less than the second rate, the third rate is less than or equal to 7.8 Mbps, the fourth rate is less than or equal to 62.4 Mbps, and the third rate is less than the fourth rate. For example, when LDPC is used for the PHY payload field, the data rate of the second PHR information may be 1/4 of the data rate of the PHY payload field, or when convolutional coding (for example, a binary convolutional code, BCC) instead of LDPC is used for the PHY payload field, the data rate of the second PHR information may be the same as the data rate of the PHY payload field. For example, the first rate may be 0.4875 Mbps, the second rate may be 1.95 Mbps, the third rate may be 7.8 Mbps, and the fourth rate may be 31.2 Mbps.

It may be further understood that mapping relationships in Table 1 to Table 3 are merely examples. In actual application, there may be different mapping relationships. Examples are not enumerated herein, but constraint conditions mentioned in this embodiment of this application still need to be met. For example, the data rate of the second PHR information is less than or equal to the data rate of the PHY payload field, and when convolutional coding instead of LDPC is used for the PHY payload field, the data rate of the second PHR information may be the same as the data rate of the PHY payload field. For another example, when a last bit of the joint indication bits is 1, it indicates that LDPC is used; or when a last bit of the joint indication bits is 0, it indicates that LDPC is not used.

In some scenarios, the first PHR information in Table 1 to Table 3 may be the 2 bits R0 and R1 mentioned above, and the joint indication bits in the second PHR information may be the 2 bits R2 and an LDPC indication (namely, L) mentioned above. In some scenarios, last columns "whether LDPC is used" in Table 1 to Table 3 may be understood as whether LDPC is enabled. When LDPC is enabled (LDPC enabled), it indicates that LDPC is used; or when LDPC is disabled (LDPC disabled), it indicates that LDPC is not used.

Example 2: n is equal to 4, and the first PHR information and 3 bits in the second PHR information jointly indicate the data rate of the PHY payload field and whether the PHY payload field is encoded by using LDPC. In this case, the length of the first PHR information may also be 1 bit. The following Table 4 shows a possible mapping relationship.

Table 4

| Value of first PHR information (1 bit) | Value of joint indication bits (3 bits) in second PHR information | Data rate (Mbps) of the second PHR information | Data rate of a PHY payload field/PHY payload data rate (Mbps) | Whether LDPC is used |
|---|---|---|---|---|
| 0 | 000 | First rate | 1.95 | No |
| | 001 | | 1.95 | Yes |
| | 010 | | 7.8 | No |
| | 011 | | 7.8 | Yes |
| | 100 | | Reserved/Reserved | Reserved |
| | 101 | | Reserved | Reserved |
| | 110 | | Reserved | Reserved |
| | 111 | | Reserved | Reserved |
| 1 | 000 | Second rate | 31.2 | No |
| | 001 | | 31.2 | Yes |
| | 010 | | 62.4 | No |
| | 011 | | 62.4 | Yes |
| | 100 | | 124.8 | No |
| | 101 | | 124.8 | Yes |
| | 110 | | Reserved | Reserved |
| | 111 | | Reserved | Reserved |

It may be understood that, in Table 4, the first rate may be less than 1.95 Mbps, and the second rate may also be less than 31.2 Mbps. For example, when LDPC is used for the PHY payload field, the data rate of the second PHR information may be 1/4 of the data rate of the PHY payload field; or when convolutional coding (for example, a binary convolutional code BCC) instead of LDPC is used for the PHY payload field, the data rate of the second PHR information may be the same as the data rate of the PHY payload field. For example, the first rate may be 0.4875 Mbps, and the second rate may be 7.8 Mbps.

It may be further understood that the mapping relationship in Table 4 is merely an example. In actual application, there may be different mapping relationships. Examples are not enumerated herein.

In some scenarios, the first PHR information in Table 4 may be the bit R0 mentioned above, and the joint indication bits in the second PHR information may be the 3 bits R1, R2, and the LDPC indication (namely, L) mentioned above. In some scenarios, a last column "whether LDPC is used" in Table 4 may be understood as whether LDPC is enabled. When LDPC is enabled (LDPC enabled), it indicates that LDPC is used; or when LDPC is disabled (LDPC disabled), it indicates that LDPC is not used.

Example 3: n is equal to 4, and the first PHR information and 1 bit in the second PHR information jointly indicate the data rate of the PHY payload field and whether the PHY payload field is encoded by using LDPC. In this case, the length of the first PHR information may also be 3 bits. The following Table 5a to Table 5d show a plurality of possible mapping relationships.

Table 5a

| Value of first PHR information (3 bits) | Value of a joint indication bit (1 bit) in second PHR information | Data rate (Mbps) of the second PHR information | Data rate of a PHY payload field/PHY payload data rate (Mbps) | Whether LDPC is used |
|---|---|---|---|---|
| 000 | 0 | First rate | Reserved/Reserved | Reserved |
|  | 1 |  | 1.95 | Yes |
| 001 | 0 | Second rate | 1.95 | No |
|  | 1 |  | Reserved | Reserved |
| 010 | 0 | Third rate | Reserved | Reserved |
|  | 1 |  | 7.8 | Yes |
| 011 | 0 | Fourth rate | 7.8 | No |
|  | 1 |  | Reserved | Reserved |
| 100 | 0 | Fifth rate | Reserved | Reserved |
|  | 1 |  | 31.2 | Yes |
| 101 | 0 | Sixth rate | 31.2 | No |
|  | 1 |  | 62.4 | Yes |
| 110 | 0 | Seventh rate | 62.4 | No |
|  | 1 |  | 124.8 | Yes |
| 111 | 0 | Eighth rate | 124.8 | No |
|  | 1 |  | Reserved | Reserved |

It may be understood that, in Table 5a, the first rate and the second rate may be less than or equal to 1.95 Mbps, the first rate may be less than the second rate, the third rate and the fourth rate may be less than or equal to 7.8 Mbps, the third rate is less than the fourth rate, the fifth rate and the sixth rate may be less than or equal to 31.2 Mbps, the fifth rate is less than the sixth rate, the seventh rate and the eighth rate may be less than or equal to 62.4 Mbps, and the seventh rate is less than the eighth rate. For example, when LDPC is used for the PHY payload field, the data rate of the second PHR information may be 1/4 of the data rate of the PHY payload field; or when convolutional coding (for example, a binary convolutional code BCC) instead of LDPC is used for the PHY payload field, the data rate of the second PHR information may be less than or equal to the data rate of the PHY payload field. For example, the first rate may be 0.4875 Mbps, the second rate may be 0.975 Mbps, the third rate may be 1.95 Mbps, the fourth rate may be 3.9 Mbps, the fifth rate may be 7.8 Mbps, the sixth rate may be 15.6 Mbps, the seventh rate may be 31.2 Mbps, and the eighth rate may be 62.4 Mbps.

Table 5b

| Value of first PHR information (3 bits) | Value of a joint indication bit (1 bit) in second PHR information | Data rate (Mbps) of the second PHR information | Data rate of a PHY payload field/PHY payload data rate (Mbps) | Whether LDPC is used |
|---|---|---|---|---|
| 000 | 0 | 0.4875 (sixth rate) | Reserved/Reserved | Reserved |
|  | 1 |  | 1.95 (first rate) | Yes/Yes |
| 001 | 0 | 1.95 (seventh rate) | 1.95 (first rate) | No/No |
|  | 1 |  | Reserved | Reserved |
| 010 | 0 | 1.95 (eighth rate) | Reserved | Reserved |
|  | 1 |  | 7.8 (second rate) | Yes |
| 011 | 0 | 7.8 (ninth rate) | 7.8 (second rate) | No |
|  | 1 |  | Reserved | Reserved |

(continued)

| Value of first PHR information (3 bits) | Value of a joint indication bit (1 bit) in second PHR information | Data rate (Mbps) of the second PHR information | Data rate of a PHY payload field/PHY payload data rate (Mbps) | Whether LDPC is used |
|---|---|---|---|---|
| 100 | 0 | 7.8 (tenth rate) | Reserved | Reserved |
| | 1 | | 31.2 (third rate) | Yes |
| 101 | 0 | 31.2 (eleventh rate) | 31.2 (third rate) | No |
| | 1 | | Reserved | Reserved |
| 110 | 0 | 15.6 (twelfth rate) | 62.4 (fourth rate) | No |
| | 1 | | 62.4 (fourth rate) | Yes |
| 111 | 0 | 31.2 (thirteenth rate) | 124.8 (fifth rate) | No |
| | 1 | | 124.8 (fifth rate) | Yes |

Optionally, in Table 5b, when LDPC is not used for the PHY payload field, a symbol structure of the second PHR information is the same as (or is obtained by repeating for several times) a data symbol structure of the PHY payload field corresponding to the second PHR information, or when LDPC is used for the PHY payload field, a symbol structure of the second PHR information is obtained by repeating, for four times, a data symbol structure of the PHY payload field corresponding to the second PHR information. For example, when LDPC is used for the PHY payload field, a symbol structure of the second PHR information in a case in which the data rate of the second PHR information is the sixth rate is obtained by repeating, for four times, a data symbol structure of the PHY payload field in a case in which the data rate of the PHY payload field is the first rate. For example, when LDPC is not used for the PHY payload field, a symbol structure of the second PHR information in a case in which the data rate of the second PHR information is the seventh rate is the same as a data symbol structure of the PHY payload field in a case in which the data rate of the PHY payload field is the first rate. For example, when LDPC is used for the PHY payload field, a symbol structure of the second PHR information in a case in which the data rate of the second PHR information is the eighth rate is obtained by repeating, for four times, a data symbol structure of the PHY payload field in a case in which the data rate of the PHY payload field is the second rate. For example, when LDPC is not used for the PHY payload field, a symbol structure of the second PHR information in a case in which the data rate of the second PHR information is the ninth rate is the same as a data symbol structure of the PHY payload field in a case in which the data rate of the PHY payload field is the second rate. For example, when LDPC is used for the PHY payload field, a symbol structure of the second PHR information in a case in which the data rate of the second PHR information is the tenth rate is obtained by repeating, for four times, a data symbol structure of the PHY payload field in a case in which the data rate of the PHY payload field is the third rate. For example, when LDPC is not used for the PHY payload field, a symbol structure of the second PHR information in a case in which the data rate of the second PHR information is the eleventh rate is the same as a data symbol structure of the PHY payload field in a case in which the data rate of the PHY payload field is the third rate. For example, a symbol structure of the second PHR information in a case in which the data rate of the second PHR information is the twelfth rate is obtained by repeating, for four times, a data symbol structure of the PHY payload field in a case in which the data rate of the PHY payload field is the fourth rate. For example, a symbol structure of the second PHR information in a case in which the data rate of the second PHR information is the thirteenth rate is obtained by repeating, for four times, a data symbol structure of the PHY payload field in a case in which the data rate of the PHY payload field is the fifth rate.

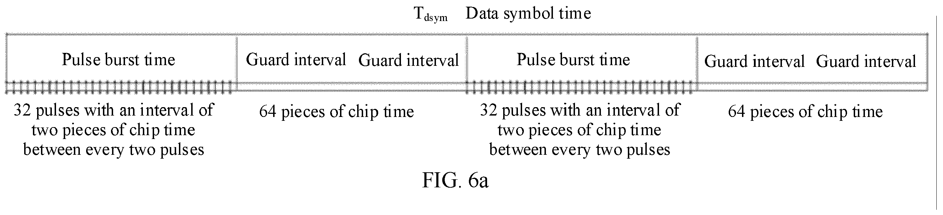

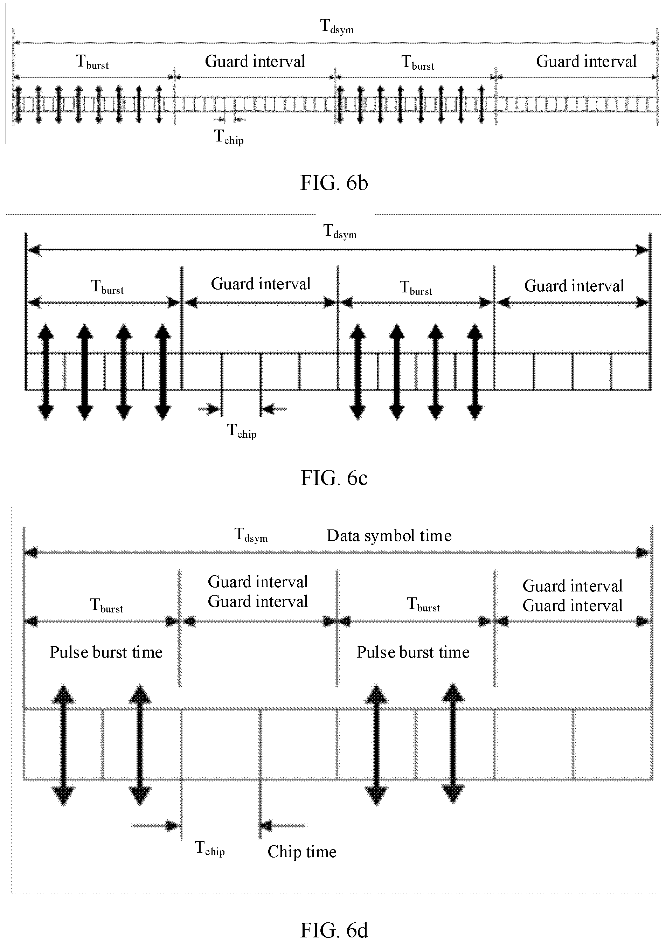

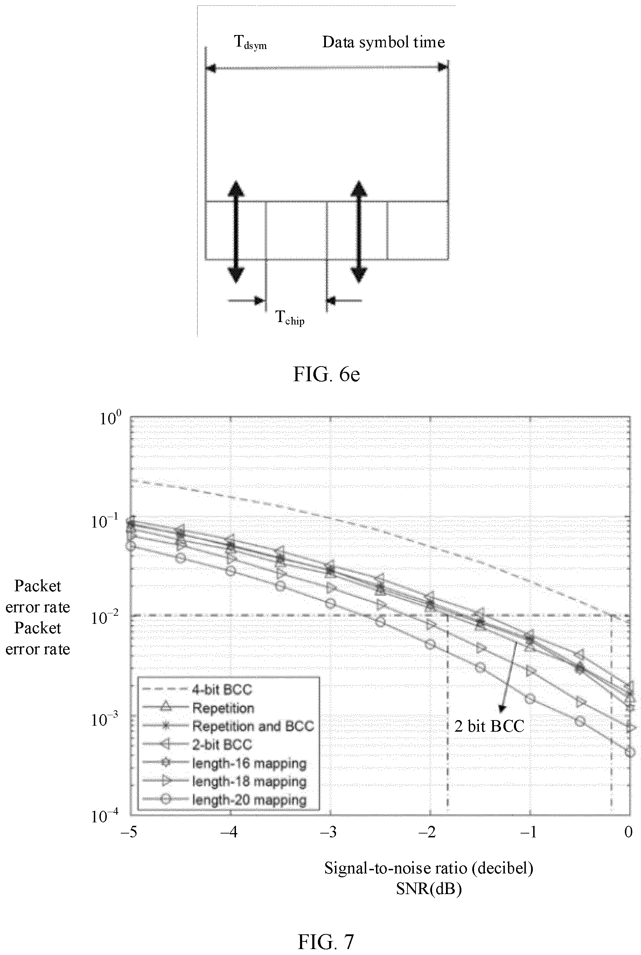

FIG. 6a to FIG. 6e show data symbol structures of the PHY payload field at different data rates. In FIG. 6a to FIG. 6e, $T_{dsym}$ represents time of a data symbol, $T_{burst}$ represents time of a pulse burst, $T_{chip}$ represents time of a chip (chip), and is usually 2 ns (nanosecond), and Guard interval represents a guard interval. It may be understood that a data symbol includes a pulse burst and a guard interval, one pulse burst includes one or more pulses, and the guard interval is usually in a unit of chip (chip) time. As shown in FIG. 6a, the guard interval is 64 pieces of chip time. In FIG. 6a, one pulse burst (burst) includes 32 pulses (32 pulses); in FIG. 6b, one pulse burst includes eight pulses; in FIG. 6c, one pulse burst includes four pulses; in FIG. 6d, one pulse burst includes two pulses; in FIG. 6e, one data symbol includes two pulses.

Table 5c

| Value of first PHR information (3 bits) | Value of a joint indication bit (1 bit) in second PHR information | Data rate (Mbps) of the second PHR information | Data rate of a PHY payload field/PHY payload data rate (Mbps) | Whether LDPC is used |
|---|---|---|---|---|
| 000 | 0 | 0.975 (sixth rate) | Reserved/Reserved | Reserved |
|  | 1 |  | 1.95 (first rate) | Yes/Yes |
| 001 | 0 | 1.95 (seventh rate) | 1.95 (first rate) | No/No |
|  | 1 |  | Reserved | Reserved |
| 010 | 0 | 3.9 (eighth rate) | Reserved | Reserved |
|  | 1 |  | 7.8 (second rate) | Yes |
| 011 | 0 | 7.8 (ninth rate) | 7.8 (second rate) | No |
|  | 1 |  | Reserved | Reserved |
| 100 | 0 | 15.6 (tenth rate) | Reserved | Reserved |
|  | 1 |  | 31.2 (third rate) | Yes |
| 101 | 0 | 31.2 (eleventh rate) | 31.2 (third rate) | No |
|  | 1 |  | Reserved | Reserved |
| 110 | 0 | 31.2 (twelfth rate) | 62.4 (fourth rate) | No |
|  | 1 |  | 62.4 (fourth rate) | Yes |
| 111 | 0 | 62.4 (thirteenth rate) | 124.8 (fifth rate) | No |
|  | 1 |  | 124.8 (fifth rate) | Yes |

Optionally, in Table 5c, when LDPC is not used for the PHY payload field, a symbol structure of the second PHR information is the same as (or is obtained by repeating for several times) a data symbol structure of the PHY payload field corresponding to the second PHR information, or when LDPC is used for the PHY payload field, a symbol structure of the second PHR information is obtained by repeating, for two times, a data symbol structure of the PHY payload field corresponding to the second PHR information. For example, when LDPC is used for the PHY payload field, a symbol structure of the second PHR information in a case in which the data rate of the second PHR information is the sixth rate is obtained by repeating, for two times, a data symbol structure of the PHY payload field in a case in which the data rate of the PHY payload field in FIG. 6a is the first rate. For example, when LDPC is not used for the PHY payload field, a symbol structure of the second PHR information in a case in which the data rate of the second PHR information is the seventh rate is the same as a data symbol structure of the PHY payload field in a case in which the data rate of the PHY payload field in FIG. 6a is the first rate. For example, when LDPC is used for the PHY payload field, a symbol structure of the second PHR information in a case in which the data rate of the second PHR information is the eighth rate is obtained by repeating, for two times, a data symbol structure of the PHY payload field in a case in which the data rate of the PHY payload field in FIG. 6b is the second rate. For example, when LDPC is not used for the PHY payload field, a symbol structure of the second PHR information in a case in which the data rate of the second PHR information is the ninth rate is the same as a data symbol structure of the PHY payload field in a case in which the data rate of the PHY payload field in FIG. 6b is the second rate. For example, when LDPC is used for the PHY payload field, a symbol structure of the second PHR information in a case in which the data rate of the second PHR information is the tenth rate is obtained by repeating, for two times, a data symbol structure of the PHY payload field in a case in which the data rate of the PHY payload field in FIG. 6c is the third rate. For example, when LDPC is not used for the PHY payload field, a symbol structure of the second PHR information in a case in which the data rate of the second PHR information is the eleventh rate is the same as a data symbol structure of the PHY payload field in a case in which the data rate of the PHY payload field in FIG. 6c is the third rate. For example, a symbol structure of the second PHR information in a case in which the data rate of the second PHR information is the twelfth rate is obtained by repeating, for two times, a data symbol structure of the PHY payload field in a case in which the data rate of the PHY payload field in FIG. 6d is the fourth rate. For example, a symbol structure of the second PHR information in a case in which the data rate of the second PHR information is the thirteenth rate is obtained by repeating, for two times, a data symbol structure of the PHY payload field in a case in which the data rate of the PHY payload field in FIG. 6e is the fifth rate.

Table 5d

| Value of first PHR information (3 bits) | Value of a joint indication bit (1 bit) in second PHR information | Data rate (Mbps) of the second PHR information | Data rate of a PHY payload field/PHY payload data rate (Mbps) | Whether LDPC is used |
|---|---|---|---|---|
| 000 | 0 | 0.65 (sixth rate) | Reserved/Reserved | Reserved |
| | 1 | | 1.95 (first rate) | Yes/Yes |
| 001 | 0 | 1.95 (seventh rate) | 1.95 (first rate) | No/No |
| | 1 | | Reserved | Reserved |
| 010 | 0 | 2.6 (eighth rate) | Reserved | Reserved |
| | 1 | | 7.8 (second rate) | Yes |
| 011 | 0 | 7.8 (ninth rate) | 7.8 (second rate) | No |
| | 1 | | Reserved | Reserved |
| 100 | 0 | 10.4 (tenth rate) | Reserved | Reserved |
| | 1 | | 31.2 (third rate) | Yes |
| 101 | 0 | 31.2 (eleventh rate) | 31.2 (third rate) | No |
| | 1 | | Reserved | Reserved |
| 110 | 0 | 20.8 (twelfth rate) | 62.4 (fourth rate) | No |
| | 1 | | 62.4 (fourth rate) | Yes |
| 111 | 0 | 41.6 (thirteenth rate) | 124.8 (fifth rate) | No |
| | 1 | | 124.8 (fifth rate) | Yes |

Optionally, in Table 5d, when LDPC is not used for the PHY payload field, a symbol structure of the second PHR information is the same as (or is obtained by repeating for several times) a data symbol structure of the PHY payload field corresponding to the second PHR information, or when LDPC is used for the PHY payload field, a symbol structure of the second PHR information is obtained by repeating, for three times, a data symbol structure of the PHY payload field corresponding to the second PHR information. For example, when LDPC is used for the PHY payload field, a symbol structure of the second PHR information in a case in which the data rate of the second PHR information is the sixth rate is obtained by repeating, for three times, a data symbol structure of the PHY payload field in a case in which the data rate of the PHY payload field in FIG. 6a is the first rate. For example, when LDPC is not used for the PHY payload field, a symbol structure of the second PHR information in a case in which the data rate of the second PHR information is the seventh rate is the same as a data symbol structure of the PHY payload field in a case in which the data rate of the PHY payload field in FIG. 6a is the first rate. For example, when LDPC is used for the PHY payload field, a symbol structure of the second PHR information in a case in which the data rate of the second PHR information is the eighth rate is obtained by repeating, for three times, a data symbol structure of the PHY payload field in a case in which the data rate of the PHY payload field in FIG. 6b is the second rate. For example, when LDPC is not used for the PHY payload field, a symbol structure of the second PHR information in a case in which the data rate of the second PHR information is the ninth rate is the same as a data symbol structure of the PHY payload field in a case in which the data rate of the PHY payload field in FIG. 6b is the second rate. For example, when LDPC is used for the PHY payload field, a symbol structure of the second PHR information in a case in which the data rate of the second PHR information is the tenth rate is obtained by repeating, for three times, a data symbol structure of the PHY payload field in a case in which the data rate of the PHY payload field in FIG. 6c is the third rate. For example, when LDPC is not used for the PHY payload field, a symbol structure of the second PHR information in a case in which the data rate of the second PHR information is the eleventh rate is the same as a data symbol structure of the PHY payload field in a case in which the data rate of the PHY payload field in FIG. 6c is the third rate. For example, a symbol structure of the second PHR information in a case in which the data rate of the second PHR information is the twelfth rate is obtained by repeating, for three times, a data symbol structure of the PHY payload field in a case in which the data rate of the PHY payload field in FIG. 6d is the fourth rate. For example, a symbol structure of the second PHR information in a case in which the data rate of the second PHR information is the thirteenth rate is obtained by repeating, for three times, a data symbol structure of the PHY payload field in a case in which the data rate of the PHY payload field in FIG. 6e is the fifth rate.

It may be understood that, in Table 5a to Table 5d, the first PHR information indicates the data rate of the second PHR information and the data rate of the PHY payload field, and the second PHR information indicates whether the PHY payload field is encoded by using LDPC. It may be further understood that, in actual application, the data rate of the second PHR information may be any combination of Table 5a to Table 5d. For example, the sixth rate and the seventh rate are rates in Table 5b; the eighth rate, the ninth rate, and the tenth rate are rates in Table 5c; and the eleventh rate, the twelfth rate, and the thirteenth rate are rates in Table 5d.

It may be further understood that mapping relationships in Table 5a to Table 5d are merely examples. In actual application, there may be different mapping relationships. Examples are not enumerated herein.

In some scenarios, the first PHR information in Table 5a to Table 5d may be the 3 bits R0, R1, and R2 mentioned above, and the joint indication bit in the second PHR information may be the 1 bit of the LDPC indication (namely, L) mentioned above. In some scenarios, last columns "whether LDPC is used" in Table 5a to Table 5d may be understood as whether LDPC is enabled. When LDPC is enabled (LDPC enabled), it indicates that LDPC is used; or when LDPC is disabled (LDPC disabled), it indicates that LDPC is not used.

It may be understood that, in Table 1 to Table 5d, a mapping relationship between bits that indicate a rate (including the data rate of the PHY payload field and the data rate of the second PHR information) and whether LDPC is used (that is, first columns and second columns in Table 1 to Table 5d), and the data rate of the second PHR information (that is, third columns in Table 1 to Table 5d), the data rate of the PHY payload field (that is, fourth columns in Table 1 to Table 5d), and whether LDPC is used (that is, fifth columns in Table 1 to Table 5d) may be adjusted. This is not limited in this embodiment of this application.

In a possible implementation, the PPDU includes the PHR field and the PHY payload field, and the PHR field includes the first PHR information and the second PHR information. The length of the first PHR information is less than n bits, and the first PHR information may indicate the data rate of the PHY payload field. In addition, a codeword corresponding to the first PHR information may indicate the data rate of the second PHR information and whether the PHY payload field is encoded by using LDPC. It may be understood that the codeword corresponding to the first PHR information may be a codeword obtained by encoding the first PHR information.

For example, the length of the first PHR information is 3 bits. Table 5e shows an example of a mapping relationship between a value of the first PHR information and the codeword corresponding to the first PHR information, and the data rate of the second PHR information, the data rate of the PHY payload field, and whether LDPC is used.

Table 5e

| Value of first PHR information (3 bits) | Codeword corresponding to the first PHR information | Data rate (Mbps) of second PHR information | Data rate of a PHY payload field/PHY payload data rate (Mbps) | Whether LDPC is used |
|---|---|---|---|---|
| 000 | Codeword 1 | Second rate | 1.95 (first rate) | No |
| | Codeword 2 | Third rate | | Yes |
| 001 | Codeword 3 | Fifth rate | 7.8 (fourth rate) | No |
| | Codeword 4 | Sixth rate | | Yes |
| 010 | Codeword 5 | Eighth rate | 31.2 (seventh rate) | No |
| | Codeword 6 | Ninth rate | | Yes |
| 011 | Codeword 7 | Eleventh rate | 62.4 (tenth rate) | No |
| | Codeword 8 | Twelfth rate | | Yes |
| 100 | Codeword 9 | Fourteenth rate | 124.8 (thirteenth rate) | No |
| | Codeword 10 | Fifteenth rate | | Yes |
| 101 | Codeword 11 | Seventeenth rate | Sixteenth rate | No |
| | Codeword 12 | Eighteenth rate | | Yes |
| 110 | Codeword 13 | Twentieth rate | Nineteenth rate | No |
| | Codeword 14 | Twenty-first rate | | Yes |
| 111 | Codeword 15 | Twenty-third rate | Twenty-second rate | No |
| | Codeword 16 | Twenty-fourth rate | | Yes |

Optionally, in Table 5e, a symbol structure of the second PHR information may be obtained by repeating, for several times, a data symbol structure of the PHY payload field corresponding to the second PHR information. For example, symbol structures of the second PHR information in cases in which data rates of the second PHR information are the second rate and the third rate are obtained by repeating, for several times, a data symbol structure of the PHY payload field in a case in which the data rate of the PHY payload field is the first rate. It may be understood that, when the data rate of the second PHR information changes, a quantity of repetitions may change, or certainly may remain unchanged. For example, symbol structures of the second PHR information in cases in which data rates of the second PHR information are the fifth rate and the sixth rate are obtained by repeating, for several times, a data symbol structure of the PHY payload field in a case in which the data rate of the PHY payload field is the fourth rate. It may be understood that, when the data rate of the second PHR information changes, a quantity of repetitions may change, or certainly may remain unchanged. For example, symbol structures of the second PHR information in cases in which data rates of the second PHR information are the eighth rate and the ninth rate are obtained by repeating, for several times, a data symbol structure of the PHY payload field in a case in which the data rate of the PHY payload field is the seventh rate. It may be understood that, when the data rate of the second PHR information changes, a quantity of repetitions may change, or certainly may remain unchanged. For example, symbol structures of the second PHR information in cases in which data rates of the second PHR information are the eleventh rate and the twelfth rate are obtained by repeating, for several times, a data symbol structure of the PHY payload field in a case in which the data rate of the PHY payload field is the tenth rate. It may be understood that, when the data rate of the second PHR information changes, a quantity of repetitions may change, or certainly may remain unchanged. For example, symbol structures of the second PHR information in cases in which data rates of the second PHR information are the fourteenth rate and the fifteenth rate are obtained by repeating, for several times, a data symbol structure of the PHY payload field in a case in which the data rate of the PHY payload field is the thirteenth rate. It may be understood that, when the data rate of the second PHR information changes, a quantity of repetitions may change, or certainly may remain unchanged. For example, symbol structures of the second PHR information in cases in which data rates of the second PHR information are the seventeenth rate and the eighteenth rate are obtained by repeating, for several times, a data symbol structure of the PHY payload field in a case in which the data rate of the PHY payload field is the sixteenth rate. It may be understood that, when the data rate of the second PHR information changes, a quantity of repetitions may change, or certainly may remain unchanged. For example, symbol structures of the second PHR information in cases in which data rates of the second PHR information are the twentieth rate and the twenty-first rate are obtained by repeating, for several times, a data symbol structure of the PHY payload field in a case in which the data rate of the PHY payload field is the nineteenth rate. It may be understood that, when the data rate of the second PHR information changes, a quantity of repetitions may change, or certainly may remain unchanged. For example, symbol structures of the second PHR information in cases in which data rates of the second PHR information are the twenty-third rate and the twenty-fourth rate are obtained by repeating, for several times, a data symbol structure of the PHY payload field in a case in which the data rate of the PHY payload field is the twenty-second rate. It may be understood that, when the data rate of the second PHR information changes, a quantity of repetitions may change, or certainly may remain unchanged.

Table 5e is used as an example to briefly describe behavior of a transmit end (namely, the first communication apparatus) and a receive end (namely, the second communication apparatus). For example, the transmit end (namely, the first communication apparatus) knows a data rate at which the transmit end sends the second PHR information and a data rate at which the transmit end sends the PHY payload field, and also knows whether the PHY payload field is encoded by using LDPC. Therefore, the transmit end may determine, based on Table 5e, the data rate of the second PHR information, the data rate of the PHY payload field, and whether LDPC is used, the codeword corresponding to the first PHR information and the value of the first PHR information, and then send a signal. The receive end (namely, the second communication apparatus) may demodulate, based on the received signal, the codeword corresponding to the first PHR information, and then decode, based on a codebook or Table 5e, the codeword corresponding to the first PHR information, to obtain the value of the first PHR information. Then, the receive end determines the data rate of the second PHR information, the data rate of the PHY payload field, and whether LDPC is used based on Table 5e, the codeword corresponding to the first PHR information, and the value of the first PHR information.

It may be understood that, in Table 5e, the first PHR information indicates the data rate of the PHY payload field, and the codeword corresponding to the first PHR information indicates the data rate of the second PHR information, whether the PHY payload field is encoded by using LDPC, and the data rate of the PHY payload field. It may be further understood that, in actual application, the data rate of the second PHR information, the codeword corresponding to the first PHR information, and the data rate of the PHY payload field may be a part or all of content in Table 5e. This is not limited in this embodiment of this application.

It may be further understood that, in Table 5e, some rows in other columns except the value of the first PHR information (namely, the first column) may be reserved (reserved). In other words, the codeword corresponding to the first PHR information may be all or a part of content (the second column) shown in Table 5e. Similarly, the data rate of the second PHR information may be all or a part of content (the third column) shown in Table 5e, and the data rate of the PHY payload field may be all or a part of content (the fourth column) shown in Table 5e.

It may be further understood that the codeword 1 to the codeword 16 in Table 5e have a same length, for example, 22 bits. The codeword 1 to the codeword 16 in Table 5e may be codewords or a subset thereof shown in Embodiment 2 below. This is not limited in this embodiment of this application. For example, codewords (namely, the second column) in Table 5e may be some or all codewords shown in the following Table 10.

It may be understood that, in Table 5e, the first PHR information and the codeword corresponding to the first PHR information (for example, the codeword obtained by encoding the first PHR information) may indicate the data rate of the second PHR information, the data rate of the PHY payload field, and whether the PHY payload field is encoded by using LDPC. In actual application, the PPDU may not include the first PHR information, but directly include the codeword corresponding to the first PHR information, and the codeword corresponding to the first PHR information indicates the data rate of the second PHR information, the data rate of the PHY payload field, and whether the PHY payload field is encoded by using LDPC. Details are shown in the following Table 5f.

In another possible implementation, the PPDU includes the codeword corresponding to the first PHR information, the second PHR information, and the PHY payload field. The codeword corresponding to the first PHR information may indicate the data rate of the second PHR information, the data rate of the PHY payload field, and whether the PHY payload field is encoded by using LDPC.

For example, the following Table 5f shows an example of a mapping relationship between the codeword corresponding to the first PHR information, and the data rate of the second PHR information, the data rate of the PHY payload field, and whether LDPC is used.

Table 5f

| Codeword corresponding to first PHR information | Data rate (Mbps) of second PHR information | Data rate of a PHY payload field/PHY payload data rate (Mbps) | Whether LDPC is used |
|---|---|---|---|
| Codeword 1 | Second rate | First rate | No |
| Codeword 2 | Fourth rate | Third rate | Yes |
| Codeword 3 | Sixth rate | Fifth rate | No |
| Codeword 4 | Eighth rate | Seventh rate | Yes |
| Codeword 5 | Tenth rate | Ninth rate | No |
| Codeword 6 | Twelfth rate | Eleventh rate | Yes |
| Codeword 7 | Fourteenth rate | Thirteenth rate | No |
| Codeword 8 | Sixteenth rate | Fifteenth rate | Yes |
| Codeword 9 | Eighteenth rate | Seventeenth rate | No |
| Codeword 10 | Twentieth rate | Nineteenth rate | Yes |
| Codeword 11 | Twenty-second rate | Twenty-first rate | No |
| Codeword 12 | Twenty-fourth rate | Twenty-third rate | Yes |
| Codeword 13 | Twenty-sixth rate | Twenty-fifth rate | No |
| Codeword 14 | Twenty-eighth rate | Twenty-seventh rate | Yes |
| Codeword 15 | Thirtieth rate | Twenty-ninth rate | No |
| Codeword 16 | Thirty-second rate | Thirty-first rate | Yes |

Optionally, in Table 5f, a symbol structure of the second PHR information in a case in which the data rate of the second PHR information is an $(N+1)^{th}$ rate is obtained by repeating, for several times, a data symbol structure of the PHY payload field in a case in which the data rate of the PHY payload field is an $N^{th}$ rate. Examples are not enumerated herein. For example, a quantity of repetitions herein may be 1, 2, 3, 4, or more. A specific quantity of repetitions is not limited in this embodiment of this application.

It may be understood that some parts in Table 5f may be reserved (reserved), or in actual application, some rows in Table 5f may be included in the mapping relationship between the codeword corresponding to the first PHR information, and the data rate of the second PHR information, the data rate of the PHY payload field, and whether LDPC is used.

It may be further understood that the codeword 1 to the codeword 16 in Table 5f have a same length, for example, 22 bits. The codeword 1 to the codeword 16 in Table 5f may be codewords or a subset thereof shown in Embodiment 2 below. This is not limited in this embodiment of this application. For example, codewords (namely, a first column) in Table 5f may be some or all codewords shown in the following Table 10.

It may be further understood that mapping relationships in Table 5e and Table 5f are merely examples, and may be adjusted in actual application. In other words, there may be different mapping relationships in actual application. Examples are not enumerated herein.

In some scenarios, last columns "whether LDPC is used" in Table 5e and Table 5f may be understood as whether LDPC is enabled. When LDPC is enabled (LDPC enabled), it indicates that LDPC is used; or when LDPC is disabled (LDPC disabled), it indicates that LDPC is not used.

It may be understood that, in actual application, Table 5e and Table 5f may be used in combination. This is not limited in this embodiment of this application.

In some possible implementations, when sending the PPDU, the first communication apparatus may first encode the PPDU, and then modulate a codeword obtained through encoding into a UWB pulse (namely, a signal) for sending. The encoding herein may include convolutional code, LDPC, specific codebook, repetition code, and the like. It may be understood that different fields in the PPDU may be encoded in different coding schemes. For example, the PHY payload field in the PPDU is encoded by using LDPC or a convolutional code, and the SFD field in the PPDU is mapped and encoded by using a codebook. For another example, the first PHR information in the PPDU is mapped and encoded by using a codebook, and the second PHR information in the PPDU is encoded by using a convolutional code (namely, a BCC). This embodiment of this application mainly focuses on a coding scheme of the first PHR information. In this case, that the first communication apparatus sends the PPDU may include: The first communication apparatus sends the codeword (codeword) obtained by encoding the first PHR information. Correspondingly, that the second communication apparatus receives the PPDU may include: The second communication apparatus receives the codeword obtained by encoding the first PHR information.

Optionally, the codeword obtained by encoding the first PHR information may be obtained by performing one or more of the following operations on the first PHR information: adding an all-zero tail bit, convolutional coding, or repeating for one or more times. It may be understood that a sequence of the one or more operations is not limited in this embodiment of this application. For example, the first PHR information may be repeated for several times to obtain a codeword; after the first PHR information is repeated for several times, an all-zero tail bit of a specific length is added to the first PHR information, and then convolutional coding is performed on the first PHR information to obtain a codeword; after an all-zero tail bit of a specific length is added to the first PHR information, convolutional coding is performed on the first PHR information to obtain a codeword; after an all-zero tail bit of a specific length is added to the first PHR information, convolutional coding is performed on the first PHR information to obtain a codeword, and the codeword is repeated for several times to obtain a codeword; or the like.

In some scenarios, when the length of the first PHR information is 2 bits, a codeword of the first PHR information may be generated in any one of the following manners: Manner 1: The 2 bits of the first PHR information are repeated for several times, to obtain one codeword. Manner 2: The 2 bits of the first PHR information are repeated for several times to form 4 bits, then six 0s are added as tail bits to form 10 bits, and then convolutional coding with a code rate of 0.5 is performed on the 10 bits, to finally obtain 20 bits as one codeword. Manner 3: Six 0s are added after the 2 bits of the first PHR information as tail bits, to obtain 8 bits, and then convolutional coding with a code rate of 0.5 is performed on the 8 bits, to finally obtain 16 bits as one codeword, or the foregoing operations are repeated for several times on the 16 bits to obtain one codeword.

In this embodiment of this application, the PHR field is redesigned, the 3 bits that are of the PHR field and that indicate the data rate of the PHY payload field and the 1 bit that is of the PHR field and that indicates whether LDPC is used are re-divided into the first PHR information and the second PHR information, the first PHR information indicates only the data rate of the second PHR information, and the first PHR information and some bits in the second PHR information jointly indicate the data rate of the PHY payload field and whether the PHY payload field is encoded by using LDPC. In this way, a quantity of bits of the first PHR information can be reduced, and even if convolutional coding is performed on the first PHR information, because the quantity of bits of the first PHR information is small, an actual code rate after coding is reduced, so that performance of the first PHR information can be improved, that is, demodulation performance of the PHR field can be improved, thereby improving data transmission reliability. In addition, transmission duration of the first PHR information can be controlled, thereby reducing interference to another wireless device or another wireless communication technology.

Optionally, the codeword obtained by encoding the first PHR information may alternatively be determined based on a codeword that is in a codebook and that is mapped to a value of the first PHR information. For example, the codeword obtained by encoding the first PHR information is the codeword that is in the codebook and that is mapped to the value of the first PHR information, or the codeword obtained by encoding the first PHR information is obtained by repeating, for one or more times, the codeword that is in the codebook and that is mapped to the value of the first PHR information. The codebook herein may be generated based on a Hadamard (Hadamard) matrix. For example, a Hamming distance between two codewords in the codebook is greater than or equal to an upper limit value of a theoretical minimum Hamming distance of the codebook, and when the Hamming distance between the two codewords in the codebook is equal to the upper limit value of the theoretical minimum Hamming distance of the codebook, the Hamming distance between the codewords is increased, so that a bit error rate can be reduced, and encoding performance can be improved. Certainly, a Hamming distance between two codewords in the codebook may alternatively be less than the upper limit value of the theoretical minimum Hamming distance of the codebook. This is not limited in this embodiment of this application. One value of the first PHR information is mapped (mapping) to one codeword in the codebook. In this case, it is assumed that the length of the first PHR information is m bits, and the codebook includes at least $2^m$ codewords. For example, when the length of the first PHR information is m bits, a codeword in the codebook may be generated based on a Hadamard matrix of an order $2^m$, where m is a positive integer. For a codebook generation manner and specific content of codewords in the codebook, refer to the following descriptions. Details are not described herein.

For example, the codebook may be predefined, pre-negotiated, or pre-configured. "Being predefined" in this application may be understood as "being defined", "being defined in advance", "being preset", "being stored", "being pre-stored", "being pre-negotiated", "being pre-configured", "being solidified", "being pre-burned", or the like.

It may be understood that a Hamming distance (Hamming distance) is used in data transmission error control coding, and indicates a quantity of different characters at corresponding locations of two (same-length) character strings. d(x, y) represents a Hamming distance between two character strings x and y. An XOR operation is performed on the two character strings, and a quantity of 1s in results is counted. The counted quantity of 1s in the results is the Hamming distance.

For example, the upper limit value of the theoretical minimum Hamming distance of the codebook satisfies the following formula (1-1):

$$d_{\min\_up} = \left\lfloor \frac{NL}{2(N-1)} \right\rfloor \quad (1\text{-}1)$$

$d_{\min\_up}$ represents the upper limit value of the theoretical minimum Hamming distance of the codebook, N represents a quantity of codewords in the codebook, and L represents a length of a codeword in the codebook. The symbol $\lfloor \ \rfloor$ represents rounding down. A same symbol below represents a same meaning. Details are not described again.

Optionally, the length of the codeword in the codebook may be an even quantity of bits. For example, the length of the codeword in the codebook may be equal to 26 bits.

The following uses an example to describe the codebook and the codebook generation manner provided in this embodiment of this application.

For example, a possible codebook generation manner is as follows.

It is assumed that K represents a length of a codeword in the codebook, and that m is a bit length of the first PHR information, where m is an integer greater than or equal to 1.

Step 1: Select a Hadamard (Hadamard) matrix A of an order $2^m$, where elements in a first column of A are the same. It is assumed that H represents a second column to a $(2^m)^{th}$ column of the Hadamard matrix A, and the matrix H has $2^m$ rows and $(2^m$-1) columns (that is, $2^m \times (2^m$-1)). It may be understood that a standard Hadamard matrix is a square matrix that is of an order $2^m$ and that includes elements +1 and -1, and a product of the standard Hadamard matrix and a transpose of the standard Hadamard matrix is an identity matrix. However, for example, because binary data is considered in this embodiment of this application, in the standard Hadamard matrix, the element +1 is mapped to 1, and the element -1 is mapped to 0, to obtain the matrix A. Alternatively, in the Hadamard matrix, the element +1 is mapped to 0, and the element -1 is mapped to 1, to obtain the matrix A. This is not limited in this application. The same applies to the following. Details are not described again. Herein, $A*A'=2^m I$, where A' herein is the transpose of A, and I is an identity matrix. The symbol "*" in this specification represents a "multiplying" or "multiplication" operation.

Step 2: Repeat H for $\left\lfloor \frac{K}{(2^m - 1)} \right\rfloor$ times, where the symbol $\lfloor \ \rfloor$ represents rounding down.

Step 3: Set T=mod(K, ($2^m$-1)), where mod represents a modulo operation; and if T is an even number, select T columns from the matrix H; or if T is an odd number, select T columns from the matrix A.

Step 4: Combine a result of step 2 and a result of step 3 by column, to form a codebook that includes $2^m$ codewords and in which each codeword has a length of K bits.

The codebook generated in the foregoing manner meets the following condition: A Hamming distance between two codewords in the codebook is greater than or equal to the upper limit value of the theoretical minimum Hamming distance of the codebook. When the Hamming distance between the two codewords in the codebook is equal to the upper limit value of the theoretical minimum Hamming distance of the codebook, the Hamming distance between the codewords is increased, so that a bit error rate can be reduced, and coding performance can be improved. Certainly, a Hamming distance between two codewords in the codebook may alternatively be less than the upper limit value of the theoretical minimum Hamming distance of the codebook. This is not limited in this embodiment of this application. The upper limit value of the theoretical minimum Hamming distance of the codebook satisfies the foregoing formula (1-1). Details are not described herein again.

It may be understood that, when the length of the first PHR information is 1 bit, that is, m is equal to 1, a Hadamard matrix of an order 2 is selected in step 1, H is a second column, H is repeated for K times in step 2, T is equal to mod(K, 1) in step 3, and a quantity of codewords in the codebook obtained in step 4 is 2.

When the length of the first PHR information is 2 bits, that is, m is equal to 2, a Hadamard matrix of an order 4 is selected in step 1, H is a second column to a fourth column, H is repeated for $\left\lfloor \dfrac{K}{3} \right\rfloor$ times in step 2, T is equal to mod(K, 3) in step 3, and a quantity of codewords in the codebook obtained in step 4 is 4. When the length of the first PHR information is 3 bits, that is, m is equal to 3, a Hadamard matrix of an order 8 is selected in step 1, H is a second column to an eighth column, H is repeated for $\left\lfloor \dfrac{K}{7} \right\rfloor$ times in step 2, T is equal to mod(K, 7) in step 3, and a quantity of codewords in the codebook obtained in step 4 is 8.

It may be further understood that, in the foregoing steps (step 1 to step 4), different Hadamard matrices are used, and different codebooks may be constructed. However, minimum Hamming distances of the different codebooks remain unchanged. It may be further understood that another codebook may be obtained by performing operations such as column switching, row switching, or bitwise inversion (which means that an element 0 is inverted to an element 1, and an element 1 is inverted to an element 0) on the original codebook obtained in the foregoing step 4, and the another codebook has same Hamming distance distribution as the original codebook obtained in step 4.

Optionally, the codeword obtained by encoding the first PHR information may be a codeword in the codebook generated in the foregoing manner. A codebook used for encoding the first PHR information may include all or some codewords in the codebook generated in the foregoing manner.

For example, when the length of the first PHR information is 2 bits, that is, m is equal to 2, all or some codebooks obtained in the foregoing codebook generation manner are shown in the following Table 6. The following Table 6 shows possible codebooks in a case in which K is set to different values.

Table 6

| Codeword length K | Value of first PHR information (2 bits) | Codeword |
|---|---|---|
| 16 | 00 | 0 0 0 0 0 0 0 0 0 0 0 0 0 0 0 0 |
|  | 01 | 1 1 1 1 1 0 0 0 0 0 0 0 1 1 1 1 1 |
|  | 10 | 1 1 1 1 1 1 1 1 1 1 1 0 0 0 0 0 |
|  | 11 | 0 0 0 0 0 1 1 1 1 1 1 1 1 1 1 1 |
| 18 | 00 | 0 0 0 0 0 0 0 0 0 0 0 0 0 0 0 0 0 0 |
|  | 01 | 1 1 1 1 1 1 0 0 0 0 0 0 1 1 1 1 1 1 |
|  | 10 | 1 1 1 1 1 1 1 1 1 1 1 1 0 0 0 0 0 0 |
|  | 11 | 0 0 0 0 0 0 1 1 1 1 1 1 1 1 1 1 1 1 |
| 20 | 00 | 0 0 0 0 0 0 0 0 0 0 0 0 0 0 0 0 0 0 0 0 |
|  | 01 | 1 1 1 1 1 1 1 0 0 0 0 0 0 1 1 1 1 1 1 1 |
|  | 10 | 1 1 1 1 1 1 1 1 1 1 1 1 1 0 0 0 0 0 0 0 |
|  | 11 | 0 0 0 0 0 0 0 1 1 1 1 1 1 1 1 1 1 1 1 1 |
| 22 | 00 | 1 1 1 1 1 1 1 1 1 1 1 1 1 1 1 1 1 1 1 1 1 1 |
|  | 01 | 0 1 0 0 1 0 0 1 0 0 1 0 0 1 0 0 1 0 0 1 0 0 |
|  | 10 | 1 0 0 1 0 0 1 0 0 1 0 0 1 0 0 1 0 0 1 0 0 1 |
|  | 11 | 0 0 1 0 0 1 0 0 1 0 0 1 0 0 1 0 0 1 0 0 1 0 |

(continued)

| Codeword length K | Value of first PHR information (2 bits) | Codeword |
|---|---|---|
| 24 | 00 | 1 1 1 1 1 1 1 1 1 1 1 1 1 1 1 1 1 1 1 1 1 1 1 1 |
| | 01 | 0 1 0 0 1 0 0 1 0 0 1 0 0 1 0 0 1 0 0 1 0 0 1 0 |
| | 10 | 1 0 0 1 0 0 1 0 0 1 0 0 1 0 0 1 0 0 1 0 0 1 0 0 |
| | 11 | 0 0 1 0 0 1 0 0 1 0 0 1 0 0 1 0 0 1 0 0 1 0 0 1 |
| 26 | 00 | 1 1 1 1 1 1 1 1 1 1 1 1 1 1 1 1 1 1 1 1 1 1 1 1 1 1 |
| | 01 | 0 1 0 0 1 0 0 1 0 0 1 0 0 1 0 0 1 0 0 1 0 0 1 0 0 1 |
| | 10 | 1 0 0 1 0 0 1 0 0 1 0 0 1 0 0 1 0 0 1 0 0 1 0 0 1 0 |
| | 11 | 0 0 1 0 0 1 0 0 1 0 0 1 0 0 1 0 0 1 0 0 1 0 0 1 0 0 |
| 28 | 00 | 1 1 1 1 1 1 1 1 1 1 1 1 1 1 1 1 1 1 1 1 1 1 1 1 1 1 1 1 |
| | 01 | 0 1 0 0 1 0 0 1 0 0 1 0 0 1 0 0 1 0 0 1 0 0 1 0 0 1 0 0 |
| | 10 | 1 0 0 1 0 0 1 0 0 1 0 0 1 0 0 1 0 0 1 0 0 1 0 0 1 0 0 1 |
| | 11 | 0 0 1 0 0 1 0 0 1 0 0 1 0 0 1 0 0 1 0 0 1 0 0 1 0 0 1 0 |
| 30 | 00 | 1 1 1 1 1 1 1 1 1 1 1 1 1 1 1 1 1 1 1 1 1 1 1 1 1 1 1 1 1 1 |
| | 01 | 0 1 0 0 1 0 0 1 0 0 1 0 0 1 0 0 1 0 0 1 0 0 1 0 0 1 0 0 1 0 |
| | 10 | 1 0 0 1 0 0 1 0 0 1 0 0 1 0 0 1 0 0 1 0 0 1 0 0 1 0 0 1 0 0 |
| | 11 | 0 0 1 0 0 1 0 0 1 0 0 1 0 0 1 0 0 1 0 0 1 0 0 1 0 0 1 0 0 1 |

In some scenarios, the first PHR information in Table 6 may be the 2 bits R0 and R1 mentioned above.

For another example, when the length of the first PHR information is 3 bits, that is, m is equal to 3, all or some codebooks obtained in the foregoing codebook generation manner are shown in the following Table 7. The following Table 7 shows possible codebooks in a case in which K is set to different values.

Table 7

| Codeword length K | Value of first PHR information (3 bits) | Codeword |
|---|---|---|
| 16 | 000 | 0 0 0 0 0 0 0 0 0 0 0 0 0 0 0 0 |
| | 001 | 1 0 0 1 0 1 1 0 0 1 1 0 1 0 0 1 |
| | 010 | 1 1 0 0 0 0 1 1 0 0 1 1 1 1 0 0 |
| | 011 | 0 1 0 1 0 1 0 1 0 1 0 1 0 1 0 1 |
| | 100 | 0 1 1 0 0 1 1 0 0 1 1 0 0 1 1 0 |
| | 101 | 1 1 1 1 0 0 0 0 0 0 0 0 1 1 1 1 |
| | 110 | 1 0 1 0 0 1 0 1 0 1 0 1 1 0 1 0 |
| | 111 | 0 0 1 1 0 0 1 1 0 0 1 1 0 0 1 1 |

(continued)

| Codeword length K | Value of first PHR information (3 bits) | Codeword |
|---|---|---|
| 18 | 000 | 0 0 0 0 0 0 0 0 0 0 0 0 0 0 0 0 0 0 |
| | 001 | 1 0 0 1 1 0 0 0 0 1 1 0 0 1 1 1 1 1 |
| | 010 | 1 1 0 1 1 1 1 0 0 0 0 1 1 1 1 0 0 0 |
| | 011 | 0 1 0 0 0 1 1 0 0 1 1 1 1 0 0 1 1 1 |
| | 100 | 0 1 1 0 0 1 1 1 1 0 0 0 0 1 1 1 1 0 |
| | 101 | 1 1 1 1 1 1 1 1 1 1 0 0 0 0 0 0 0 1 |
| | 110 | 1 0 1 1 1 0 0 1 1 0 0 1 1 0 0 1 1 0 |
| | 111 | 0 0 1 0 0 0 0 1 1 1 1 1 1 1 1 0 0 1 |
| 20 | 000 | 0 0 0 0 0 0 0 0 0 0 0 0 0 0 0 0 0 0 0 0 |
| | 001 | 1 0 0 1 0 1 1 1 0 0 0 0 1 1 0 0 1 1 1 1 |
| | 010 | 1 1 0 0 1 1 1 1 1 1 0 0 0 0 1 1 1 1 0 0 |
| | 011 | 0 1 0 1 1 0 0 0 1 1 0 0 1 1 1 1 0 0 1 1 |
| | 100 | 0 1 1 0 0 1 0 0 1 1 1 1 0 0 0 0 1 1 1 1 |
| | 101 | 1 1 1 1 0 0 1 1 1 1 1 1 1 1 0 0 0 0 0 0 |
| | 110 | 1 0 1 0 1 0 1 1 0 0 1 1 0 0 1 1 0 0 1 1 |
| | 111 | 0 0 1 1 1 1 0 0 0 0 1 1 1 1 1 1 1 1 0 0 |
| 22 | 000 | 1 1 1 1 1 1 1 1 1 1 1 1 1 1 1 1 1 1 1 1 1 1 |
| | 001 | 0 1 0 1 0 1 0 0 1 0 1 0 1 0 0 1 0 1 0 1 0 0 |
| | 010 | 1 0 0 1 1 0 0 1 0 0 1 1 0 0 1 0 0 1 1 0 0 1 |
| | 011 | 0 0 1 1 0 0 1 0 0 1 1 0 0 1 0 0 1 1 0 0 1 0 |
| | 100 | 1 1 1 0 0 0 0 1 1 1 0 0 0 0 1 1 1 0 0 0 0 1 |
| | 101 | 0 1 0 0 1 0 1 0 1 0 0 1 0 1 0 1 0 0 1 0 1 0 |
| | 110 | 1 0 0 0 0 1 1 1 0 0 0 0 1 1 1 0 0 0 0 1 1 1 |
| | 111 | 0 0 1 0 1 1 0 0 0 1 0 1 1 0 0 0 1 0 1 1 0 0 |
| 24 | 000 | 1 1 1 1 1 1 1 1 1 1 1 1 1 1 1 1 1 1 1 1 1 1 1 1 |
| | 001 | 0 1 0 1 0 1 0 0 1 0 1 0 1 0 0 1 0 1 0 1 0 0 1 0 |
| | 010 | 1 0 0 1 1 0 0 1 0 0 1 1 0 0 1 0 0 1 1 0 0 1 0 0 |
| | 011 | 0 0 1 1 0 0 1 0 0 1 1 0 0 1 0 0 1 1 0 0 1 0 0 1 |
| | 100 | 1 1 1 0 0 0 0 1 1 1 0 0 0 0 1 1 1 0 0 0 0 1 1 1 |
| | 101 | 0 1 0 0 1 0 1 0 1 0 0 1 0 1 0 1 0 0 1 0 1 0 1 0 |
| | 110 | 1 0 0 0 0 1 1 1 0 0 0 0 1 1 1 0 0 0 0 1 1 1 0 0 |
| | 111 | 0 0 1 0 1 1 0 0 0 1 0 1 1 0 0 0 1 0 1 1 0 0 0 1 |

(continued)

| Codeword length K | Value of first PHR information (3 bits) | Codeword |
|---|---|---|
| 26 | 000 | 1 1 1 1 1 1 1 1 1 1 1 1 1 1 1 1 1 1 1 1 1 1 1 1 1 1 |
| | 001 | 0 1 0 1 0 1 0 0 1 0 1 0 1 0 0 1 0 1 0 1 0 0 1 0 1 0 |
| | 010 | 1 0 0 1 1 0 0 1 0 0 1 1 0 0 1 0 0 1 1 0 0 1 0 0 1 1 |
| | 011 | 0 0 1 1 0 0 1 0 0 1 1 0 0 1 0 0 1 1 0 0 1 0 0 1 1 0 |
| | 100 | 1 1 1 0 0 0 0 1 1 1 0 0 0 0 1 1 1 0 0 0 0 1 1 1 0 0 |
| | 101 | 0 1 0 0 1 0 1 0 1 0 0 1 0 1 0 1 0 0 1 0 1 0 1 0 0 1 |
| | 110 | 1 0 0 0 0 1 1 1 0 0 0 0 1 1 1 0 0 0 0 1 1 1 0 0 0 0 |
| | 111 | 0 0 1 0 1 1 0 0 0 1 0 1 1 0 0 0 1 0 1 1 0 0 0 1 0 1 |
| 28 | 000 | 1 1 1 1 1 1 1 1 1 1 1 1 1 1 1 1 1 1 1 1 1 1 1 1 1 1 1 1 |
| | 001 | 0 1 0 1 0 1 0 0 1 0 1 0 1 0 0 1 0 1 0 1 0 0 1 0 1 0 1 0 |
| | 010 | 1 0 0 1 1 0 0 1 0 0 1 1 0 0 1 0 0 1 1 0 0 1 0 0 1 1 0 0 |
| | 011 | 0 0 1 1 0 0 1 0 0 1 1 0 0 1 0 0 1 1 0 0 1 0 0 1 1 0 0 1 |
| | 100 | 1 1 1 0 0 0 0 1 1 1 0 0 0 0 1 1 1 0 0 0 0 1 1 1 0 0 0 0 |
| | 101 | 0 1 0 0 1 0 1 0 1 0 0 1 0 1 0 1 0 0 1 0 1 0 1 0 0 1 0 1 |
| | 110 | 1 0 0 0 0 1 1 1 0 0 0 0 1 1 1 0 0 0 0 1 1 1 0 0 0 0 1 1 |
| | 111 | 0 0 1 0 1 1 0 0 0 1 0 1 1 0 0 0 1 0 1 1 0 0 0 1 0 1 1 0 |
| 30 | 000 | 1 1 1 1 1 1 1 1 1 1 1 1 1 1 1 1 1 1 1 1 1 1 1 1 1 1 1 1 1 1 |
| | 001 | 0 1 0 1 0 1 0 0 1 0 1 0 1 0 0 1 0 1 0 1 0 0 1 0 1 0 1 0 0 1 |
| | 010 | 1 0 0 1 1 0 0 1 0 0 1 1 0 0 1 0 0 1 1 0 0 1 0 0 1 1 0 0 1 0 |
| | 011 | 0 0 1 1 0 0 1 0 0 1 1 0 0 1 0 0 1 1 0 0 1 0 0 1 1 0 0 1 0 0 |
| | 100 | 1 1 1 0 0 0 0 1 1 1 0 0 0 0 1 1 1 0 0 0 0 1 1 1 0 0 0 0 1 1 |
| | 101 | 0 1 0 0 1 0 1 0 1 0 0 1 0 1 0 1 0 0 1 0 1 0 1 0 0 1 0 1 0 1 |
| | 110 | 1 0 0 0 0 1 1 1 0 0 0 0 1 1 1 0 0 0 0 1 1 1 0 0 0 0 1 1 1 0 |
| | 111 | 0 0 1 0 1 1 0 0 0 1 0 1 1 0 0 0 1 0 1 1 0 0 0 1 0 1 1 0 0 0 |
| 32 | 000 | 1 1 1 1 1 1 1 1 1 1 1 1 1 1 1 1 1 1 1 1 1 1 1 1 1 1 1 1 1 1 1 1 |
| | 001 | 0 1 0 1 0 1 0 0 1 0 1 0 1 0 0 1 0 1 0 1 0 0 1 0 1 0 1 0 0 1 0 1 |
| | 010 | 1 0 0 1 1 0 0 1 0 0 1 1 0 0 1 0 0 1 1 0 0 1 0 0 1 1 0 0 1 0 0 1 |
| | 011 | 0 0 1 1 0 0 1 0 0 1 1 0 0 1 0 0 1 1 0 0 1 0 0 1 1 0 0 1 0 0 1 1 |
| | 100 | 1 1 1 0 0 0 0 1 1 1 0 0 0 0 1 1 1 0 0 0 0 1 1 1 0 0 0 0 1 1 1 0 |
| | 101 | 0 1 0 0 1 0 1 0 1 0 0 1 0 1 0 1 0 0 1 0 1 0 1 0 0 1 0 1 0 1 0 0 |
| | 110 | 1 0 0 0 0 1 1 1 0 0 0 0 1 1 1 0 0 0 0 1 1 1 0 0 0 0 1 1 1 0 0 0 |
| | 111 | 0 0 1 0 1 1 0 0 0 1 0 1 1 0 0 0 1 0 1 1 0 0 0 1 0 1 1 0 0 0 1 0 |

(continued)

| Codeword length K | Value of first PHR information (3 bits) | Codeword |
|---|---|---|
| 34 | 000 | 1 1 1 1 1 1 1 1 1 1 1 1 1 1 1 1 1 1 1 1 1 1 1 1 1 1 1 1 1 1 1 1 1 1 |
| | 001 | 0 1 0 1 0 1 0 0 1 0 1 0 1 0 0 1 0 1 0 1 0 0 1 0 1 0 1 0 0 1 0 1 0 1 |
| | 010 | 1 0 0 1 1 0 0 1 0 0 1 1 0 0 1 0 0 1 1 0 0 1 0 0 1 1 0 0 1 0 0 1 1 0 |
| | 011 | 0 0 1 1 0 0 1 0 0 1 1 0 0 1 0 0 1 1 0 0 1 0 0 1 1 0 0 1 0 0 1 1 0 0 |
| | 100 | 1 1 1 0 0 0 0 1 1 1 0 0 0 0 1 1 1 0 0 0 0 1 1 1 0 0 0 0 1 1 1 0 0 0 |
| | 101 | 0 1 0 0 1 0 1 0 1 0 0 1 0 1 0 1 0 0 1 0 1 0 1 0 0 1 0 1 0 1 0 0 1 0 |
| | 110 | 1 0 0 0 0 1 1 1 0 0 0 0 1 1 1 0 0 0 0 1 1 1 0 0 0 0 1 1 1 0 0 0 0 1 |
| | 111 | 0 0 1 0 1 1 0 0 0 1 0 1 1 0 0 0 1 0 1 1 0 0 0 1 0 1 1 0 0 0 1 0 1 1 |
| 36 | 000 | 1 1 1 1 1 1 1 1 1 1 1 1 1 1 1 1 1 1 1 1 1 1 1 1 1 1 1 1 1 1 1 1 1 1 1 1 |
| | 001 | 0 1 0 1 0 1 0 0 1 0 1 0 1 0 0 1 0 1 0 1 0 0 1 0 1 0 1 0 0 1 0 1 0 1 0 0 |
| | 010 | 1 0 0 1 1 0 0 1 0 0 1 1 0 0 1 0 0 1 1 0 0 1 0 0 1 1 0 0 1 0 0 1 1 0 0 1 |
| | 011 | 0 0 1 1 0 0 1 0 0 1 1 0 0 1 0 0 1 1 0 0 1 0 0 1 1 0 0 1 0 0 1 1 0 0 1 0 |
| | 100 | 1 1 1 0 0 0 0 1 1 1 0 0 0 0 1 1 1 0 0 0 0 1 1 1 0 0 0 0 1 1 1 0 0 0 0 1 |
| | 101 | 0 1 0 0 1 0 1 0 1 0 0 1 0 1 0 1 0 0 1 0 1 0 1 0 0 1 0 1 0 1 0 0 1 0 1 0 |
| | 110 | 1 0 0 0 0 1 1 1 0 0 0 0 1 1 1 0 0 0 0 1 1 1 0 0 0 0 1 1 1 0 0 0 0 1 1 1 |
| | 111 | 0 0 1 0 1 1 0 0 0 1 0 1 1 0 0 0 1 0 1 1 0 0 0 1 0 1 1 0 0 0 1 0 1 1 0 0 |
| 38 | 000 | 1 1 1 1 1 1 1 1 1 1 1 1 1 1 1 1 1 1 1 1 1 1 1 1 1 1 1 1 1 1 1 1 1 1 1 1 1 1 |
| | 001 | 0 1 0 1 0 1 0 0 1 0 1 0 1 0 0 1 0 1 0 1 0 0 1 0 1 0 1 0 0 1 0 1 0 1 0 0 1 0 |
| | 010 | 1 0 0 1 1 0 0 1 0 0 1 1 0 0 1 0 0 1 1 0 0 1 0 0 1 1 0 0 1 0 0 1 1 0 0 1 0 0 |
| | 011 | 0 0 1 1 0 0 1 0 0 1 1 0 0 1 0 0 1 1 0 0 1 0 0 1 1 0 0 1 0 0 1 1 0 0 1 0 0 1 |
| | 100 | 1 1 1 0 0 0 0 1 1 1 0 0 0 0 1 1 1 0 0 0 0 1 1 1 0 0 0 0 1 1 1 0 0 0 0 1 1 1 |
| | 101 | 0 1 0 0 1 0 1 0 1 0 0 1 0 1 0 1 0 0 1 0 1 0 1 0 0 1 0 1 0 1 0 0 1 0 1 0 1 0 |
| | 110 | 1 0 0 0 0 1 1 1 0 0 0 0 1 1 1 0 0 0 0 1 1 1 0 0 0 0 1 1 1 0 0 0 0 1 1 1 0 0 |
| | 111 | 0 0 1 0 1 1 0 0 0 1 0 1 1 0 0 0 1 0 1 1 0 0 0 1 0 1 1 0 0 0 1 0 1 1 0 0 0 1 |

In some scenarios, the first PHR information in Table 7 may be the 3 bits R0, R1, and R2 mentioned above.

It may be understood that Table 6 and Table 7 are merely examples. In Table 6 and Table 7, a mapping relationship between a value of the first PHR information and a codeword is not fixed, provided that different values of the first PHR information are mapped to different codewords.

For another example, when the length of the first PHR information is 1 bit, another possible codebook generation manner is as follows: (1) Any binary sequence whose length is K is selected; and (2) an exclusive OR operation is performed on the sequence selected in step (1) and an all-1 sequence whose length is K, to obtain a new sequence. The sequences generated in step (1) and step (2) may also form a codebook whose quantity of codewords is 2.

In this embodiment of this application, the PHR field is redesigned, the 3 bits that are of the PHR field and that indicate the data rate of the PHY payload field and the 1 bit that is of the PHR field and that indicates whether LDPC is used are re-divided into the first PHR information and the second PHR information, the first PHR information indicates only the data rate of the second PHR information, and the first PHR information and some bits in the second PHR information jointly indicate the data rate of the PHY payload field and whether the PHY payload field is encoded by using LDPC. In this way, a quantity of bits of the first PHR information can be reduced, and a new codebook is designed to perform mapping and encoding on the first PHR information, so that performance of the first PHR information can be further improved, that is, demodulation performance of the PHR field can be improved, thereby improving data transmission reliability. In addition, transmission duration of the first PHR information can be further reduced, thereby improving data transmission efficiency, and reducing interference to another wireless device or another wireless communication technology.

To better describe beneficial effects that can be implemented in this embodiment of this application, the following uses packet error rate simulation and comparison of transmission duration as an example for description.

FIG. 7 is a diagram of a packet error rate simulation result according to an embodiment of this application. As shown in FIG. 7, a horizontal coordinate represents a signal-to-noise ratio (signal-to-noise ratio, SNR) in a unit of decibel (decibel, dB), and a vertical coordinate represents a packet error rate (packet error rate) of the first PHR information. It may be understood that, for schematic precision, FIG. 7 shows only some simulation results. To be specific, an SNR range represented by the horizontal coordinate is from -5 dB to 0 dB, and a packet error rate range represented by the vertical coordinate is from $10^{-4}$ to $10^{0}$. In FIG. 7, a 4-bit BCC indicates that convolutional coding is performed on 4 bits of the PHR1 (also referred to as a rate header). To be specific, convolutional coding is performed on the 4 bits that indicate the data rate of the PHY payload field and whether the PHY payload field is encoded by using LDPC. A 2-bit BCC indicates the foregoing manner 3. To be specific, the first PHR information is 2 bits, six 0s are added after the 2 bits of the first PHR information as tail bits, to obtain 8 bits, and then convolutional coding with a code rate of 0.5 is performed on the 8 bits. Repetition (Repetition) indicates the foregoing manner 1. To be specific, the first PHR information is 2 bits, and the 2 bits of the first PHR information are repeated for 10 times. Repetition and BCC indicates the foregoing manner 2. To be specific, the first PHR information is 2 bits, the 2 bits of the first PHR information are repeated for two times to form 4 bits, then six 0s are added as tail bits to form 10 bits, and then convolutional coding with a code rate of 0.5 is performed on the 10 bits. Length-16 mapping, length-18 mapping, and length-20 mapping respectively indicate that the first PHR information is mapped and encoded by using codebooks whose codeword lengths are 16, 18, and 20 in Table 6.

It can be learned from FIG. 7 that performance in this embodiment of this application is greatly improved compared with that in the conventional technology. For example, when the packet error rate is equal to 0.01 (namely, $10^{-2}$), an SNR of the 2-bit BCC is increased by more than 1.3 dB compared with an SNR of the 4-bit BCC.

The following further analyzes transmission duration of the first PHR information and the second PHR information.

In the conventional technology (that is, the 4-bit BCC), the PHR1 includes 4 bits: R0, R1, R2, and L, six all-zero tail bits are added, and then convolutional coding is performed to obtain 20 bits; and the PHR2 includes 12 bits that indicate the length of the PHY payload field, where 1 bit indicates whether to perform sensing, 2 bits are reserved, and 8 bits indicate a CRC code, then six all-zero tail bits are added, and convolutional coding is performed to obtain 58 bits. In the solution 2 in the conventional technology, the PHR1 (4 bits in total) is transmitted at a rate of 1.95 Mbps. When LDPC is used for the PHY payload field, it is assumed that a data rate of the PHR2 is 1/4 of the data rate of the PHY payload field; and when a BCC is used for the PHY payload field, it is assumed that a data rate of the PHR2 is the same as the data rate of the PHY payload field. In the solution 3 in the conventional technology, the PHR1 (4 bits in total) is transmitted at a rate of 0.975 Mbps. When LDPC is used for the PHY payload field, it is still assumed that a data rate of the PHR2 is 1/4 of the data rate of the PHY payload field; and when a BCC is used for the PHY payload field, it is still assumed that a data rate of the PHR2 is the same as the data rate of the PHY payload field.

However, in this embodiment of this application, for the repetition solution in FIG. 7, the first PHR information has 20 bits in total, and the second PHR information has 62 bits in total; for the repetition and BCC solution in FIG. 7, the first PHR information has 20 bits in total, and the second PHR information has 62 bits in total; for the 2-bit BCC solution in FIG. 7, the first PHR information has 16 bits in total, and the second PHR information has 62 bits in total; for the length-16 mapping solution in FIG. 7, the first PHR information has 16 bits in total, and the second PHR information has 62 bits in total; for the length-18 mapping solution in FIG. 7, the first PHR information has 18 bits in total, and the second PHR information has 62 bits in total; and for the length-20 mapping solution in FIG. 7, the first PHR information has 20 bits in total, and the second PHR information has 62 bits in total. In this embodiment of this application, when the first PHR information is transmitted at a rate of 1.95 Mbps, the data rate of the second PHR information is shown in Table 1.

Table 8 below shows comparison of transmission duration of the PHR field in different solutions.

Table 8

| Solution | Transmission duration (μs) of a PHR1 (4 bits in total) | Data rate (Mbps) of a PHR2 | | Transmission duration (μs) of the PHR2 (23 bits in total) | Total transmission duration of a PHR field |
|---|---|---|---|---|---|
| Solution 2 in a conventional technology (the PHR1 is transmitted at a rate of 1.95 Mbps) | 5 | Data rate of a PHY payload field: 1.95 Mbps, BCC | 1.95 | 14.5 | 19.5 |
| | | Data rate of the PHY payload field: 1.95 Mbps, LDPC | 0.4875 | 58 | 63 |
| | | Data rate of the PHY payload field: 7.8 Mbps, BCC | 7.8 | 3.62 | 8.62 |
| | | Data rate of the PHY payload field: 7.8 Mbps, LDPC | 1.95 | 14.5 | 19.5 |
| | | Data rate of the PHY payload field: 31.2 Mbps, BCC | 31.2 | 0.90 | 5.90 |
| | | Data rate of the PHY payload field: 31.2 Mbps, LDPC | 7.8 | 3.62 | 8.62 |
| | | Data rate of the PHY payload field: 62.4 Mbps, BCC | 62.4 | 0.45 | 5.45 |
| | | Data rate of the PHY payload field: 62.4 Mbps, LDPC | 15.6 | 1.81 | 6.81 |
| | | Data rate of the PHY payload field: 124.8 Mbps, BCC | 124.8 | 0.22 | 5.22 |
| | | Data rate of the PHY payload field: 124.8 Mbps, LDPC | 31.2 | 0.90 | 5.90 |

(continued)

| Solution | Transmission duration (μs) of a PHR1 (4 bits in total) | Data rate (Mbps) of a PHR2 | | Transmission duration (μs) of the PHR2 (23 bits in total) | Total transmission duration of a PHR field |
|---|---|---|---|---|---|
| Solution 3 in a conventional technology (the PHR1 is transmitted at a rate of 0.975 Mbps) | 10 | Data rate of the PHY payload field: 1.95 Mbps, BCC | 1.95 | 14.5 | 24.5 |
| | | Data rate of the PHY payload field: 1.95 Mbps, LDPC | 0.4875 | 58 | 68 |
| | | Data rate of the PHY payload field: 7.8 Mbps, BCC | 7.8 | 3.62 | 13.62 |
| | | Data rate of the PHY payload field: 7.8 Mbps, LDPC | 1.95 | 14.5 | 24.5 |
| | | Data rate of the PHY payload field: 31.2 Mbps, BCC | 31.2 | 0.90 | 20.90 |
| | | Data rate of the PHY payload field: 31.2 Mbps, LDPC | 7.8 | 3.62 | 13.62 |
| | | Data rate of the PHY payload field: 62.4 Mbps, BCC | 62.4 | 0.45 | 10.45 |
| | | Data rate of the PHY payload field: 62.4 Mbps, LDPC | 15.6 | 1.81 | 11.81 |
| | | Data rate of the PHY payload field: 124.8 Mbps, BCC | 124.8 | 0.22 | 10.22 |
| | | Data rate of the PHY payload field: 124.8 Mbps, LDPC | 31.2 | 0.90 | 10.90 |
| Solution | Transmission duration (μs) of a PHR1 (2 bits in total) | Data rate (Mbps) of a PHR2 | | Transmission duration (μs) of the PHR2 (25 bits in total) | Total transmission duration of a PHR field |

(continued)

| Solution | Transmission duration (μs) of a PHR1 (4 bits in total) | Data rate (Mbps) of a PHR2 | | Transmission duration (μs) of the PHR2 (23 bits in total) | Total transmission duration of a PHR field |
|---|---|---|---|---|---|
| 2-bit BCC and length-16 mapping | 4 | Data rate of a PHY payload field: 1.95 Mbps, BCC | 1.95 | 15.5 | 19.5 |
| | | Data rate of the PHY payload field: 1.95 Mbps, LDPC | 0.4875 | 62 | 66 |
| | | Data rate of the PHY payload field: 7.8 Mbps, BCC | 7.8 | 3.87 | 7.87 |
| | | Data rate of the PHY payload field: 7.8 Mbps, LDPC | 1.95 | 15.5 | 19.5 |
| | | Data rate of the PHY payload field: 31.2 Mbps, BCC | 7.8 | 3.87 | 7.87 |
| | | Data rate of the PHY payload field: 31.2 Mbps, LDPC | 7.8 | 3.87 | 7.87 |
| | | Data rate of the PHY payload field: 62.4 Mbps, BCC | 31.2 | 0.97 | 4.97 |
| | | Data rate of the PHY payload field: 62.4 Mbps, LDPC | 7.8 | 3.87 | 7.87 |
| | | Data rate of the PHY payload field: 124.8 Mbps, BCC | 31.2 | 0.97 | 4.97 |
| | | Data rate of the PHY payload field: 124.8 Mbps, LDPC | 31.2 | 0.97 | 4.97 |

(continued)

| Solution | Transmission duration (μs) of a PHR1 (4 bits in total) | Data rate (Mbps) of a PHR2 | | Transmission duration (μs) of the PHR2 (23 bits in total) | Total transmission duration of a PHR field |
|---|---|---|---|---|---|
| Length-18 mapping | 4.5 | Data rate of the PHY payload field: 1.95 Mbps, BCC | 1.95 | 15.5 | 20 |
| | | Data rate of the PHY payload field: 1.95 Mbps, LDPC | 0.4875 | 62 | 66.5 |
| | | Data rate of the PHY payload field: 7.8 Mbps, BCC | 7.8 | 3.87 | 8.37 |
| | | Data rate of the PHY payload field: 7.8 Mbps, LDPC | 1.95 | 15.5 | 20 |
| | | Data rate of the PHY payload field: 31.2 Mbps, BCC | 7.8 | 3.87 | 7.87 |
| | | Data rate of the PHY payload field: 31.2 Mbps, LDPC | 7.8 | 3.87 | 8.37 |
| | | Data rate of the PHY payload field: 62.4 Mbps, BCC | 31.2 | 0.97 | 5.47 |
| | | Data rate of the PHY payload field: 62.4 Mbps, LDPC | 7.8 | 3.87 | 8.37 |
| | | Data rate of the PHY payload field: 124.8 Mbps, BCC | 31.2 | 0.97 | 5.47 |
| | | Data rate of the PHY payload field: 124.8 Mbps, LDPC | 31.2 | 0.97 | 5.47 |

(continued)

| Solution | Transmission duration (µs) of a PHR1 (4 bits in total) | Data rate (Mbps) of a PHR2 | | Transmission duration (µs) of the PHR2 (23 bits in total) | Total transmission duration of a PHR field |
|---|---|---|---|---|---|
| Repetition, repetition and BCC, and length-20 mapping | 5 | Data rate of the PHY payload field: 1.95 Mbps, BCC | 1.95 | 15.5 | 20.5 |
| | | Data rate of the PHY payload field: 1.95 Mbps, LDPC | 0.4875 | 62 | 67 |
| | | Data rate of the PHY payload field: 7.8 Mbps, BCC | 7.8 | 3.87 | 8.87 |
| | | Data rate of the PHY payload field: 7.8 Mbps, LDPC | 1.95 | 15.5 | 20.5 |
| | | Data rate of the PHY payload field: 31.2 Mbps, BCC | 31.2 | 0.97 | 5.97 |
| | | Data rate of the PHY payload field: 31.2 Mbps, LDPC | 7.8 | 3.87 | 8.87 |
| | | Data rate of the PHY payload field: 62.4 Mbps, BCC | 7.8 | 3.87 | 7.87 |
| | | Data rate of the PHY payload field: 62.4 Mbps, LDPC | 7.8 | 3.87 | 8.87 |
| | | Data rate of the PHY payload field: 124.8 Mbps, BCC | 31.2 | 0.97 | 5.97 |
| | | Data rate of the PHY payload field: 124.8 Mbps, LDPC | 31.2 | 0.97 | 5.97 |

It can be learned from Table 8 that, in this embodiment of this application, transmission duration of the first PHR information (2 bits in total) is less than that of the PHR1 (4 bits in total), and in some cases, total transmission duration of the PHR field is also less than that in the conventional technology.

Therefore, in this embodiment of this application, not only demodulation performance of the PHR field (mainly the first PHR information) can be improved, thereby improving data transmission reliability, but also transmission duration can be reduced, thereby improving data transmission efficiency and reducing interference to another wireless device or another wireless communication technology.

Embodiment 2

Embodiment 2 of this application mainly describes a new codebook, used to encode first PHR information (for example, the foregoing PHR1).

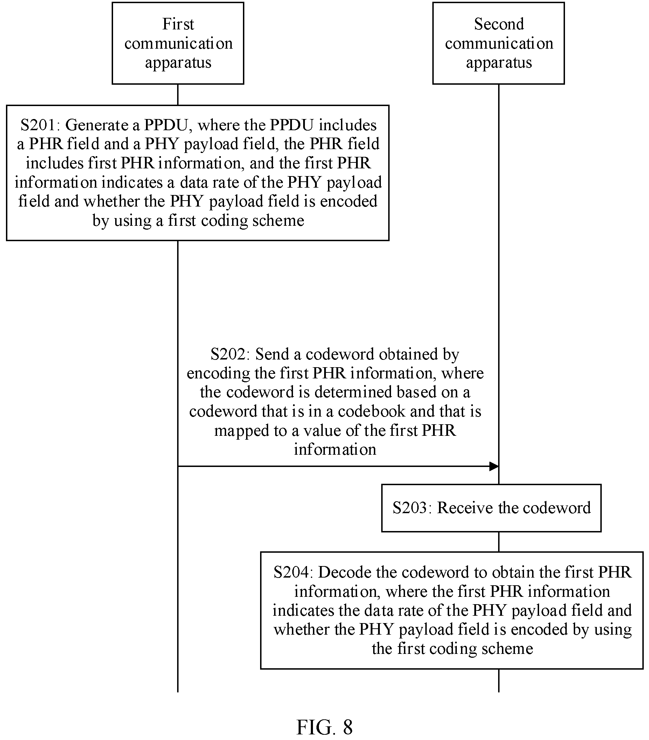

FIG. 8 is another schematic flowchart of a PPDU transmission method according to an embodiment of this application. As shown in FIG. 8, the PPDU transmission method includes but is not limited to the following steps:

S201: A first communication apparatus generates a PPDU, where the PPDU includes a PHR field and a PHY payload field, the PHR field includes the first PHR information, and the first PHR information indicates a data rate of the PHY payload field and whether the PHY payload field is encoded by using a first coding scheme.

S202: The first communication apparatus sends a codeword obtained by encoding the first PHR information, where the codeword is determined based on a codeword that is in a codebook and that is mapped to a value of the first PHR information.

The PPDU in this embodiment of this application may be a PPDU applied to a UWB WPAN standard, for example, a PPDU in the 802.15.4ab protocol.

Optionally, the PPDU may include but is not limited to the PHR field and the PHY payload field. The PHR field may include the first PHR information and second PHR information. For ease of description, the first PHR information is denoted as a PHR1, and the second PHR information is denoted as a PHR2. The first PHR information (namely, the PHR1) may indicate the data rate of the PHY payload field and whether the PHY payload field is encoded by using the first coding scheme. The second PHR information (namely, the PHR2) may indicate a length of the PHY payload field, and optionally, further indicate one or more of the following: whether the PPDU is used to perform sensing measurement or a cyclic redundancy check (cyclic redundancy check, CRC) code.

For example, the first coding scheme may be any one of the following: LDPC, convolutional code, polar code, turbo code, and the like. This is not limited in this embodiment of this application. For ease of description, the following uses an example in which the first coding scheme is LDPC for description. Certainly, with development of a standard, LDPC in the following specification may alternatively be replaced with any coding scheme (for example, convolutional code, polar code, or turbo code) specified in a future standard.

For example, the first PHR information (PHR1) has 4 bits in total, where 3 bits indicate the data rate of the PHY payload field, and the other bit indicates whether the PHY payload field is encoded by using LDPC. For example, the second PHR information (PHR2) includes 23 bits in total, where 12 bits indicate the length of the PHY payload field, 1 bit indicates whether the PPDU is used to perform sensing measurement, 2 bits are reserved, and 8 bits indicate the CRC code.

Optionally, the first communication apparatus may encode the generated PPDU, and then modulate the codeword obtained through encoding into a UWB pulse (namely, a signal) for sending. The encoding herein may include convolutional code, LDPC, specific codebook, repetition code, and the like. It may be understood that different fields in the PPDU may be encoded in different coding schemes. For example, the PHY payload field in the PPDU is encoded by using LDPC or a convolutional code, and an SFD field in the PPDU is mapped and encoded by using a codebook. For another example, the first PHR information (PHR1) in the PPDU is mapped and encoded by using a codebook, and the second PHR information (PHR2) in the PPDU is encoded by using a convolutional code.

Therefore, the first communication apparatus may send the codeword obtained by encoding the first PHR information (PHR1). The codeword may be determined based on the codeword that is in the codebook and that is mapped to the value of the first PHR information. For example, the codeword is the codeword that is in the codebook and that is mapped to the value of the first PHR information, or the codeword is obtained by repeating, for one or more times, the codeword that is in the codebook and that is mapped to the value of the first PHR information. The codebook may be predefined, pre-negotiated, pre-configured, or the like. Optionally, a Hamming distance between two codewords in the codebook is greater than or equal to an upper limit value of a theoretical minimum Hamming distance of the codebook, and when the Hamming distance between the two codewords in the codebook is equal to the upper limit value of the theoretical minimum Hamming distance of the codebook, the Hamming distance between the codewords is increased, so that a bit error rate can be reduced, and encoding performance can be improved. Certainly, a Hamming distance between two codewords in the codebook may alternatively be less than the upper limit value of the theoretical minimum Hamming distance of the codebook. This is not limited in this embodiment of this application. For example, the upper limit value of the theoretical minimum Hamming distance of the codebook satisfies the foregoing formula (1-1). Details are not described herein again.

Optionally, one value of the first PHR information (PHR1) is mapped (mapping) to one codeword in the codebook. In this case, it is assumed that a length of the first PHR information (PHR1) is m bits, and the codebook includes at least $2^m$ codewords. For example, when the length of the first PHR information (PHR1) is m bits, a codeword in the codebook may be generated based on a Hadamard (Hadamard) matrix of an order $2^m$, where m is a positive integer. For a codebook generation manner and specific content of codewords in the codebook, refer to the following descriptions. Details are not described herein.

Optionally, a length of a codeword in the codebook may be an even quantity of bits. For example, the length of the codeword in the codebook may meet one or more of the following conditions: The length is greater than or equal to 20 bits and less than 40 bits.

S203: A second communication apparatus receives the codeword.

S204: The second communication apparatus decodes the codeword to obtain the first PHR information, where the first PHR information indicates the data rate of the PHY payload field and whether the PHY payload field is encoded by using the first coding scheme.

Optionally, the second communication apparatus receives the codeword sent by the first communication apparatus, and may decode the codeword based on a codebook, to obtain the first PHR information (PHR1). It may be understood that the codebook herein is the same as a codebook used by a transmit end (which is the first communication apparatus herein) to encode the first PHR information. It may be further understood that an operation of a receive end (the second communication apparatus herein) may be an inverse process of an operation of the transmit end (the first communication apparatus herein). Details are not described herein.

In this embodiment of this application, a new codebook is designed, and the codebook is used to perform mapping and encoding on the first PHR information (PHR1), so that a requirement for demodulation performance can be met, and transmission duration of the PHR field (mainly the PHR1) can be reduced, thereby better balancing the demodulation performance of the PHR field (mainly the PHR1) and the transmission duration of the PHR field.

The following uses an example to describe the codebook and the codebook generation manner provided in this embodiment of this application.

For example, a possible codebook generation manner is as follows.

It is assumed that K represents a length of a codeword in the codebook, and that m is a bit length of the first PHR information (namely, the PHR1), where m is an integer greater than or equal to 1.

Step 1: Select a Hadamard (Hadamard) matrix A of an order $2^m$, where elements in a first column of A are the same. It is assumed that H represents a second column to a $(2^m)^{th}$ column of the Hadamard matrix A, and the matrix H has $2^m$ rows and ($2^m$-1) columns (that is, $2^m \times (2^m$-1)). For example, m is equal to 4, A is a Hadamard matrix of an order 16, and H represents a second column to a sixteenth column of the Hadamard matrix A. Herein, the Hadamard matrix A is a square matrix that is of an order $2^m$ and that includes elements + 1 and 0, and satisfies A*A'=$2^m$I. Herein, A' is a transpose of A, and I is an identity matrix. The symbol "*" in this specification represents a "multiplying" or "multiplication" operation.

Step 2: Repeat H for $\left\lfloor \dfrac{K}{(2^m-1)} \right\rfloor$ times, where the symbol $\lfloor \ \rfloor$ represents rounding down. For example, when m is equal to 4, H is repeated for $\left\lfloor \dfrac{K}{15} \right\rfloor$ times.

Step 3: Set T=mod(K, ($2^m$-1)), where mod represents a modulo operation; and if T is an even number, select T columns from the matrix H; or if T is an odd number, select T columns from the matrix A. For example, if m is equal to 4, T=mod(K, 15).

Step 4: Combine a result of step 2 and a result of step 3 by column, to form a codebook that includes $2^m$ codewords and in which each codeword has a length of K bits.

The codebook generated in the foregoing manner meets the following condition: A Hamming distance between two codewords in the codebook is greater than or equal to the upper limit value of the theoretical minimum Hamming distance of the codebook. When the Hamming distance between the two codewords in the codebook is equal to the upper limit value of the theoretical minimum Hamming distance of the codebook, the Hamming distance between the codewords is increased, so that a bit error rate can be reduced, and coding performance can be improved. Certainly, a Hamming distance between two codewords in the codebook may alternatively be less than the upper limit value of the theoretical minimum Hamming distance of the codebook. This is not limited in this application. The upper limit value of the theoretical minimum Hamming distance of the codebook satisfies the foregoing formula (1-1). Details are not described herein again.

It may be understood that, in the foregoing steps (step 1 to step 4), different Hadamard matrices are used, and different codebooks may be constructed. However, minimum Hamming distances of the different codebooks remain unchanged. It may be further understood that another codebook may be obtained by performing operations such as column switching, row switching, or bitwise inversion (which means that an element 0 is inverted to an element 1, and an element 1 is inverted to an element 0) on the original codebook obtained in the foregoing step 4, and the another codebook has same Hamming distance distribution as the original codebook obtained in step 4.

Optionally, the codeword obtained by encoding the first PHR information (PHR1) may be a codeword in the codebook generated in the foregoing manner. A codebook used for encoding the first PHR information (PHR1) may include all or some codewords in the codebook generated in the foregoing manner.

An example in which m is equal to 4 is used to describe all or some codebooks obtained in the foregoing codebook generation manner. The following Table 9 to Table 18 show possible codebooks in a case in which m is equal to 4 and K has different values. It may be understood that, although an example in which m is equal to 4 is used in the following Table 9 to Table 18, m may be any positive integer in actual application. Correspondingly, a codebook obtained in the foregoing codebook generation manner also changes accordingly. For example, the codebook includes $2^m$ codewords instead of 16 codewords.

It may be further understood that the following Table 9 to Table 18 are merely examples. In Table 9 to Table 18, a mapping relationship between a codeword, and a data rate (data rate) and an LDPC indication (LDPC indication) is not fixed, provided that different combinations of data rates and LDPC indications are mapped to different codewords, in other words, different values of the first PHR information (PHR1) need to be mapped to different codewords.

Table 9: Example of a codebook with a codeword length (K) of 20

| First PHR information (PHR1) | | |
|---|---|---|
| Data rate Data rate (3 bits) | LDPC indication LDPC indication (1 bit) | Codeword Codeword |
| 000 | 0 | 0 0 0 0 0 0 0 0 0 0 0 0 0 0 0 0 0 0 0 0 |
| 000 | 1 | 1 0 0 0 0 1 0 1 1 0 0 1 1 0 1 1 1 1 1 1 |
| 001 | 0 | 1 1 0 0 1 0 0 0 0 1 1 1 0 0 1 1 0 1 1 0 |
| 001 | 1 | 0 1 0 0 1 1 0 1 1 1 1 0 1 0 0 0 1 0 0 1 |
| 010 | 0 | 0 1 1 0 0 1 0 1 0 0 1 1 0 1 0 1 1 1 0 0 |
| 010 | 1 | 1 1 1 0 0 0 0 0 1 0 1 0 1 1 1 0 0 0 1 1 |
| 011 | 0 | 1 0 1 0 1 1 0 1 0 1 0 0 0 1 1 0 1 0 1 0 |
| 011 | 1 | 0 0 1 0 1 0 0 0 1 1 0 1 1 1 0 1 0 1 0 1 |
| 100 | 0 | 0 0 1 1 0 1 1 1 1 0 0 0 1 1 0 0 0 1 1 0 |
| 100 | 1 | 1 0 1 1 0 0 1 0 0 0 0 1 0 1 1 1 1 0 0 1 |
| 101 | 0 | 1 1 1 1 1 1 1 1 1 1 1 1 1 1 1 0 0 0 0 |
| 101 | 1 | 0 1 1 1 1 0 1 0 0 1 1 0 0 1 0 0 1 1 1 1 |
| 110 | 0 | 0 1 0 1 0 0 1 0 1 0 1 1 1 0 0 1 1 0 1 0 |
| 110 | 1 | 1 1 0 1 0 1 1 1 0 0 1 0 0 0 1 0 0 1 0 1 |
| 111 | 0 | 1 0 0 1 1 0 1 0 1 1 0 0 1 0 1 0 1 1 0 0 |
| 111 | 1 | 0 0 0 1 1 1 1 1 0 1 0 1 0 0 0 1 0 0 1 1 |

Table 10: Example of a codebook with a codeword length (K) of 22

| First PHR information (PHR1) | | |
|---|---|---|
| Data rate Data rate (3 bits) | LDPC indication LDPC indication (1 bit) | Codeword Codeword |
| 000 | 0 | 0 0 0 0 0 0 0 0 0 0 0 0 0 0 0 0 0 0 0 0 0 0 |
| 000 | 1 | 1 0 0 1 0 1 0 1 1 0 1 0 0 1 1 0 1 0 1 0 0 1 |
| 001 | 0 | 1 1 0 0 1 1 0 0 1 1 0 0 1 1 0 0 1 1 0 0 1 1 |
| 001 | 1 | 0 1 0 1 1 0 0 1 0 1 1 0 1 0 1 0 0 1 1 0 1 0 |
| 010 | 0 | 0 1 1 0 0 1 0 1 1 0 0 1 0 1 1 0 0 1 0 1 1 0 |
| 010 | 1 | 1 1 1 1 0 0 0 0 0 0 1 1 0 0 0 0 1 1 1 1 1 1 |
| 011 | 0 | 1 0 1 0 1 0 0 1 0 1 0 1 1 0 1 0 1 0 0 1 0 1 |
| 011 | 1 | 0 0 1 1 1 1 0 0 1 1 1 1 1 0 0 0 0 1 1 0 0 |
| 100 | 0 | 0 0 1 1 1 1 1 0 0 0 0 0 0 1 1 1 1 1 0 0 |
| 100 | 1 | 1 0 1 0 1 0 1 0 1 0 1 0 0 1 0 1 0 1 0 1 0 1 |
| 101 | 0 | 1 1 1 1 0 0 1 1 1 1 0 0 1 1 1 1 0 0 1 1 1 1 |
| 101 | 1 | 0 1 1 0 0 1 1 0 0 1 1 0 1 0 0 1 1 0 0 1 1 0 |
| 110 | 0 | 0 1 0 1 1 0 1 0 1 0 0 1 0 1 0 1 1 0 1 0 1 0 |
| 110 | 1 | 1 1 0 0 1 1 1 1 0 0 1 1 0 0 1 1 0 0 0 0 1 1 |
| 111 | 0 | 1 0 0 1 0 1 1 0 0 1 0 1 1 0 0 1 0 1 1 0 0 1 |
| 111 | 1 | 0 0 0 0 0 0 1 1 1 1 1 1 1 1 1 1 1 1 0 0 0 0 |

Table 11: Example of a codebook with a codeword length (K) of 24

| First PHR information (PHR1) | | |
|---|---|---|
| Data rate Data rate (3 bits) | LDPC indication LDPC indication (1 bit) | Codeword Codeword |
| 000 | 0 | 0 0 0 0 0 0 0 0 0 0 0 0 0 0 0 0 0 0 0 0 0 0 0 0 |
| 000 | 1 | 1 0 0 1 0 1 0 1 1 0 1 0 0 1 1 0 1 0 1 0 0 1 0 1 |
| 001 | 0 | 1 1 0 0 1 1 0 0 1 1 0 0 0 0 1 1 0 0 1 1 0 0 1 1 |
| 001 | 1 | 0 1 0 1 1 0 0 1 0 1 1 0 0 1 0 1 1 0 0 1 0 1 1 0 |
| 010 | 0 | 0 1 1 0 0 1 0 1 1 0 0 1 0 1 1 0 0 1 0 1 1 0 0 1 |
| 010 | 1 | 1 1 1 1 0 0 0 0 0 1 1 0 0 0 0 1 1 1 1 1 1 0 0 |
| 011 | 0 | 1 0 1 0 1 0 0 1 0 1 0 1 0 1 0 1 0 1 1 0 1 0 1 0 |
| 011 | 1 | 0 0 1 1 1 1 0 0 1 1 1 1 0 0 1 1 1 1 0 0 1 1 1 1 |
| 100 | 0 | 0 0 1 1 1 1 1 1 0 0 0 0 0 0 1 1 1 1 1 1 0 0 0 0 |
| 100 | 1 | 1 0 1 0 1 0 1 0 1 0 1 0 0 1 0 1 0 1 0 1 0 1 0 1 |
| 101 | 0 | 1 1 1 1 0 0 1 1 1 1 0 0 0 0 0 0 1 1 0 0 0 0 1 1 |
| 101 | 1 | 0 1 1 0 0 1 1 0 0 1 1 0 0 1 1 0 0 1 1 0 0 1 1 0 |
| 110 | 0 | 0 1 0 1 1 0 1 0 1 0 0 1 0 1 0 1 1 0 1 0 1 0 0 1 |
| 110 | 1 | 1 1 0 0 1 1 1 1 0 0 1 1 0 0 1 1 0 0 0 0 1 1 0 0 |
| 111 | 0 | 1 0 0 1 0 1 1 0 0 1 0 1 0 1 1 0 1 0 0 1 1 0 1 0 |
| 111 | 1 | 0 0 0 0 0 0 1 1 1 1 1 1 0 0 0 0 0 0 1 1 1 1 1 1 |

Table 12: Example of a codebook with a codeword length (K) of 26

| First PHR information (PHR1) | | |
|---|---|---|
| Data rate Data rate (3 bits) | LDPC indication LDPC indication (1 bit) | Codeword Codeword |
| 000 | 0 | 00000000000000000000000000 |
| 000 | 1 | 10010110011010011010011001 |
| 001 | 0 | 11000011001111001111001100 |
| 001 | 1 | 01010101010101010101010101 |
| 010 | 0 | 01100110100110100110010110 |
| 010 | 1 | 11110000111100111100001111 |
| 011 | 0 | 10100101101001101001011010 |
| 011 | 1 | 00110011110011110011000011 |
| 100 | 0 | 00111100001111110000111100 |
| 100 | 1 | 10101010010101101010100101 |
| 101 | 0 | 11111111000000111111110000 |
| 101 | 1 | 01101001011010100101101001 |
| 110 | 0 | 01011010101001010110101010 |
| 110 | 1 | 11001100110011001100110011 |
| 111 | 0 | 10011001100110011001100110 |
| 111 | 1 | 00001111111100000011111111 |

Table 13: Example of a codebook with a codeword length (K) of 28

| First PHR information (PHR1) | | Codeword Codeword |
|---|---|---|
| Data rate Data rate (3 bits) | LDPC indication LDPC indication (1 bit) | |
| 000 | 0 | 0000000000000000000000000000 |
| 000 | 1 | 1001011001101001101001100101 |
| 001 | 0 | 1100001100111100111100110000 |
| 001 | 1 | 0101010101010101010101010101 |
| 010 | 0 | 0110011010011001100110100110 |
| 010 | 1 | 1111000011110000001111000011 |
| 011 | 0 | 1010010110100101011010010110 |
| 011 | 1 | 0011001111001100110011110011 |
| 100 | 0 | 0011110000111100111100001111 |
| 100 | 1 | 1010101001010101010101101010 |
| 101 | 0 | 1111111100000000000000111111 |
| 101 | 1 | 0110100101101001101001011010 |
| 110 | 0 | 0101101010100101011010101001 |
| 110 | 1 | 1100110011001100110011001100 |
| 111 | 0 | 1001100110011001100110011001 |
| 111 | 1 | 0000111111110000001111111100 |

Table 14: Example of a codebook with a codeword length (K) of 30

| First PHR information (PHR1) | | Codeword Codeword |
|---|---|---|
| Data rate Data rate (3 bits) | LDPC indication LDPC indication (1 bit) | |
| 000 | 0 | 000000000000000000000000000000 |
| 000 | 1 | 110000110011110011000011001111 |
| 001 | 0 | 111100000000111100001111111100 |
| 001 | 1 | 001100110011001111001100110011 |
| 010 | 0 | 001111000011110000111100001111 |
| 010 | 1 | 111111110000000011111111000000 |
| 011 | 0 | 110011000011001100110011110011 |
| 011 | 1 | 000011110000111111110000111100 |
| 100 | 0 | 000011111111000000001111111100 |
| 100 | 1 | 110011001100110011001100110011 |
| 101 | 0 | 111111111111111100000000000000 |
| 101 | 1 | 001111001100001111000011001111 |
| 110 | 0 | 001100111100110000110011110011 |
| 110 | 1 | 111100001111000011110000111100 |
| 111 | 0 | 110000111100001100111100001111 |
| 111 | 1 | 000000001111111111111111000000 |

Table 15: Example of a codebook with a codeword length (K) of 32

| First PHR information (PHR1) | | |
| --- | --- | --- |
| Data rate Data rate (3 bits) | LDPC indication LDPC indication (1 bit) | Codeword Codeword |
| 000 | 0 | 11111111111111111111111111111111 |
| 000 | 1 | 01010101010101010101010101010101 |
| 001 | 0 | 10011001100110100110011001101001 |
| 001 | 1 | 00110011001100001100110011000011 |
| 010 | 0 | 11100001111000111000011110001110 |
| 010 | 1 | 01001011010010010010110100100100 |
| 011 | 0 | 10000111100001100001111000011000 |
| 011 | 1 | 00101101001011001011010010110010 |
| 100 | 0 | 11111110000000111111100000001111 |
| 100 | 1 | 01010100101010010101001010100101 |
| 101 | 0 | 10011000011001100110000110011001 |
| 101 | 1 | 00110010110011001100101100110011 |
| 110 | 0 | 11100000000111111000000001111110 |
| 110 | 1 | 01001010101101010010101011010100 |
| 111 | 0 | 10000110011110100001100111101000 |
| 111 | 1 | 00101100110100001011001101000010 |

Table 16: Example of a codebook with a codeword length (K) of 34

| First PHR information (PHR1) | | |
| --- | --- | --- |
| Data rate Data rate (3 bits) | LDPC indication LDPC indication (1 bit) | Codeword Codeword |
| 000 | 0 | 1111111111111111111111111111111111 |
| 000 | 1 | 0010110011010000101100110100001011 |
| 001 | 0 | 1000011001111010000110011110100001 |
| 001 | 1 | 1110000000011111100000000111111000 |
| 010 | 0 | 0100101010110101001010101101010010 |
| 010 | 1 | 0101010010101001010100101010010101 |
| 011 | 0 | 1001100001100110011000011001100110 |
| 011 | 1 | 0011001011001100110010110011001100 |
| 100 | 0 | 1000011110000110000111100001100001 |
| 100 | 1 | 0010110100101100101101001011001011 |
| 101 | 0 | 1111111000000011111110000000111111 |
| 101 | 1 | 0101010101010101010101010101010101 |
| 110 | 0 | 1001100110011010011001100110100110 |
| 110 | 1 | 0100101101001001001011010010010010 |
| 111 | 0 | 1110000111100011100001111000111000 |
| 111 | 1 | 0011001100110000110011001100001100 |

Table 17: Example of a codebook with a codeword length (K) of 36

| First PHR information (PHR1) | | |
|---|---|---|
| Data rate Data rate (3 bits) | LDPC indication LDPC indication (1 bit) | Codeword Codeword |
| 000 | 0 | 111111111111111111111111111111111111 |
| 000 | 1 | 100001100111101000011001111010000110 |
| 001 | 0 | 001011001101000010110011010000101100 |
| 001 | 1 | 111000000001111110000000011111100000 |
| 010 | 0 | 010010101011010100101010110101001010 |
| 010 | 1 | 100110000110011001100001100110011000 |
| 011 | 0 | 001100101100110011001011001100110010 |
| 011 | 1 | 111111100000001111111000000011111110 |
| 100 | 0 | 010101001010100101010010101001010100 |
| 100 | 1 | 100001111000011000011110000110000111 |
| 101 | 0 | 001011010010110010110100101100101101 |
| 101 | 1 | 010101010101010101010101010101010101 |
| 110 | 0 | 100110011001101001100110011010011001 |
| 110 | 1 | 001100110011000011001100110000110011 |
| 111 | 0 | 111000011110001110000111100011100001 |
| 111 | 1 | 010010110100100100101101001001001011 |

Table 18: Example of a codebook with a codeword length (K) of 38

| First PHR information (PHR1) | | |
|---|---|---|
| Data rate Data rate (3 bits) | LDPC indication LDPC indication (1 bit) | Codeword Codeword |
| 000 | 0 | 11111111111111111111111111111111111111 |
| 000 | 1 | 10000110011110100001100111101000011001 |
| 001 | 0 | 00101100110100001011001101000010110011 |
| 001 | 1 | 11100000000111111000000001111110000000 |
| 010 | 0 | 01001010101101010010101011010100101010 |
| 010 | 1 | 10000111100001100001111000011000011110 |
| 011 | 0 | 00101101001011001011010010110010110100 |
| 011 | 1 | 10011000011001100110000110011001100001 |
| 100 | 0 | 00110010110011001100101100110011001011 |
| 100 | 1 | 11111110000000111111100000001111111000 |
| 101 | 0 | 01010100101010010101001010100101010010 |
| 101 | 1 | 11100001111000111000011110001110000111 |
| 110 | 0 | 01001011010010010010110100100100101101 |
| 110 | 1 | 01010101010101010101010101010101010101 |
| 111 | 0 | 10011001100110100110011001101001100110 |
| 111 | 1 | 00110011001100011001100110000110011000 |

To better describe beneficial effect of mapping and encoding the first PHR information (namely, the PHR1) by using the codebook designed in embodiments of this application, the following describes performance of embodiments of this application by comparing and analyzing a packet error rate in a case in which convolutional coding is used and a packet error rate in a case in which codebooks of different codeword lengths in embodiments of this application are used. In addition, advantages of embodiments of this application in terms of transmission duration are further described by calculating transmission duration of the first PHR information (namely, the PHR1) in a case in which codebooks of different codeword lengths in embodiments of this application are used.

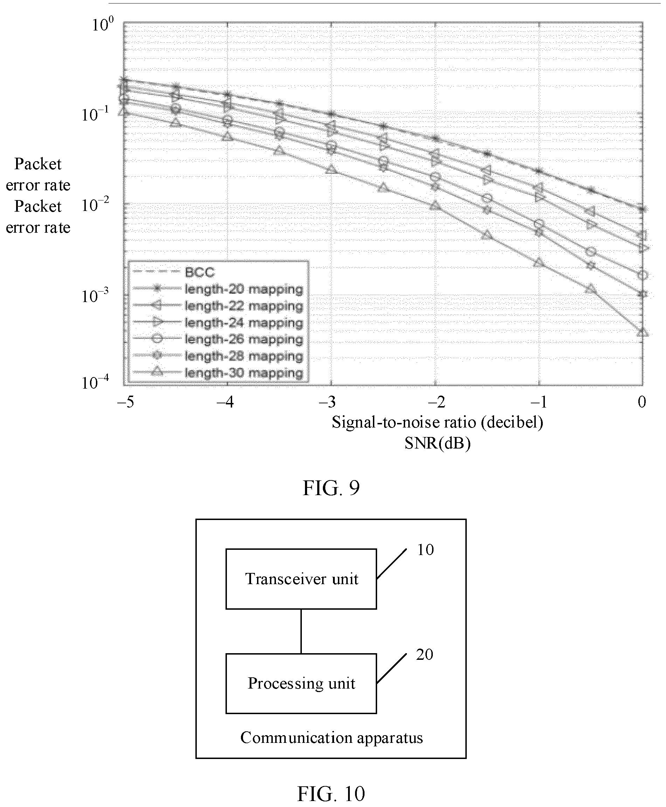

For example, FIG. 9 is a diagram of another packet error rate simulation result according to an embodiment of this application. As shown in FIG. 9, a horizontal coordinate represents a signal-to-noise ratio (signal-to-noise ratio, SNR) in a unit of decibel (decibel, dB), and a vertical coordinate represents a packet error rate (packet error rate) of the first PHR information (namely, the PHR1). It may be understood that, for schematic precision, FIG. 9 shows only some simulation results. To be specific, an SNR range represented by the horizontal coordinate is from -5 dB to 0 dB, and a packet error rate range represented by the vertical coordinate is from $10^{-4}$ to $10^{0}$. In FIG. 9, a BCC indicates that convolutional coding is performed on 4 bits of the PHR1. To be specific, convolutional coding is performed on the 4 bits that indicate the data rate of the PHY payload field and whether the PHY payload field is encoded by using LDPC. Length-20 mapping indicates that mapping and encoding are performed on the 4 bits of the PHR1 by using the codebook whose codeword length is 20 in Table 9. Length-22 mapping indicates that mapping and encoding are performed on the 4 bits of the PHR1 by using the codebook whose codeword length is 22 in Table 10. Length-24 mapping indicates that mapping and encoding are performed on the 4 bits of the PHR1 by using the codebook whose codeword length is 24 in Table 11. Length-26 mapping indicates that mapping and encoding are performed on the 4 bits of the PHR1 by using the codebook whose codeword length is 26 in Table 12. Length-28 mapping indicates that mapping and encoding are performed on the 4 bits of the PHR1 by using the codebook whose codeword length is 28 in Table 13. Length-30 mapping indicates that mapping and encoding are performed on the 4 bits of the PHR1 by using the codebook whose codeword length is 30 in Table 14.

It can be learned from FIG. 9 that, as a codeword length in a codebook increases, packet error rate performance of the PHR1 continuously improves, and when the codeword length is greater than 20, the packet error rate performance of the PHR1 is better than that of convolutional coding.

In addition, transmission duration of the PHR1 in a case in which codebooks with different codeword lengths are used is shown in the following Table 19.

Table 19

| Codeword length | Transmission duration ($\mu$s) of a PHR1 |
|---|---|
| 20 | 5 |
| 22 | 5.5 |
| 24 | 6 |
| 26 | 6.5 |
| 28 | 7 |
| 30 | 7.5 |

It can be learned from Table 19 that the codebook designed in embodiments of this application is used to perform mapping and encoding on the first PHR information (namely, the PHR1). Compared with the solution 3 (the PHR1 is transmitted at a rate of 0.975 Mbps) in the conventional technology, this solution has shorter transmission time.

Therefore, in embodiments of this application, a requirement for demodulation performance can be met, and transmission duration of the PHR field (mainly the PHR1) can be reduced, thereby better balancing the demodulation performance of the PHR field (mainly the PHR1) and the transmission duration of the PHR field.

The foregoing content describes in detail methods provided in this application. To facilitate implementation of the foregoing solutions in embodiments of this application, embodiments of this application further provide corresponding apparatuses or devices.

In this application, a communication apparatus is divided into functional modules based on the foregoing method embodiments. For example, the communication apparatus may be divided into functional modules corresponding functions, or two or more functions may be integrated into one processing module. The integrated module may be implemented in a form of hardware, or may be implemented in a form of a software functional module. It should be noted that, in this application, module division is an example, and is merely logical function division. In actual implementation, another division manner may be used. The following describes in detail communication apparatuses in embodiments of this application with reference to FIG. 10 to FIG. 12.

FIG. 10 is a diagram of a structure of a communication apparatus according to an embodiment of this application. As shown in FIG. 10, the communication apparatus includes a transceiver unit 10 and a processing unit 20.

In some embodiments of this application, the communication apparatus may be the first communication apparatus shown above or a chip in the first communication apparatus. To be specific, the communication apparatus shown in FIG. 10 may be configured to perform steps, functions, or the like performed by the first communication apparatus in the foregoing method embodiments.

In a design, the processing unit 20 is configured to generate a PPDU, where the PPDU includes a PHR field and a PHY payload field, the PHR field includes first PHR information and second PHR information, the first PHR information indicates a data rate of the second PHR information, a length of the first PHR information is less than n bits, and n is a minimum quantity of bits that indicate a data rate of the PHY payload field and whether the PHY payload field is encoded by using a first coding scheme; and the transceiver unit 10 is configured to send the PPDU.

In a possible implementation, the transceiver unit 10 is specifically configured to send a codeword obtained by encoding the first PHR information, where the codeword is obtained by performing one or more of the following operations on the first PHR information:

adding an all-zero tail bit, performing convolutional coding, or repeating for one or more times.

In a possible implementation, the transceiver unit 10 is specifically configured to send the codeword obtained by encoding the first PHR information, where the codeword is determined based on a codeword that is in a codebook and that is mapped to a value of the first PHR information, and a Hamming distance between two codewords in the codebook is greater than or equal to an upper limit value of a theoretical minimum Hamming distance of the codebook.

For specific descriptions of the PPDU, the first PHR information, the second PHR information, the first coding scheme, the codebook, and the like, refer to the method embodiment 1 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiments. Details are not described herein again. For example, the transceiver unit 10 may be configured to perform step S102 shown in FIG. 4, and the processing unit 20 may be configured to perform step S101 shown in FIG. 4.

In another design, the processing unit 20 is configured to generate a PPDU, where the PPDU includes a PHR field and a PHY payload field, the PHR field includes first PHR information, and the first PHR information indicates a data rate of the PHY payload field and whether the PHY payload field is encoded by using a first coding scheme; and the transceiver unit 10 is configured to send a codeword obtained by encoding the first PHR information, where the codeword is determined based on a codeword that is in a codebook and that is mapped to a value of the first PHR information, and a Hamming distance between two codewords in the codebook is greater than or equal to an upper limit value of a theoretical minimum Hamming distance of the codebook.

For specific descriptions of the PPDU, the first PHR information, the first coding scheme, the codebook, and the like, refer to the method embodiment 2 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiments. Details are not described herein again. For example, the transceiver unit 10 may be configured to perform step S202 shown in FIG. 8, and the processing unit 20 may be configured to perform step S201 shown in FIG. 8.

Still refer to FIG. 10. In some other embodiments of this application, the communication apparatus may be the second communication apparatus shown above or a chip in the second communication apparatus. To be specific, the communication apparatus shown in FIG. 10 may be configured to perform steps, functions, or the like performed by the second communication apparatus in the foregoing method embodiments.

In a design, the transceiver unit 10 is configured to receive a PPDU, where the PPDU includes a PHR field and a PHY payload field, the PHR field includes first PHR information and second PHR information, the first PHR information indicates a data rate of the second PHR information, a length of the first PHR information is less than n bits, and n is a minimum quantity of bits that indicate a data rate of the PHY payload field and whether the PHY payload field is encoded by using a first coding scheme; and the processing unit 20 is configured to parse the PPDU.

In a possible implementation, the transceiver unit 10 is specifically configured to receive a codeword, where the codeword is a codeword obtained by encoding the first PHR information in the PHR field of the PPDU, and the codeword is obtained by performing one or more of the following operations on the first PHR information:

adding an all-zero tail bit, performing convolutional coding, or repeating for one or more times.

In a possible implementation, the transceiver unit 10 is specifically configured to receive a codeword, where the codeword is a codeword obtained by encoding first PHR information in a PHR field of a PPDU, the codeword is determined based on a codeword that is in a codebook and that is mapped to a value of the first PHR information, and a Hamming distance between two codewords in the codebook is greater than or equal to an upper limit value of a theoretical minimum Hamming distance of the codebook.

For specific descriptions of the PPDU, the first PHR information, the second PHR information, the first coding scheme, the codebook, and the like, refer to the method embodiment 1 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiments. Details are not described herein again. For example, the transceiver unit 10 may be configured to receive a PPDU, and the processing unit 20 may be configured to perform step S103 shown in FIG. 4.

In another design, the transceiver unit 10 is configured to receive a codeword, where the codeword is a codeword obtained by encoding first PHR information in a PHR field of a PPDU, the PPDU includes the PHR field and a PHY payload field, the PHR field includes the first PHR information, the codeword is determined based on a codeword that is in a codebook and that is mapped to a value of the first PHR information, and a Hamming distance between two codewords in the codebook is greater than or equal to an upper limit value of a theoretical minimum Hamming distance of the codebook;

and the processing unit 20 is configured to decode the codeword to obtain the first PHR information, where the first PHR information indicates a data rate of the PHY payload field and whether the PHY payload field is encoded by using a first coding scheme.

For specific descriptions of the PPDU, the first PHR information, the first coding scheme, the codebook, and the like, refer to the method embodiment 2 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiments. Details are not described herein again. For example, the transceiver unit 10 may be configured to perform step S203 shown in FIG. 8, and the processing unit 20 may be configured to perform step S204 shown in FIG. 8.

The foregoing describes the communication apparatus in embodiments of this application. The following describes a possible product form of the communication apparatus. It should be understood that any form of product that has a function of the communication apparatus in FIG. 10 falls within the protection scope of embodiments of this application. It should be further understood that the following descriptions are merely examples, and do not limit the product form of the communication apparatus in embodiments of this application.

In a possible implementation, in the communication apparatus shown in FIG. 10, the processing unit 20 may be one or more processors, and the transceiver unit 10 may be a transceiver, or the transceiver unit 10 may be a sending unit and a receiving unit, the sending unit may be a transmitter, the receiving unit may be a receiver, and the sending unit and the receiving unit are integrated into one component, for example, a transceiver. In this embodiment of this application, the processor and the transceiver may be coupled, or the like. A connection manner between the processor and the transceiver is not limited in this embodiment of this application. In a process of performing the foregoing method, a process of sending information (for example, sending a PPDU or a codeword) in the foregoing methods may be understood as a process of outputting the foregoing information by the processor. When outputting the information, the processor outputs the information to the transceiver, so that the transceiver transmits the information. After the information is outputted by the processor, other processing may further need to be performed on the information before the information arrives at the transceiver. Similarly, a process of receiving information (for example, receiving a PPDU or a codeword) in the foregoing methods may be understood as a process of receiving the input information by the processor. When the processor receives the input information, the transceiver receives the foregoing information, and inputs the information to the processor. Further, after the transceiver receives the foregoing information, other processing may further need to be performed on the information before the information is input into the processor.

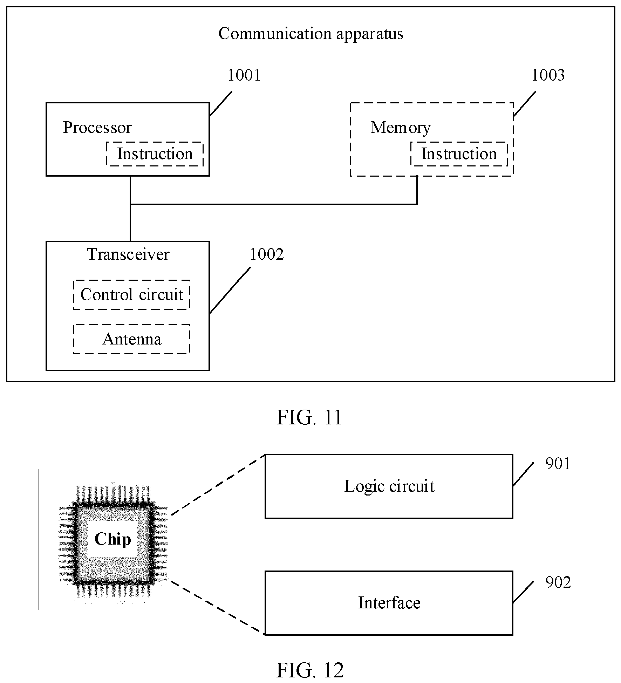

FIG. 11 is a diagram of another structure of a communication apparatus according to an embodiment of this application. The communication apparatus may be a first communication apparatus, a second communication apparatus, or a chip in a first communication apparatus or a second communication apparatus. FIG. 11 shows only main components of the communication apparatus. In addition to a processor 1001 and a transceiver 1002, the communication apparatus may further include a memory 1003 and an input/output apparatus (which is not shown in the figure).

The processor 1001 is mainly configured to: process a communication protocol and communication data, control the entire communication apparatus, execute a software program, and process data of the software program. The memory 1003 is mainly configured to store the software program and the data. The transceiver 1002 may include a control circuit and an antenna. The control circuit is mainly configured to: perform conversion between a baseband signal and a radio frequency signal, and process the radio frequency signal. The antenna is mainly configured to receive/send a radio frequency signal in a form of an electromagnetic wave. The input/output apparatus, such as a touchscreen, a display, or a keyboard, is mainly configured to: receive data input by a user, and output data to the user.

After the communication apparatus is powered on, the processor 1001 may read the software program in the memory 1003, interpret and execute instructions of the software program, and process the data of the software program.

When data needs to be wirelessly sent, the processor 1001 performs baseband processing on the to-be-sent data, and outputs a baseband signal to a radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

The processor 1001, the transceiver 1002, and the memory 1003 may be connected through a communication bus.

In a design, the communication apparatus may be configured to perform functions of the first communication apparatus in the foregoing Embodiment 1; the processor 1001 may be configured to perform step S101 in FIG. 4, and/or other processes of the technology described in this specification; and the transceiver 1002 may be configured to perform step S102 in FIG. 4, and/or other processes of the technology described in this specification.

In another design, the communication apparatus may be configured to perform functions of the second communication apparatus in the foregoing Embodiment 1; the processor 1001 may be configured to perform step S103 in FIG. 4, and/or other processes of the technology described in this specification; and the transceiver 1002 may be configured to: receive a PPDU sent in step S102 in FIG. 4, and/or perform other processes of the technology described in this specification.

In a design, the communication apparatus may be configured to perform functions of the first communication apparatus in the foregoing Embodiment 2; the processor 1001 may be configured to perform step S201 in FIG. 8, and/or other processes of the technology described in this specification; and the transceiver 1002 may be configured to perform step S202 in FIG. 8, and/or other processes of the technology described in this specification.

In another design, the communication apparatus may be configured to perform functions of the second communication apparatus in the foregoing Embodiment 2; the processor 1001 may be configured to perform step S204 in FIG. 8, and/or other processes of the technology described in this specification; and the transceiver 1002 may be configured to perform step S203 in FIG. 8, and/or other processes of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data; or the transceiver circuit, the interface, or the interface circuit may be configured to transmit or transfer a signal.

In any one of the foregoing designs, the processor 1001 may store instructions, the instructions may be a computer program, and the computer program is run on the processor 1001, to enable the communication apparatus to perform the methods described in the foregoing method embodiments. The computer program may be solidified in the processor 1001. In this case, the processor 1001 may be implemented by hardware.

In an implementation, the communication apparatus may include a circuit, and the circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and transceiver may also be manufactured using various IC process technologies, such as a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), gallium arsenide (GaAs), and the like.

A scope of the communication apparatus described in this application is not limited thereto, and a structure of the communication apparatus may not be limited by that in FIG. 11. The communication apparatus may be an independent device, or may be a part of a large device. For example, the communication apparatus may be:

(1) an independent integrated circuit IC, a chip, or a chip system or subsystem;
(2) a set including one or more ICs, where optionally, the IC set may further include a storage component configured to store data and a computer program;
(3) an ASIC, for example, a modem (modem);
(4) a module that can be embedded in another device;

(5) a receiver, a terminal, an intelligent terminal, a cellular phone, a wireless device, a handheld device, a mobile unit, a vehicle-mounted device, a network device, a cloud device, or an artificial intelligence device; or

(6) others.

In another possible implementation, in the communication apparatus shown in FIG. 10, the processing unit 20 may be one or more logic circuits, and the transceiver unit 10 may be an input/output interface, or may be referred to as a communication interface, an interface circuit, an interface, or the like. Alternatively, the transceiver unit 10 may be a sending unit and a receiving unit, the sending unit may be an output interface, the receiving unit may be an input interface, and the sending unit and the receiving unit are integrated into one unit, for example, an input/output interface. FIG. 12 is a diagram of another structure of a communication apparatus according to an embodiment of this application. As shown in FIG. 12, the communication apparatus shown in FIG. 12 includes a logic circuit 901 and an interface 902. In other words, the processing unit 20 may be implemented by using the logic circuit 901, and the transceiver unit 10 may be implemented by using the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 12 shows an example in which the communication apparatus is a chip. The chip includes the logic circuit 901 and the interface 902. It may be understood that the chip shown in this embodiment of this application may include a narrowband chip, an ultra-wideband chip, or the like. This is not limited in this embodiment of this application. Alternatively, the narrowband chip and the ultra-wideband chip may be integrated into one apparatus or chip, or may be independent of each other. Implementations of the narrowband chip and the ultra-wideband chip in a device are not limited in this embodiment of this application. The foregoing steps of sending a PPDU and sending a codeword may be performed by the ultra-wideband chip. Whether other steps are performed by the ultra-wideband chip is not limited in this embodiment of this application.

In this embodiment of this application, the logic circuit and the interface may be coupled to each other. A specific connection manner between the logic circuit and the interface is not limited in this embodiment of this application.

For example, when the communication apparatus is configured to perform methods, functions, or steps performed by the first communication apparatus in Embodiment 1, the logic circuit 901 is configured to generate a PPDU, where the PPDU includes a PHR field and a PHY payload field, the PHR field includes first PHR information and second PHR information, the first PHR information indicates a data rate of the second PHR information, a length of the first PHR information is less than n bits, n is a minimum quantity of bits that indicate a data rate of the PHY payload field and whether the PHY payload field is encoded by using a first coding scheme; and the interface 902 is configured to output the PPDU.

For example, when the communication apparatus is configured to perform methods, functions, or steps performed by the second communication apparatus in Embodiment 1, the interface 902 is configured to input a PPDU, where the PPDU includes a PHR field and a PHY payload field, the PHR field includes first PHR information and second PHR information, the first PHR information indicates a data rate of the second PHR information, a length of the first PHR information is less than n bits, n is a minimum quantity of bits that indicate a data rate of the PHY payload field and whether the PHY payload field is encoded by using a first coding scheme; and the logic circuit 901 is configured to parse the PPDU.

It may be understood that for specific descriptions of the PPDU, the first PHR information, the second PHR information, the first coding scheme, and the like, refer to the method embodiment 1 shown above. Details are not described herein again.

For example, when the communication apparatus is configured to perform methods, functions, or steps performed by the first communication apparatus in Embodiment 2, the logic circuit 901 is configured to generate a PPDU, where the PPDU includes a PHR field and a PHY payload field, the PHR field includes first PHR information, and the first PHR information indicates a data rate of the PHY payload field and whether the PHY payload field is encoded by using a first coding scheme; and the interface 902 is configured to output a codeword obtained by encoding the first PHR information, where the codeword is determined based on a codeword that is in a codebook and that is mapped to a value of the first PHR information, and a Hamming distance between two codewords in the codebook is greater than or equal to an upper limit value of a theoretical minimum Hamming distance of the codebook.

For example, when the communication apparatus is configured to perform methods, functions, or steps performed by the second communication apparatus in Embodiment 2, the interface 902 is configured to input a codeword, where the codeword is a codeword obtained by encoding first PHR information in a PHR field of a PPDU, the PPDU includes the PHR field and a PHY payload field, the PHR field includes the first PHR information, the codeword is determined based on a codeword that is in a codebook and that is mapped to a value of the first PHR information, and a Hamming distance between two codewords in the codebook is greater than or equal to an upper limit value of a theoretical minimum Hamming distance of the codebook; and the logic circuit 901 is configured to decode the codeword to obtain the first PHR information, where the first PHR information indicates a data rate of the PHY payload field and whether the PHY payload field is encoded by using a first coding scheme.

It may be understood that for specific descriptions of the PPDU, the first PHR information, the first coding scheme, the codebook, and the like, refer to the method embodiment 2 shown above. Details are not described herein again.

It may be understood that the communication apparatus shown in this embodiment of this application may implement the methods provided in embodiments of this application in a form of hardware, or may implement the methods provided in embodiments of this application in a form of software. This is not limited in this embodiment of this application.

For specific implementations of embodiments shown in FIG. 12, refer to the foregoing embodiments. Details are not described herein again.

An embodiment of this application further provides a wireless communication system. The wireless communication system includes a first communication apparatus and a second communication apparatus, and the first communication apparatus and the second communication apparatus may be configured to perform the method in Embodiment 1 or Embodiment 2.

In addition, this application further provides a computer program. The computer program is used to implement operations and/or processing performed by the first communication apparatus in the methods provided in this application.

This application further provides a computer program. The computer program is used to implement operations and/or processing performed by the second communication apparatus in the methods provided in this application.

This application further provides a computer-readable storage medium. The computer-readable storage medium stores computer code, and when the computer code is run on a computer, the computer is enabled to perform operations and/or processing performed by the first communication apparatus in the methods provided in this application.

This application further provides a computer-readable storage medium. The computer-readable storage medium stores computer code, and when the computer code is run on a computer, the computer is enabled to perform operations and/or processing performed by the second communication apparatus in the methods provided in this application.

This application further provides a computer program product. The computer program product includes computer code or a computer program, and when the computer code or the computer program is run on a computer, operations and/or processing performed by the first communication apparatus in the methods provided in this application are/is performed.

This application further provides a computer program product. The computer program product includes computer code or a computer program, and when the computer code or the computer program is run on a computer, operations and/or processing performed by the second communication apparatus in the methods provided in this application are/is performed.

In the several embodiments provided in this application, it should be understood that the disclosed system, apparatus, and method may be implemented in other manners. For example, the described apparatus embodiment is merely an example. For example, division into the units is merely logical function division, and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one location, or may be distributed on a plurality of network units. Some or all of the units may be selected based on an actual requirement to implement the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The foregoing readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A physical layer protocol data unit transmission method, comprising:

generating a physical layer protocol data unit PPDU, wherein the PPDU comprises a physical layer header PHR field and a physical layer payload field, the PHR field comprises first PHR information and second PHR information, and the first PHR information indicates one or more of the following: a data rate of the second PHR information, a data rate of the physical layer payload field, or whether the physical layer payload field is encoded by using a first coding scheme, wherein

a length of the first PHR information is less than n bits, and n is a minimum quantity of bits that indicate the data rate of the physical layer payload field and whether the physical layer payload field is encoded by using the first coding scheme; and
sending the PPDU.

2. A physical layer protocol data unit transmission method, comprising:

receiving a physical layer protocol data unit PPDU, wherein the PPDU comprises a physical layer header PHR field and a physical layer payload field, the PHR field comprises first PHR information and second PHR information, and the first PHR information indicates one or more of the following: a data rate of the second PHR information, a data rate of the physical layer payload field, or whether the physical layer payload field is encoded by using a first coding scheme, wherein

a length of the first PHR information is less than n bits, and n is a minimum quantity of bits that indicate the data rate of the physical layer payload field and whether the physical layer payload field is encoded by using the first coding scheme; and
parsing the PPDU.

3. The method according to claim 1 or 2, wherein the second PHR information indicates the data rate of the physical layer payload field and whether the physical layer payload field is encoded by using the first coding scheme.

4. The method according to claim 1 or 2, wherein the second PHR information and the first PHR information jointly indicate the data rate of the physical layer payload field and whether the physical layer payload field is encoded by using the first coding scheme.

5. The method according to claim 3 or 4, wherein the second PHR information further indicates one or more of the following: a length of the physical layer payload field, whether the PPDU is used to perform sensing measurement, or a cyclic redundancy check CRC code.

6. The method according to claim 4, wherein the first PHR information and 2 bits in the second PHR information jointly indicate the data rate of the physical layer payload field and whether the physical layer payload field is encoded by using the first coding scheme, and the length of the first PHR information is 2 bits.

7. The method according to claim 1, wherein the sending the PPDU comprises:
sending a codeword obtained by encoding the first PHR information, wherein the codeword is obtained by performing one or more of the following operations on the first PHR information:
adding an all-zero tail bit, performing convolutional coding, or repeating for one or more times.

8. The method according to claim 2, wherein the receiving a physical layer protocol data unit PPDU comprises:
receiving a codeword, wherein the codeword is a codeword obtained by encoding the first PHR information in the PHR field of the PPDU, and the codeword is obtained by performing one or more of the following operations on the first PHR information:
adding an all-zero tail bit, performing convolutional coding, or repeating for one or more times.

9. The method according to claim 1, wherein the sending the PPDU comprises:
sending a codeword obtained by encoding the first PHR information, wherein the codeword is determined based on a codeword that is in a codebook and that is mapped to a value of the first PHR information.

10. The method according to claim 2, wherein the receiving a physical layer protocol data unit PPDU comprises:
receiving a codeword, wherein the codeword is a codeword obtained by encoding the first PHR information in the PHR field of the PPDU, and the codeword is determined based on a codeword that is in a codebook and that is mapped to a value of the first PHR information.

11. The method according to claim 9 or 10, wherein the length of the first PHR information is m bits, a codeword in the codebook is generated based on a Hadamard matrix of an order $2^m$, and m is a positive integer.

12. A physical layer protocol data unit transmission method, comprising:

generating a physical layer protocol data unit PPDU, wherein the PPDU comprises a physical layer header PHR field and a physical layer payload field, the PHR field comprises first PHR information, and the first PHR information indicates a data rate of the physical layer payload field and whether the physical layer payload field is encoded by using a first coding scheme; and
sending a codeword obtained by encoding the first PHR information, wherein the codeword is determined based on a codeword that is in a codebook and that is mapped to a value of the first PHR information.

13. A physical layer protocol data unit transmission method, comprising:

receiving a codeword, wherein the codeword is a codeword obtained by encoding first PHR information in a physical layer header PHR field of a physical layer protocol data unit PPDU, the PPDU comprises the physical layer header PHR field and a physical layer payload field, the PHR field comprises the first PHR information, and the codeword is determined based on a codeword that is in a codebook and that is mapped to a value of the first PHR information; and
decoding the codeword, to obtain the first PHR information, wherein the first PHR information indicates a data rate of the physical layer payload field and whether the physical layer payload field is encoded by using a first coding scheme.

14. The method according to claim 12 or 13, wherein one value of the first PHR information is mapped to one codeword in the codebook.

15. The method according to any one of claims 12 to 14, wherein a length of the first PHR information is m bits, a codeword in the codebook is generated based on a Hadamard matrix of an order $2^m$, and m is a positive integer.

16. A communication apparatus, comprising:

a processing unit, configured to generate a physical layer protocol data unit PPDU, wherein the PPDU comprises a physical layer header PHR field and a physical layer payload field, the PHR field comprises first PHR information and second PHR information, and the first PHR information indicates one or more of the following: a data rate of the second PHR information, a data rate of the physical layer payload field, or whether the physical layer payload field is encoded by using a first coding scheme, wherein
a length of the first PHR information is less than n bits, and n is a minimum quantity of bits that indicate the data rate of the physical layer payload field and whether the physical layer payload field is encoded by using the first coding scheme; and
a transceiver unit, configured to send the PPDU.

17. The communication apparatus according to claim 16, wherein the transceiver unit is specifically configured to send a codeword obtained by encoding the first PHR information, wherein the codeword is obtained by performing one or more of the following operations on the first PHR information:
adding an all-zero tail bit, performing convolutional coding, or repeating for one or more times.

18. The communication apparatus according to claim 16, wherein the transceiver unit is specifically configured to send a codeword obtained by encoding the first PHR information, wherein the codeword is determined based on a codeword that is in a codebook and that is mapped to a value of the first PHR information.

19. A communication apparatus, comprising:

a transceiver unit, configured to receive a physical layer protocol data unit PPDU, wherein the PPDU comprises a physical layer header PHR field and a physical layer payload field, the PHR field comprises first PHR information and second PHR information, and the first PHR information indicates one or more of the following: a data rate of the second PHR information, a data rate of the physical layer payload field, or whether the physical layer payload field is encoded by using a first coding scheme, wherein

a length of the first PHR information is less than n bits, and n is a minimum quantity of bits that indicate the data rate of the physical layer payload field and whether the physical layer payload field is encoded by using the first coding scheme; and

a processing unit, configured to parse the PPDU.

20. The communication apparatus according to claim 19, wherein the transceiver unit is specifically configured to receive a codeword, wherein the codeword is a codeword obtained by encoding the first PHR information in the PHR field of the PPDU, and the codeword is obtained by performing one or more of the following operations on the first PHR information:

adding an all-zero tail bit, performing convolutional coding, or repeating for one or more times.

21. The communication apparatus according to claim 19, wherein the transceiver unit is specifically configured to receive a codeword, wherein the codeword is a codeword obtained by encoding the first PHR information in the PHR field of the PPDU, and the codeword is determined based on a codeword that is in a codebook and that is mapped to a value of the first PHR information.

22. The communication apparatus according to any one of claims 16 to 21, wherein the second PHR information indicates the data rate of the physical layer payload field and whether the physical layer payload field is encoded by using the first coding scheme.

23. The communication apparatus according to any one of claims 16 to 21, wherein the second PHR information and the first PHR information jointly indicate the data rate of the physical layer payload field and whether the physical layer payload field is encoded by using the first coding scheme.

24. The communication apparatus according to claim 22 or 23, wherein the second PHR information further indicates one or more of the following: a length of the physical layer payload field, whether the PPDU is used to perform sensing measurement, or a cyclic redundancy check CRC code.

25. The communication apparatus according to claim 23, wherein the first PHR information and 2 bits in the second PHR information jointly indicate the data rate of the physical layer payload field and whether the physical layer payload field is encoded by using the first coding scheme, and the length of the first PHR information is 2 bits.

26. A communication apparatus, comprising:

a processing unit, configured to generate a physical layer protocol data unit PPDU, wherein the PPDU comprises a physical layer header PHR field and a physical layer payload field, the PHR field comprises first PHR information, and the first PHR information indicates a data rate of the physical layer payload field and whether the physical layer payload field is encoded by using a first coding scheme; and
a transceiver unit, configured to send a codeword obtained by encoding the first PHR information, wherein the codeword is determined based on a codeword that is in a codebook and that is mapped to a value of the first PHR information.

27. A communication apparatus, comprising:

a transceiver unit, configured to receive a codeword, wherein the codeword is a codeword obtained by encoding first PHR information in a physical layer header PHR field of a physical layer protocol data unit PPDU, the PPDU comprises the physical layer header PHR field and a physical layer payload field, the PHR field comprises the first PHR information, and the codeword is determined based on a codeword that is in a codebook and that is mapped to a value of the first PHR information; and
a processing unit, configured to decode the codeword to obtain the first PHR information, wherein the first PHR information indicates a data rate of the physical layer payload field and whether the physical layer payload field is encoded by using a first coding scheme.

28. The communication apparatus according to claim 26 or 27, wherein one value of the first PHR information is mapped to one codeword in the codebook.

29. The communication apparatus according to any one of claims 26 to 28, wherein a length of the first PHR information is m bits, a codeword in the codebook is generated based on a Hadamard matrix of an order $2^m$, and m is a positive integer.

30. A physical layer protocol data unit transmission method, comprising:

generating a physical layer protocol data unit PPDU, wherein the PPDU comprises second PHR information, a physical layer payload field, and a codeword corresponding to first PHR information, and the codeword corresponding to the first PHR information indicates one or more of the following: a data rate of the second PHR information, a data rate of the physical layer payload field, or whether the physical layer payload field is encoded by using a first coding scheme; and
sending the PPDU.

31. A physical layer protocol data unit transmission method, comprising:

receiving a physical layer protocol data unit PPDU, wherein the PPDU comprises second PHR information, a physical layer payload field, and a codeword corresponding to first PHR information, and the codeword corresponding to the first PHR information indicates one or more of the following: a data rate of the second PHR information, a data rate of the physical layer payload field, or whether the physical layer payload field is encoded by using a first coding scheme; and
parsing the PPDU.

32. The method according to claim 30 or 31, wherein the first coding scheme is any one of the following: low-density parity-check LDPC code, convolutional code, polar code, or turbo code.

33. The method according to any one of claims 30 to 32, wherein the codeword corresponding to the first PHR information indicates the data rate of the second PHR information, the data rate of the physical layer payload field, and whether the physical layer payload field is encoded by using the first coding scheme.

34. The method according to any one of claims 30 to 33, wherein the second PHR information further indicates one or more of the following: a length of the physical layer payload field, whether the PPDU is used to perform sensing measurement, or a cyclic redundancy check CRC code.

35. A communication apparatus, comprising:

a processing unit, configured to generate a physical layer protocol data unit PPDU, wherein the PPDU comprises second PHR information, a physical layer payload field, and a codeword corresponding to first PHR information, and the codeword corresponding to the first PHR information indicates one or more of the following: a data rate of the second PHR information, a data rate of the physical layer payload field, or whether the physical layer payload field is encoded by using a first coding scheme; and
a transceiver unit, configured to send the PPDU.

36. A communication apparatus, comprising:

a transceiver unit, configured to receive a physical layer protocol data unit PPDU, wherein the PPDU comprises second PHR information, a physical layer payload field, and a codeword corresponding to first PHR information, and the codeword corresponding to the first PHR information indicates one or more of the following: a data rate of the second PHR information, a data rate of the physical layer payload field, or whether the physical layer payload field is encoded by using a first coding scheme; and
a processing unit, configured to parse the PPDU.

37. The communication apparatus according to claim 35 or 36, wherein the first coding scheme is any one of the following: low-density parity-check LDPC code, convolutional code, polar code, or turbo code.

38. The communication apparatus according to any one of claims 35 to 37, wherein the codeword corresponding to the first PHR information indicates the data rate of the second PHR information, the data rate of the physical layer payload field, and whether the physical layer payload field is encoded by using the first coding scheme.

39. The communication apparatus according to any one of claims 35 to 38, wherein the second PHR information further indicates one or more of the following: a length of the physical layer payload field, whether the PPDU is used to perform sensing measurement, or a cyclic redundancy check CRC code.

40. A communication apparatus, comprising a processor and a memory, wherein

   the memory is configured to store instructions; and
   the processor is configured to execute the instructions, so that the method according to any one of claims 1 to 15 or claims 30 to 34 is performed.

41. A communication apparatus, comprising a logic circuit and an interface, wherein the logic circuit is coupled to the interface; and
   the interface is configured to input and/or output code instructions, and the logic circuit is configured to execute the code instructions, so that the method according to any one of claims 1 to 15 or claims 30 to 34 is performed.

42. A computer-readable storage medium, wherein the computer-readable storage medium is configured to store a computer program, and when the computer program is executed, the method according to any one of claims 1 to 15 or claims 30 to 34 is performed.

PAN
coordinator

● Full function device

○ Reduced function device

FIG. 1

PAN
coordinator

● Full function device

○ Reduced function device

FIG. 2

| SYNC Synchronization | SFD Start-of-frame delimiter | PHR Physical layer header | PHY payload Physical layer payload |
|---|---|---|---|

FIG. 3

| First communication apparatus | | Second communication apparatus |
|---|---|---|

S101: Generate a PPDU, where the PPDU includes a PHR field and a PHY payload field, the PHR field includes first PHR information and second PHR information, the first PHR information indicates a data rate of the second PHR information, a length of the first PHR information is less than n bits, and n is a minimum quantity of bits that indicate a data rate of the PHY payload field and whether the PHY payload field is encoded by using a first coding scheme

S102: Send the PPDU

S103: Parse the PPDU

FIG. 4

PHR

| SYNC Synchronization | SFD Start-of-frame delimiter | First PHR information | Second PHR information | ... | PHY payload Physical layer payload |
|---|---|---|---|---|---|

FIG. 5

$T_{dsym}$    Data symbol time

| Pulse burst time | Guard interval | Guard interval | Pulse burst time | Guard interval | Guard interval |

32 pulses with an interval of two pieces of chip time between every two pulses

64 pieces of chip time

32 pulses with an interval of two pieces of chip time between every two pulses

64 pieces of chip time

FIG. 6a

FIG. 6b

FIG. 6c

FIG. 6d

FIG. 6e

FIG. 7

```
┌─────────────────┐                            ┌─────────────────┐
│     First       │                            │    Second       │
│ communication   │                            │ communication   │
│   apparatus     │                            │   apparatus     │
└────────┬────────┘                            └────────┬────────┘
         │                                              │
┌────────┴──────────────────────────────┐              │
│ S201: Generate a PPDU, where the PPDU  │              │
│ includes a PHR field and a PHY payload │              │
│ field, the PHR field includes first    │              │
│ PHR information, and the first PHR     │              │
│ information indicates a data rate of   │              │
│ the PHY payload field and whether the  │              │
│ PHY payload field is encoded by using  │              │
│ a first coding scheme                  │              │
└────────┬───────────────────────────────┘             │
         │                                              │
┌────────┴──────────────────────────────┐              │
│ S202: Send a codeword obtained by      │              │
│ encoding the first PHR information,    │              │
│ where the codeword is determined based │              │
│ on a codeword that is in a codebook    │              │
│ and that is mapped to a value of the   │              │
│ first PHR information                  │              │
└──────────────────────────────────────►│              │
         │                                              │
         │              ┌───────────────────────────────┴───┐
         │              │ S203: Receive the codeword         │
         │              └───────────────────────────────┬───┘
         │                                              │
         │              ┌───────────────────────────────┴───────────┐
         │              │ S204: Decode the codeword to obtain the     │
         │              │ first PHR information, where the first PHR   │
         │              │ information indicates the data rate of the   │
         │              │ PHY payload field and whether the PHY        │
         │              │ payload field is encoded by using the first  │
         │              │ coding scheme                               │
         │              └───────────────────────────────┬───────────┘
         │                                              │
```

FIG. 8

Packet
error rate
Packet
error rate

- - - - BCC
——*—— length-20 mapping
——◁—— length-22 mapping
——▷—— length-24 mapping
——◯—— length-26 mapping
——⊛—— length-28 mapping
——△—— length-30 mapping

Signal-to-noise ratio (decibel)
SNR(dB)

FIG. 9

Transceiver unit                    10

Processing unit                     20

Communication apparatus

FIG. 10

Communication apparatus

1001

Processor

Instruction

1003

Memory

Instruction

Transceiver

1002

Control circuit

Antenna

FIG. 11

Chip

Logic circuit

901

Interface

902

FIG. 12

## INTERNATIONAL SEARCH REPORT

| | International application No. |
|---|---|
| | **PCT/CN2023/134947** |

### A. CLASSIFICATION OF SUBJECT MATTER

H04B1/7163(2011.01)i

According to International Patent Classification (IPC) or to both national classification and IPC

### B. FIELDS SEARCHED

Minimum documentation searched (classification system followed by classification symbols)

IPC:H04B,H04W,H04L

Documentation searched other than minimum documentation to the extent that such documents are included in the fields searched

Electronic data base consulted during the international search (name of data base and, where practicable, search terms used)

CNTXT, ENTXT, DWPI, IEEE: 无线个人局域网, 超宽带, 物理层协议数据单元, 物理层, 报头, 包头, 头部, 载荷, 速率, 长度, LDPC, WPAN, PPDU, PHR, payload, PHY header, physical layer header, data rate, LDPC, PHR1, PHR2

### C. DOCUMENTS CONSIDERED TO BE RELEVANT

| Category* | Citation of document, with indication, where appropriate, of the relevant passages | Relevant to claim No. |
|---|---|---|
| X | VERSO Billy et al. "An updated PHY Header Proposal" *15-22-0653-00-04ab,Project: IEEE P802.15 Working Group for Wireless Personal Area Networks (WPANs)*, 17 November 2022 (2022-11-17), pages 2-10 | 12, 13, 26, 27, 30-42 |
| A | CN 113206723 A (APPLE INC.) 03 August 2021 (2021-08-03) entire document | 1-42 |
| A | CN 114080005 A (HUAWEI TECHNOLOGIES CO., LTD.) 22 February 2022 (2022-02-22) entire document | 1-42 |
| A | US 2022376853 A1 (INSTITUTO DE PESQUISAS ELDORADO) 24 November 2022 (2022-11-24) entire document | 1-42 |
| A | VERSO Billy et al. "A PHY Header Proposal" *15-22-0467-01-04ab,Project: IEEE P802.15 Working Group for Wireless Personal Area Networks (WPANs)*, 12 September 2022 (2022-09-12), entire document | 1-42 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 February 2024** | **07 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/134947**

| Patent document cited in search report | | | Publication date (day/month/year) | Patent family member(s) | | | Publication date (day/month/year) |
|---|---|---|---|---|---|---|---|
| CN | 113206723 | A | 03 August 2021 | US | 2021242901 | A1 | 05 August 2021 |
| | | | | DE | 102021102288 | A1 | 05 August 2021 |
| | | | | US | 2022131568 | A1 | 28 April 2022 |
| CN | 114080005 | A | 22 February 2022 | CA | 3192614 | A1 | 24 February 2022 |
| | | | | WO | 2022037657 | A1 | 24 February 2022 |
| | | | | AU | 2021329841 | A1 | 30 March 2023 |
| | | | | KR | 20230053676 | A | 21 April 2023 |
| | | | | BR | 112023003094 | A2 | 23 May 2023 |
| | | | | EP | 4195779 | A1 | 14 June 2023 |
| | | | | VN | 95929 | A | 26 June 2023 |
| | | | | CN | 116347566 | A | 27 June 2023 |
| | | | | US | 2023209539 | A1 | 29 June 2023 |
| | | | | JP | 2023538642 | A | 08 September 2023 |
| US | 2022376853 | A1 | 24 November 2022 | None | | | |

Form PCT/ISA/210 (patent family annex) (July 2022)

**REFERENCES CITED IN THE DESCRIPTION**

**Patent documents cited in the description**

- CN 202211510684
- CN 202211550893
- CN 202310093052